(19) Europäisches Patentamt / European Patent Office / Office européen des brevets

(11) **EP 4 349 790 A2**

(12) **EUROPEAN PATENT APPLICATION**

(43) Date of publication:
**10.04.2024 Bulletin 2024/15**

(21) Application number: **23196803.3**

(22) Date of filing: **12.09.2023**

(51) International Patent Classification (IPC):
**C01G 53/00** (2006.01)  **H01M 4/505** (2010.01)
**H01M 4/525** (2010.01)

(52) Cooperative Patent Classification (CPC):
**C01G 53/50; H01M 4/505; H01M 4/525;**
C01G 53/42; C01P 2002/74; C01P 2004/03;
C01P 2004/04; C01P 2006/40

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.09.2022 KR 20220114973**
**28.02.2023 KR 20230027170**

(71) Applicant: **Battery Solution**
**Seoul 04763 (KR)**

(72) Inventor: **PARK, Jang-Uk**
**21404 Incheon (KR)**

(74) Representative: **Prüfer & Partner mbB**
**Patentanwälte · Rechtsanwälte**
**Sohnckestraße 12**
**81479 München (DE)**

(54) **POSITIVE ELECTRODE ACTIVE MATERIAL FOR LITHIUM SECONDARY BATTERY, METHOD OF PREPARING SAME, AND LITHIUM SECONDARY BATTERY INCLUDING SAME**

(57) The present invention discloses a positive electrode active material for a lithium secondary battery, the positive electrode active material including a secondary particle composed of an aggregate of a plurality of primary particles, in which the primary particle includes a nanocomposite structure in which rocksalt (*Fm3m*) structures and layered (*R-3m*) structures coexist as a physical mixture.

[FIG. 1]

EP 4 349 790 A2

**Description**

**CROSS-REFERENCE TO RELATED APPLICATIONS**

This application claims priority to and the benefit of Korean Patent Application Nos. 10-2022-0114973 and 10-2023-0027170 filed in the Korean Intellectual Property Office on September 13, 2022 and February 28, 2023, the entire contents of which are incorporated herein by reference.

**TECHNICAL FIELD**

The present invention relates to a positive electrode active material for a lithium secondary battery, and more particularly to a positive electrode positive electrode active material for a lithium secondary battery having improved electrochemical properties by controlling a microstructure of a particle, a method of preparing the same, and a lithium secondary battery including the same.

**BACKGROUND ART**

In recent years, sales of eco-friendly vehicles, including electric vehicles, have been increasing rapidly due to carbon neutrality policies in various countries. This has led to a growing demand for eco-friendly vehicles and related components in markets around the world. Secondary batteries are playing a key role in the global trend toward being eco-friendly and carbon neutrality. Secondary batteries are categorized into small batteries used in mobile IT devices and medium and large batteries used in electric vehicles and large-capacity electric storage devices, and the market has recently been growing centered on electric vehicles.

A positive electrode material, a negative electrode material, an electrolyte, and a separation membrane, which are the four materials that make up a secondary battery account for the majority of the total material cost, and the positive electrode material among them is a large part in determining the capacity and cost of a secondary battery. Further, the amount of energy a secondary battery can store is equal to the capacity of the secondary battery multiplied by the voltage, and the positive electrode material is the key to determine the capacity and voltage that will determine the performance of the secondary battery.

Therefore, the direction of technology development of the positive electrode materials is to improve the energy density and low cost of secondary batteries, and various studies are being conducted for this purpose.

(Prior Art Patent) Korean Patent No. 10-1122715 (February 24, 2012)

**SUMMARY OF THE INVENTION**

One aspect of the present invention is to provide a positive electrode active material for a lithium secondary battery with improved structural stability of particles, a method of preparing the same, and a lithium secondary battery including the same.

Another aspect of the present invention is to provide a positive electrode active material for a lithium secondary battery that exhibits high capacity characteristics with little structural collapse even after multiple times of cycles, a method of preparing the same, and a lithium secondary battery including the same.

Embodiments of the present invention include a positive electrode active material and a secondary battery including the same.

An exemplary embodiment of the present invention provides a positive electrode active material for a lithium secondary battery, the positive electrode active material including a secondary particle composed of an aggregate of a plurality of primary particles, in which the primary particle includes a nanocomposite structure in which rocksalt ($Fm3m$) structures and layered ($R$-$3m$) structures coexist as a physical mixture.

In the exemplary embodiment, the primary particle includes a rocksalt region including a rocksalt structure, and a maximum length among perpendicular lines that pass through a center of a cross-section of the rocksalt region is from 1 nm to 100 nm, and a cross-sectional area of the rocksalt region is from 1 $nm^2$ to 10,000 $nm^2$.

In the exemplary embodiment, the primary particle includes a rocksalt region including a rocksalt structure, and a maximum length among perpendicular lines that pass through the center of the cross-section of the rocksalt region is from 1 nm to 50 nm, and a cross-sectional area of the rocksalt region is from 1 $nm^2$ to 2,500 $nm^2$.

In the exemplary embodiment, the nanocomposite structure may be provided in the interior or the exterior of the primary particle, and in the interior or exterior of the secondary particle.

In the exemplary embodiment, for the diffraction peak intensities of (0-14), (0-11), (006), and (003) reflections obtained from SAED electron diffraction images during TEM analysis, $I_{(0-14)} > I_{(0-11)}$, and $I_{(006)} > I_{(003)}$.

In the exemplary embodiment, the primary particle may include nickel (Ni), M1 and M2, in which the M1 may include at least one of manganese (Mn), cobalt (Co), and aluminum (Al), the nickel (Ni) may be 50 mol% or greater, and the M2 may be a doping element, and may have a content in a range of 0.05 mol% to 3 mol%.

The M2 may include two or more of titanium (Ti), magnesium (Mg), tantalum (Ta), niobium (Nb), tungsten (W), molybdenum (Mo), antimony (Sb), tellurium (Te), tin (Sn), ruthenium (Ru), boron (B), hafnium (Hf), gallium (Ga), germanium (Ge), chromium (Cr), vanadium (V), and zirconium (Zr).

In the exemplary embodiment, particle strength (MPa) of the secondary particle may be 60 to 500 MPa, the secondary particle may be subject to a plastic deformation before the secondary particle is fractured upon compression, and in the plastic deformation of the secondary particle, a length of the secondary particle may be reduced according to a particle compression strain represented by following Equation 1 with respect to an average diameter of the secondary particle in a direction of pressing the secondary particle.

In the exemplary embodiment, the particle compression strain may be reduced by 2% to 30% with respect to the average diameter of the secondary particle.

(Equation 1)

Particle compression strain (%) = (Secondary particle deformation length / secondary particle diameter) * 100

In Equation 1, the secondary particle deformation length is the degree the secondary particle is compressed before the secondary particle is fractured, and the secondary particle diameter is the average diameter of the cross-section through a core portion of the secondary particle.

In the exemplary embodiment, a Full Width at Half-Maximum (FWHM) of a peak for (003) reflection obtained by X-ray diffraction analysis using Cu-kα rays may be equal to or less than 0.15° in 1 cycle and is equal to or less than 0.2° in 500 cycles, after 500 cycles of charging to 4.3 V at a constant current of 0.5C and discharging to 2.7 V at a constant current of 0.5 C.

Another exemplary embodiment of the present invention provides a positive electrode active material for a lithium secondary battery, the positive electrode active material including a secondary particle composed of an aggregate of a plurality of primary particles, in which a number density of the primary particles, which is the number of primary particles per unit area, in a surface portion of the secondary particle is 3 ea/$\mu$m$^2$ to 50 ea/$\mu$m$^2$, and the surface portion of the secondary particle is within 15% of an average diameter of the secondary particle in a direction toward a core of the secondary particle from an outermost surface of the secondary particle.

In the exemplary embodiment, in the positive electrode active material, the number density of the primary particles, which is the number of primary particles per unit area, in the surface portion of the secondary particle may be 3 ea/$\mu$m$^2$ to 50 ea/$\mu$m$^2$ after 100 cycles of charging to 4.3 V at a constant current of 0.5 C and discharging to 2.7 V at a constant current of 0.5 C.

In the exemplary embodiment, in the positive electrode active material, a ratio of a number density after 500 cycles to a number density after 1 cycle of charging to 4.3 V at a constant current of 0.5 C and discharging to 2.7 V at a constant current of 0.5 C may be 85% to 100%.

In the exemplary embodiment, in the primary particle, a hydraulic radius of the primary particle expressed by following Equation 2 may be 0.01 $\mu$m to 0.1 $\mu$m.

(Equation 2)

Hydraulic radius of primary particle ($\mu$m) = Area of cross-section of primary particle ($\mu$m$^2$) / Length of circumference of cross-section of primary particle ($\mu$m)

Still another exemplary embodiment of the present invention provides a lithium secondary battery including: a positive electrode including the foregoing positive electrode active material; lithium salt; a non-aqueous organic solvent; and a negative electrode.

Still another exemplary embodiment of the present invention provides an all-solid-state battery including: positive electrode including the foregoing positive electrode active material; a solid electrolyte; and a negative electrode.

Still another exemplary embodiment of the present invention provides a lithium metal battery including: positive electrode including the positive electrode active material; a lithium metal negative electrode; and an electrolyte provided between the positive electrode and the lithium metal negative electrode.

According to the present invention as described above, it is possible to provide a positive electrode active material for a lithium secondary battery that may maintain a high capacity even after performing a plurality of cycles, which is applicable to devices of various capacities, such as small devices, electric vehicles, and ESSs, and exhibits excellent characteristics, a method of preparing the same, and a lithium secondary battery including the same.

In addition, the present invention provides a positive electrode active material for a lithium secondary battery having excellent long-term reliability and electrochemical properties, a method of preparing the same, and a lithium secondary battery including the same.

## BRIEF DESCRIPTION OF THE DRAWINGS

FIG. 1 is a schematic diagram related to the number of primary particles per unit area according to an exemplary embodiment of the present invention.

FIG. 2 is a diagram illustrating a comparison between a typical positive electrode active material and a positive electrode active material according to the present invention.

FIG. 3 is a diagram illustrating a method of measuring the number density of primary particles in a core portion of the positive electrode active material according to the exemplary embodiment of the present invention.

FIG. 4 is a diagram illustrating a method of measuring the number density of primary particles in a surface portion of the positive electrode active material according to the exemplary embodiment of the present invention.

FIG. 5 is an SEM image of the positive electrode active materials of Preparation Example 1 to Preparation Example 4.

FIG. 6 is a graph confirming the particle strength of the positive electrode active materials of Preparation Example 1 to Preparation Example 4.

FIG. 7 is an SEM image of the positive electrode active materials of Preparation Example 1 to Preparation Example 4 after 100 cycles.

FIG. 8 is a graph showing the XRD difference after 100 cycles of the positive electrode active materials of Preparation Example 1 to Preparation Example 4.

FIG. 9 illustrates nanocomposite structures in a layered structure, in a rocksalt structure, and in a mixture of a rocksalt structure and a layered structure using an SAED pattern, respectively.

FIG. 10 is a TEM image of Preparation Example 4, and illustrates the result of observing the surface of the primary particle present in the surface of the secondary particle.

FIG. 11 is a TEM image of Preparation Example 4, and illustrates the result of observing the interior of the primary particle present in the surface of the secondary particle.

FIG. 12 is a TEM image of Preparation Example 4, and illustrates the result of observing the surface of the primary particle present in the interior of the secondary particle.

FIG. 13 is a TEM image of Preparation Example 4, and illustrates the result of observing the interior of the primary particle present in the interior of the secondary particle.

FIG. 14 is a TEM image of Preparation Example 1, and illustrates a result of the strength ratio of the crystal planes using SAED.

FIG. 15 is a TEM image of Preparation Example 4, and illustrates a result of the strength ratio of the crystal planes using SAED.

FIG. 16 is an SEM image of the positive electrode active materials of Preparation Example 5 to Preparation Example 9.

FIG. 17 is a TEM image of Preparation Example 9, and illustrates the result of observing the surface of the primary particle present in the surface of the secondary particle.

FIG. 18 is a TEM image of Preparation Example 9, and illustrates the result of observing the surface of the primary particle present in the interior of the secondary particle.

FIG. 19 is an SEM image of the positive electrode active materials of Preparation Example 10 to Preparation Example 12.

FIG. 20 is an SEM image of the positive electrode active materials of Preparation Example 10 to Preparation Example 12 after 100 cycles.

FIG. 21 is a TEM image of Preparation Example 12, and illustrates the result of observing the interior of the primary particle present in the surface of the secondary particle.

FIG. 22 is a TEM image of Preparation Example 12, and illustrates the result of observing the surface of the primary particle present in the surface of the secondary particle.

FIG. 23 is a TEM image of Preparation Example 12, and illustrates the result of observing the interior of the primary particle present in the interior of the secondary particle.

FIG. 24 is a TEM image of Preparation Example 12 after 100 charge-discharge cycles, and illustrates the result of observing the gap between the surface and the center of the primary particle present in the surface of the secondary particle.

FIG. 25 is an SEM image of the positive electrode active materials of Preparation Example 13 to Preparation Example 16.

FIG. 26 is a TEM image of Preparation Example 16, and illustrates the result of observing the interior of the primary particle present in the surface of the secondary particle.

FIG. 27 is a TEM image of Preparation Example 16, and illustrates the result of observing the surface of the primary particle present in the surface of the secondary particle.

FIG. 28 is a TEM image of Preparation Example 16, and illustrates the result of observing the interior of the primary particle present in the interior of the secondary particle.

FIG. 29 is a TEM image of Preparation Example 13, and illustrates the strength ratio of the crystal planes using SAED.

FIG. 30 is a TEM image of Preparation Example 16, and illustrates a result of the strength ratio of the crystal planes using SAED.

FIG. 31 is an SEM image of the positive electrode active materials of Preparation Example 17 and Preparation Example 18.

FIG. 32 is an SEM image of the positive electrode active materials of Preparation Example 19 to Preparation Example 21.

FIG. 33 is a TEM image of Preparation Example 21, and illustrates the result of observing the surface of the primary particle present in the surface of the secondary particle.

FIG. 34 is a TEM image of Preparation Example 21, and illustrates the result of observing the surface of the primary particle present in the interior of the secondary particle.

FIG. 35 is a TEM image of Preparation Example 19, and illustrates a result of the strength ratio of the crystal planes using SAED.

FIG. 36 is a TEM image of Preparation Example 21, and illustrates a result of the strength ratio of the crystal planes using SAED.

FIG. 37 is an SEM image of the positive electrode active materials of Preparation Example 22 to Preparation Example 24.

FIG. 38 is a graph of the identification of particle strength of the positive electrode active materials of Preparation Example 22 to Preparation Example24.

FIG. 39 is an SEM image of the positive electrode active materials of Preparation Example 22 to Preparation Example 24 after 100 cycles.

FIG. 40 is a TEM image of Preparation Example 24, and illustrates the result of observing the interior of the primary particle present in the interior of the secondary particle.

FIG. 41 is a TEM image of Preparation Example 22, and illustrates a result of the strength ratio of the crystal planes using SAED.

FIG. 42 is a TEM image of Preparation Example 24, and illustrates a result of the strength ratio of the crystal planes using SAED.

FIG. 43 is an SEM image of the positive electrode active materials of Preparation Example 25 to Preparation Example 27.

FIG. 44 is an SEM image of the positive electrode active material of Preparation Example 25, Preparation Example 28, and Preparation Example 29.

FIG. 45 is an SEM image of the positive electrode active materials of Preparation Example 25 and Preparation Example 26.

## DETAILED DESCRIPTION

The specific details of other exemplary embodiments are contained in the detailed description and drawings.

Advantages and characteristics of the present disclosure, and a method to achieve the same will become apparent with reference to the exemplary embodiments described below in detail in conjunction with the accompanying drawings. However, the present disclosure is not limited to the exemplary embodiments disclosed below and may be implemented in a variety of different forms. Unless otherwise specified in following descriptions, all of numbers, values, and/or expressions indicating ingredients, reaction conditions, and contents of ingredients in the present disclosure are, in essence, approximations thereof based on various uncertainties in measurements which occur in obtaining the numbers, values, and/or expressions. Thus, the numbers, values, and/or expressions should be understood as being modified by a term "about" in all instances. Further, where a numerical range is disclosed in the present description, the range is continuous and includes a minimum value and a maximum value of the range, unless otherwise indicated. Further, where the number or the value refers to an integer, the range includes all of integers contained between the minimum and the maximum of the range, unless otherwise indicated.

Further, in the present disclosure, when a variable is contained in a range, the variable will be understood to include all values within a stated range including stated endpoints of the range. For Preparation Example, a range of "5 to 10" includes values of 5, 6, 7, 8, 9, and 10, as well as any subranges such as 6 to 10, 7 to 10, 6 to 9, 7 to 9, and the like. It will be understood that the variable includes any value between valid integers in a stated range such as 5.5, 6.5, 7.5, 5.5 to 8.5, and 6.5 to 9, and the like. For Preparation Example, a range "10% to 30%" includes all of integer values, such as 10%, 11%, 12%, 13%, and 30%, as well as any subranges such as 10% to 15%, 12% to 18%, or 20% to 30%, and the like, and it will be understood that the range includes any value between valid integers within the stated range such as 10.5%, 15.5%, 25.5%, and the like.

In one exemplary embodiment, a size and a particle diameter of each of various particles such as a primary particle, a secondary particle, and the like may be represented as an average value of measurements from a measurement method thereof. However, the present disclosure may be limited thereto. Conventionally, a mode diameter expressing the maximum value of the distribution, a median diameter corresponding to a median value of the integral distribution curve, and various average diameters (number average, length average, area average, mass average, volume average, and the like) may be employed. In the present disclosure, unless otherwise specified, the average size and the average particle diameter may refer to a number average size and diameter, and D50 (a particle diameter at a point where the distribution ratio is 50%) may be measured.

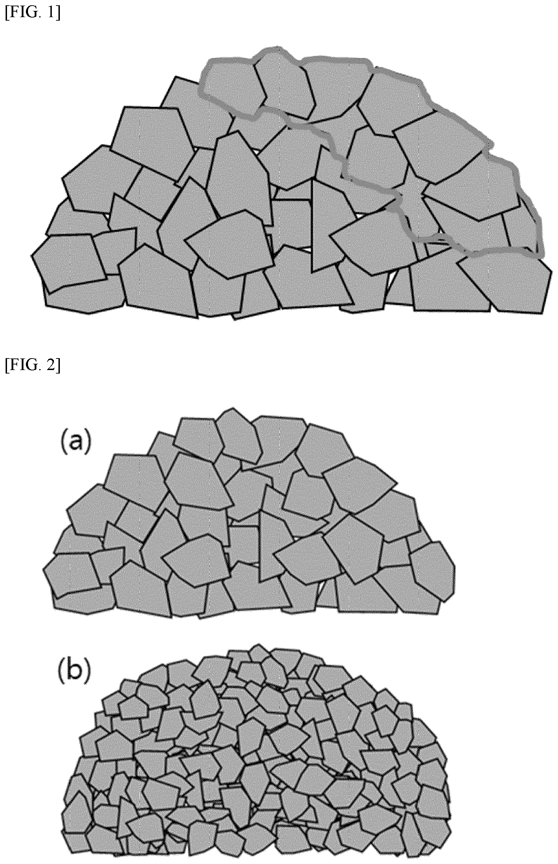

FIG. 1 is a schematic diagram related to the number of primary particles per unit area according to an exemplary embodiment of the present invention. FIG. 2 is a diagram illustrating a comparison between a typical positive electrode active material and a positive electrode active material according to the present invention.

The primary particle may include a nanostructure having a mixture of rocksalt structure and layered structure. Furthermore, the positive electrode active material according to the present invention is not in the form of lithium rich and may be represented by the following chemical formula, in which the content of lithium is approximately 1.0 mol to 1.5 mol relative to the content of the transition metal.

[Chemical Formula]   $Li_aNi_{1-x}M1_xM2_wO_2$

(1.0≤a≤1.5, 0≤x≤0.5, 0≤w≤0.03, M1 is at least one metal of Co, Mn, and Al, and M2 is an element composed of any one or more of titanium (Ti), magnesium (Mg), tantalum (Ta), niobium (Nb), tungsten (W), molybdenum (Mo), antimony (Sb), tellurium (Te), tin (Sn), ruthenium (Ru), boron (B), hafnium (Hf), gallium (Ga), germanium (Ge), chromium (Cr), vanadium (V), and zirconium (Zr))

For the diffraction peak intensities of (0-14), (0-11), (006), and (003) reflections obtained from SAED electron diffraction images during TEM analysis, $I_{(0-14)} > I_{(0-11)}$, and $I_{(006)} > I_{(003)}$.

In the positive electrode active material according to the exemplary embodiment of the present invention, the primary particle includes a rocksalt region including a rocksalt structure, and a maximum length among perpendicular lines that pass through the center of the cross-section of the rocksalt region may be from 1 nm to 100 nm, and a cross-sectional area of the rocksalt region may be from 1 $nm^2$ to 10,000 $nm^2$. Specifically, a maximum length among perpendicular lines that pass through the center of the cross-section of the rocksalt region may be from 1 nm to 50 nm, and the cross-sectional area of the rocksalt region may be from 1 $nm^2$ to 2,500 $nm^2$.

The nanocomposite structure may be provided in the interior or the exterior of the primary particle, and in the interior or exterior of the secondary particle. Specifically, the positive electrode active material according to the present exemplary embodiment includes a nanocomposite structure including a mixture of a rocksalt structure and a layered structure, and the nanocomposite structure does not differentiate between the surface portion or the core portion of the secondary particle and the primary particle, and may be found on both the surface and the interior of the secondary particle, and on the surface and the interior of the primary particles.

Typically, in the positive electrode active material, the rocksalt crystal structure is found only in the surface portion of the secondary particle and the surface portion of the primary particles. This is because due to oxygen loss in the secondary particle or the primary particle, a rocksalt crystal structure may develop in the surface of the secondary particle or the primary particle in the as-prepared state. In addition, this is because especially the rocksalt crystal structure is generated on the surface due to the degradation phenomenon of the positive electrode active material occurring in the surface of the secondary particle or the primary particle after performing multiple cycles.

Referring to FIG. 1, the number density of primary particles, which is the number of primary particles per unit area, in the surface portion of the secondary particle in the positive electrode active material may be determined according to the following Equation.

(Equation)

Number density $[ea/\mu m^2]$ = Number of primary particles / area of region

where the number of primary particles is measured

The number density of the primary particles is calculated using the image of the particle obtained by SEM analysis, and using the polygonal selection of the ImageJ program. In this case, the number density may be measured by compartmentalizing a portion to be measured, for example, the surface portion of the secondary particle, along the grain boundary, and dividing the number of primary particles included in the compartmentalized portion by the area of the region.

Specifically, the number density of the primary particles may be obtained by obtaining images of 10 or more cross-sections of the secondary particle, and then calculating an average value by compartmentalizing the 10 or more cross-section images into 10 or more regions. Further, the number density of the primary particles may be determined by measuring the region of a portion of the surface portion of the secondary particle that is within 15% of the average diameter of the secondary particle in a direction from the outermost surface of the secondary particle toward the center of the secondary particle.

For Preparation Example, the number density may be the number of primary particles per unit area of the primary particles distributed in a region within 0 to 1.5 $\mu$m from the outermost surface of the secondary particle when the average diameter of the secondary particle is 10 $\mu$m, or in a region within 0 to 2.1 $\mu$m from the outermost surface of the secondary particle when the average diameter of the secondary particle is 14 $\mu$m.

The positive electrode active material for the lithium secondary battery according to the present exemplary embodiment includes a secondary particle composed of a group of multiple primary particles, and the primary particles may have a number density of 3 ea/$\mu$m$^2$ to 50 ea/$\mu$m$^2$, that is the number density per unit area in a surface portion of the secondary particle. Furthermore, the number density may be determined by measuring the region of the surface portion of the secondary particle that is within 15% of the average diameter of the secondary particle in a direction from the outermost surface of the secondary particle toward the center of the secondary particle.

In the positive electrode active material, the primary particles may be provided in the surface portion of the secondary particle at 3 ea/$\mu$m$^2$ to 50 ea/$\mu$m$^2$ per unit area after 500 cycles of charging to 4.3 V at a constant current of 0.5 C and discharging to 2.7 V at a constant current of 0.5 C.

In the positive electrode active material, the ratio of the number density after 500 cycles to the number density after 1 cycle of charging to 4.3 V at a constant current of 0.5 C and discharging to 2.7 V at a constant current of 0.5 C may be 85% to 100%.

The hydraulic radius of the primary particle expressed in the following equation in the primary particles may be 0.01 $\mu$m to 0.1 $\mu$m.

(Equation)

$$\text{Hydraulic radius of primary particles } (\mu m) = \text{Area of primary particle's cross-section } (\mu m^2) / \text{Length of circumference of primary particle's cross-section } (\mu m)$$

The positive electrode active material undergoes a reversible expansion and contraction of the primary particles volume during the charge and discharge cycle. In the process, some irreversible reactions occur, resulting in some structural collapse of the primary particles, which leads to volume expansion. Thus, over the course of the cycle, the number density of primary particles decreases and irreversible capacity increases.

On the other hand, the positive electrode active material according to the present exemplary embodiment is structurally stabilized, and thus irreversible reactions are reduced during the process of performing the cycle. Therefore, even after the cycle is performed, the volume expansion of the primary particles does not almost occur, and the number density of the primary particles may be roughly similar to that of 1 cycle without much change.

In FIG. 2, (a) is a conventional positive electrode active material, and (b) is the positive electrode active material having an increased number density of the primary particles according to the present invention.

Referring to FIG. 2, the positive electrode active material according to the present exemplary embodiment may have the number density of the primary particle maintained even after the cycle as described above, and at the same time, may have a different shape and alignment form of each primary particle at the center point and in the surface portion of the secondary particle.

In the positive electrode active material, the primary particles provided in the surface portion of the secondary particle is a part that is provided at a position farthest from the center point of the secondary particle and is in contact with the electrolyte at the same time. In the positive electrode active material according to the present exemplary embodiment, it is possible to control the number density of the primary particle provided in the surface portion of the secondary particle to a predetermined number or more. Thus, in the process of performing a plurality of cycles, the positive electrode active material may reduce the overall volume expansion of the secondary particle and reduce the microcracks through which electrolyte may enter, thereby improving the electrochemical efficiency of the secondary battery.

In the positive electrode active material, the Full Width at Half-Maximum (FWHM) of the peak for (003) reflection obtained by X-ray diffraction analysis using Cu-kα rays may be equal to or less than 0.15° in 1 cycle and equal to or less than 0.2° in 500 cycles after 500 cycles of charging to 4.3 V at a constant current of 0.5C and discharging to 2.7 V at a constant current of 0.5 C.

The FWHM means a width at a point 1/2 the intensity height of the peak corresponding to (003) reflection. The smaller the FWHM, the smaller the size of the crystals, and the positive electrode active material according to the present exemplary embodiment has a constant value of the FWHM with little change even after performing a plurality of cycles, and this means that the crystal structure and the number density of the nanocomposite structure in which the rocksalt structures and the layered structures of the primary particle coexist are maintained without change.

In the positive electrode active material, an strength ratio ($I_{(003)}/I_{(104)}$) of a first intensity ($I_{(003)}$) of a peak corresponding to the (003) crystal plane and a second intensity ($I_{(104)}$) to a peak corresponding to the (104) crystal plane obtained by X-ray diffraction analysis using Cu-kα rays may be equal to or less than 3 at 1 cycle and equal to or less than 2.5 at 500 cycles after performing 500 cycles of charging to 4.3 V at a constant current of 5 C and discharging to 2.7 V at a constant current of 0.5 C.

In the strength ratio, $I_{(003)}$ means the intensity of the peak corresponding to the (003)reflection, and $I_{(104)}$ means the intensity of the peak corresponding to the (104)reflection. The peak corresponding to the (003) reflection provides information about the layered structure of the positive electrode active material, and the ratio of the intensity of the peak of the (003) reflection/the intensity of the peak of the (104) reflection provides information about the layered and cubic rock-salt structure. The larger the strength ratio ($I_{(003)}/I_{(104)}$), the lower the positive ion mixing ratio, allowing for higher capacity.

Also, the strength ratio ($I_{(003)}/I_{(104)}$) indicates the crystallinity of the positive electrode active material, and the higher the numerical value, the better the crystallinity. Therefore, the crystallinity is high at the beginning of the cycle and gradually decreases as the cycle progresses, and the positive electrode active material composed of the nanocomposite structure in which rocksalt (*Fm3m*) structures and layered (*R-3m*) structures coexist as a physical mixture and having high number density efficiently maintains the crystallinity even after multiple cycles.

The primary particle may include nickel (Ni), M1 and M2, in which the M1 may include at least one of manganese (Mn), cobalt (Co), and aluminum (Al), the nickel (Ni) may be 50 mol% or greater, and the M2 may be a doping element, and may have a content in a range of 0.05 mol% to 3 mol%.

The M2 may be one or more of titanium (Ti), magnesium (Mg), tantalum (Ta), niobium (Nb), tungsten (W), molybdenum (Mo), antimony (Sb), tellurium (Te), tin (Sn), ruthenium (Ru), boron (B), hafnium (Hf), gallium (Ga), germanium (Ge), chromium (Cr), vanadium (V), and zirconium (Zr)). Alternatively, the M2 is a doping element, and may include two or more of the positive electrode active materials.

Particle strength (MPa) of the secondary particle is 60 to 500 MPa, and a particle compression strain represented by the following equation decreases by 2% to 30% with respect to the average diameter of the secondary particle.

(Equation 1)

$$\text{Particle compression strain } (\%) = (\text{Secondary particle deformation length } / \text{ secondary particle diameter}) * 100$$

In Equation 1, the secondary particle deformation length is the amount the secondary particle is compressed before the secondary particle is fractured, and the secondary particle diameter is the average diameter of the cross-section through the core portion of the secondary particle. In particular, in Equation 1, the secondary particle diameter is the average diameter of the cross-section through the core portion of the secondary particle before the secondary particle is rolled.

Further, the secondary particle may undergo a plastic deformation of the secondary particle before the secondary particle is fractured upon compression, and in the plastic deformation of the secondary particle, the length of the secondary particle may decrease according to the particle compression strain with respect to the average diameter of the secondary particle in the direction of pressing the secondary particle. Further, in the plastic deformation of the secondary particle, the length of the secondary particle may be reduced by 2% to 30% with respect to the average diameter of the secondary particle in the direction of pressing the secondary particle.

For Preparation Example, the particle may be fractured after undergoing the plastic deformation in which the form of the secondary particle is deformed in the process of pressing the particle. Specifically, in the plastic deformation of the secondary particle, the degree of deformation of the secondary particle may be represented by the amount of change in the length of the secondary particle.

The length of the secondary particle increases in the process of pressing the secondary particle and then the secondary particle is fractured when the secondary particle cannot relieve the stress imposed by the pressing, and the strength in this case is called particle strength.

As in the present exemplary embodiment, in the case of the secondary particle having a high number density, the length of the secondary particle in the plastic deformation of the secondary particle that is before the secondary particle is fractured may be reduced by 2% to 30% with respect to the average diameter of the secondary particle in the direction of pressing the secondary particle and exhibit excellent fracture toughness. Herein, the length of the secondary particle may represent the average diameter of the secondary particle.

The positive electrode active material according to the present exemplary embodiment may be configured to have high particle strength and high fracture toughness.

The particle strength and the particle compression strain were measured for the positive electrode active material by using equipment (micro particle compression test, MCT-510, Shimadzu) equipped with an optical microscope and a pressure rod for compression. Specifically, the particle strength was measured by randomly selecting 15 positive electrode active material particles and averaged after removing the maximum value, the minimum value, and noise.

The positive electrode active material may include a region zone in which an H2-H3 phase transition is performed upon charging, and the voltage of the H2-H3 phase transition area band may be formed from 4.12 V to 4.8 V. In the positive electrode active material, after 500 cycles of charging to 4.3 V at a constant current of 0.5 C and discharging to 2.7 V at a constant current of 0.5 C, the area of the peak of the H2-H3 phase transition zone at 500 cycles may be from 50% to 96% with respect to 1 cycle.

The H2-H3 phase transition may be identified by the peak width of the H2-H3 phase transition by analyzing the dQ/dV curve obtained during charge and discharge. In the H2-H3 phase transition, which dominates the long-life characteristics of the dQ/dV curve, an increase in peak width means a relaxation of the stress within the particle caused by the anisotropic volume change.

In a lithium secondary battery employing the positive electrode active material, after 500 cycles of charging to 4.3 V at a constant current of 0.5 C and discharging to 2.7 V at a constant current of 0.5 C, the areal fraction of microcrack in the state charged to 4.3 V may be 20% or less for the total area.

The areal fraction of microcrack may be a ratio of the cross-section of the gap between the primary particles, the gap being connected from the outermost surface of the secondary particle to the interior, to the total area of the cross-section through the center of the secondary particle.

Specifically, the microcrack means an open path extending to the outermost surface of the secondary particle among the spaced paths between the primary particles configuring the secondary particle. In the secondary particle with multiple open paths, electrolyte or the like is introduced through the open path and thus side reactions proceed, and gas is generated by the side reactions, which may accelerate the structural collapse of the secondary particle.

In the lithium secondary battery employing the positive electrode active material, after 500 cycles or 100 cycles of charging to 4.3 V at a constant current of 0.5 C and discharging to 2.7 V at a constant current of 0.5 C, the capacity retention may be 65% or more.

The capacity retention rate (%) may be determined according to the following equation.

$$\text{Capacity retention (\%)} = (\text{Discharge capacity of 500 cycles or 100 cycles} / $$

$$\text{discharge capacity of 1 cycle}) \times 100$$

For the positive electrode active material, after 500 cycles of charging to 4.3 V at a 0.5 C constant current and discharging to 2.7 V at a 0.5 C constant current, and after the positive electrode active material in the state of being charged to 4.3 V at a constant current of 0.5 C rate is impregnated in an electrolyte and maintained for 24 hours at room temperature, the content of transition metal ions dissolved in the electrolyte may be 100 ppm or less at 1 cycle and 300 ppm or less at 500 cycles.

Specifically, the transition metal dissolved in the electrolyte may be any one or more of nickel ions, cobalt ions, and manganese ions.

When transition metal ions are dissolved from the positive electrode active material in the electrolyte, the transition metal ions are precipitated on a negative electrode surface and lithium ions are prevented from being inserted into a negative electrode material or desorbed, thereby increasing the internal resistance. As a result, the capacity retention decreases as the charge/discharge cycle is performed.

On the other hand, the positive electrode active material according to the present exemplary embodiment has a low or almost no content of transition metal ions dissolved in the electrolyte in one cycle or after performing multiple cycles, which may prevent material change of the positive electrode active material and maintain excellent electrochemical properties.

According to another aspect of the present invention, the present invention includes a lithium secondary battery including: a positive electrode including the aforementioned positive electrode active material; a lithium salt; a non-aqueous organic solvent; and a negative electrode.

The lithium salt may be one or more selected from the group consisting of LiCl, LiBr, LiI, LiClO$_4$, LiBF$_4$, LiB$_{10}$Cl$_{10}$, LiPF6, LiCF$_3$SO$_3$, LiCF$_3$CO$_2$, LiAsF$_6$, LiSbF$_6$, LiPF$_6$, LiAlC$_{14}$, CH$_3$SO$_3$Li, CF$_3$SO$_3$Li, (CF$_3$SO$_2$)$_2$NLi, lithium chloroborane, lithium 4-phenyl borate, and imides. The concentration of the lithium salt may be from 0.1 to 3 M in the electrolyte, and particularly from 0.8 to 2 M.

The positive electrode use the aforementioned positive electrode active material as it is, or may be used by coating the positive electrode active material on a positive electrode current collector.

The non-aqueous organic solvent may be one or more selected from the group consisting of a carbonate-based solvent, an ether-based solvent, and a propionate-based solvent.

The non-aqueous organic solvent may include a carbonate-based solvent and an ether-based solvent, and may have a mixing ratio of 3:7 to 7:3 based on the electrolyte volume ratio. The excessively large content of carbonate is undesirable because ion conductivity of the electrolyte may be reduced according to the characteristic of high viscosity of carbonate, and the excessively small content of carbonate is undesirable because the output characteristic of the secondary battery may be degraded.

The carbonate-based solvent may be linear carbonate and/or ring-shaped carbonate, and is not limited as long as the carbonate-based solvent is known in the art, and may be one or more selected from, for example, fluoroethylene ethylene carbonate (FEC), propylene carbonate (PC), ethylene carbonate (EC), butylene carbonate (BC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (nanometer P), and ethyl methyl carbonate (EMC).

The propionate-based solvent is non limited as long as the propionate-based solvent is known in the art, and may be, for example, methyl flopionate and ethyl propionate.

The ether-based solvent may be one or more selected from, for example, tetrahydrofuran, 2-methyltetrahydrofuran, dimethyl ether, and dibutyl ether, and particularly, dimethyl ether.

The non-aqueous organic solvent may further include an additive. The additive may be one or more of lithium bis(oxalato)borate (LiBOB), lithium difluoro(oxalato)borate (LiDFOB), lithium difluorophosphate (LiDFP), vinylene carbonate (VC), 1,3,2-dioxathiolane-2,2-dioxide (DTD), biphenyl (BP), trimethyl phosphate, TMP), tris(2,2,2-trifluoroethyl) phosphate (TFP), hexamethoxy cyclotriphosphazene (HMTP), catechol carbonate (CC), n-butylferrocene, substituted benzene, cyclohexyl benzene, crown ether, and borane.

The negative electrode may be fabricated using carbon-based materials typically used in lithium secondary batteries. Specifically, the negative electrode may include the negative electrode active material layer. For Preparation Example, as the negative electrode active material used in the negative electrode active material layer, for example, carbon, such as non-graphitizable carbon and graphitic carbon; metal composite oxide represented by Li$_x$Fe$_2$O$_3$(0≤x≤1), Li$_x$WO$_2$(0≤x≤1), Sn$_x$Me$_{1-x}$Me'$_y$O$_z$ (Me: Mn, Fe, Pb, Ge; Me': Al, B, P, Si, elements of groups 1, 2 and 3 of the periodic table, and halogens; 0<x≤1; 1<y≤3; 1≤z≤8); lithium metal; lithium alloy; silicon-based alloy; tin-based alloy; metal oxides, such as SnO, SnO$_2$, PbO, PbO$_2$, Pb$_2$O$_3$, Pb$_3$O$_4$, Sb$_2$O$_3$, Sb$_2$O$_4$, Sb$_2$O$_3$, GeO, GeO$_2$, Bi$_2$O$_3$, Bi$_2$O$_4$, and Bi$_2$O$_5$; conductive polymers, such as polyacetylene; and Li-Co-Ni-based materials may be used.

According to another aspect of the present invention, the present invention includes an all-solid-state battery including: a positive electrode including the aforementioned positive electrode active material; a solid electrolyte; and a negative electrode.

In general, in an all-solid-state battery, ion conduction channels are formed by the surface contact of the positive electrode active material and the solid electrolyte, so processes, such as pressurizing to a high pressure, are performed to better contact the positive electrode active material and the solid electrolyte. During this process, the positive electrode active material is fractured or the structure is partially collapsed, resulting in a large number of microcracks and a decrease in electrochemical properties during the charge and discharge cycle.

On the other hand, that the positive electrode active material according to the present exemplary embodiment has high particle strength and a small average primary particle size, so that it is possible to provide high discharge capacity, excellent rate performance, and long life characteristics when the positive electrode active material is applied to a positive electrode of an all-solid-state battery. In addition, it has the effect of preventing or delaying cracking even if the pressure applied during positive electrode manufacturing or the structural stress caused by volume contraction and expansion during life is applied.

The positive electrode use the aforementioned positive electrode active material as it is, or may be used by coating the positive electrode active material on a positive electrode current collector.

The solid electrolyte may be, but is not limited to, an organic solid electrolyte or an inorganic solid electrolyte.

As the organic solid electrolyte, for example, polyethylene derivatives, polyethylene oxide derivatives, polypropylene oxide derivatives, phosphate ester polymers, polyagitation lysine, polyester sulfides, polyvinyl alcohol, polyvinylidene fluoride, polymers including ionic dissociation groups, and the like may be used.

The inorganic solid electrolyte may include, for example, sulfide-based solid electrolyte and oxide-based solid electrolyte.

As oxide-based solid-state electrolyte, for example, nitrides of Li, such as $Li_{6.25}La_3Zr_2Al_{0.25}O_{12}$, $Li_3PO_4$, $Li_{3+x}PO_{4-x}N_x$(LiPON), $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, and $Li_4SiO_4$-LiI-LiOH, and halides may be used.

The sulfide-based particles are not particularly limited in the present invention and any known sulfide-based material used in the field of lithium batteries is available. The commercially available sulfide-based material may be used, or the material prepared by crystallizing an amorphous sulfide-based material may be used. For Preparation Example, the sulfide-based solid electrolyte may be any one of a crystalline sulfide-based solid electrolyte, an amorphous sulfide-based solid electrolyte, or a mixture thereof.

Preparation Examples of the complex compounds include sulfur-halogen compounds, sulfur-low-magnesium compounds, and sulfur-silicon sulfides, and may specifically include sulfides, such as $SiS_2$, $GeS_2$, $B_2S_3$, and the like, to which $Li_3PO_4$ or halogens, halogen compounds, and the like may be added. Specifically, sulfide-based electrolytes capable of achieving lithium ion conductivity of $10^{-4}$ S/cm or greater may be used.

Typically, the sulfide-based electrolyte includes LiePSsCl (LPSCl), Thio-LISICON($Li_{3.25}Ge_{0.25}P_{0.75}S_4$), $Li_2S$-$P_2S_5$-LiCl, $Li_2S$-$SiS_2$, LiI-$Li_2S$-$SiS_2$, LiI-$Li_2S$-$P_2S_5$, LiI-$Li_2S$-$P_2O_5$, LiI-$Li_3PO_4$-$P_2S_5$, $Li_2S$-$P_2S_5$, $Li_3PS_4$, $Li_7P_3S_{11}$, LiI-$Li_2S$-$B_2S_3$, $Li_3PO_4$-$Li_2S$-$Si_2S$, $Li_3PO_4$-$Li_2S$-$SiS_2$, $LiPO_4$-$Li_2S$-SiS, $Li_{10}GeP_2Si_2$, $Li_{9.54}Si_{1.74}P_{1.44}S_{11.7}C_{10.3}$, $Li_7P_3S_{11}$, and the like.

The negative electrode may be fabricated by using carbon-based materials conventionally used in all-solid-state batteries. Specifically, the negative electrode may include the negative electrode active material layer. For Preparation Example, as the negative electrode active material used in the negative electrode active material layer, for example, carbon, such as non-graphitizable carbon and graphitic carbon; metal composite oxide represented by $Li_xFe_2O_3$($0\leq x\leq 1$), $Li_xWO_2$($0\leq x\leq 1$), $Sn_xMe_{1-x}Me'_yO_z$ (Me: Mn, Fe, Pb, Ge; Me': Al, B, P, Si, elements of groups 1, 2 and 3 of the periodic table, and halogens; $0<x\leq 1$; $1\leq y\leq 3$; $1\leq z\leq 8$); lithium metal; lithium alloy; silicon-based alloy; tin-based alloy; metal oxides, such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, and $Bi_2O_5$; conductive polymers, such as polyacetylene; and Li-Co-Ni-based materials may be used.

According to other aspects of the present invention, the present invention includes a lithium metal battery including: a positive electrode including the aforementioned positive electrode active material; a lithium metal negative electrode; and an electrolyte provided between the positive electrode and the lithium metal negative electrode.

The lithium metal negative electrode may include lithium metal or a lithium metal alloy. The lithium metal or lithium metal alloy used as the lithium metal negative electrode has a thickness of 100 $\mu$m or less, for example, 80 $\mu$m or less, 0.1 to 60 $\mu$m.

The electrolyte may include one or more selected from a liquid electrolyte, a solid electrolyte, a gel electrolyte, and a polymer ionic liquid.

Another aspect of the present invention includes a method of preparing a positive electrode active material for a lithium secondary battery, the method including: preparing a first complex metal hydroxide with at least one of nickel (Ni), cobalt (Co), manganese (Mn), and aluminum (Al) by a co-precipitation method; mixing the first complex metal hydroxide with a lithium compound and primarily calcinating the mixed first complex metal hydroxide and lithium compound to prepare a primary calcinated material; and mixing the primary calcinated material and a doping element and secondarily calcinating and tertiarily calcinating the mixed primary calcinated material and doping element in sequence.

The primary calcination may be maintained at 400°C to 700°C after raising a temperature at a rate of 1°C/min to 5°C/min from room temperature for 3 hours to 7 hours. Specifically, the primary calcination may be maintained by mixing the complex metal hydroxide with the lithium compound, and then raising a temperature at a rate of 2°C/min from room temperature, followed by maintaining at 500°C to 600°C for approximately 5 hours. Furthermore, the complex metal hydroxide and lithium compounds may be mixed with the doping element during the primary calcination.

The doping element added in the primary calcination may be any one of aluminum (Al), titanium (Ti), magnesium (Mg), tantalum (Ta), niobium (Nb), tungsten (W), molybdenum (Mo), antimony (Sb), tellurium (Te), tin (Sn), ruthenium (Ru), boron (B), hafnium (Hf), gallium (Ga), germanium (Ge), chromium (Cr), vanadium (V), and zirconium (Zr).

The secondary calcination may be maintained at 600°C to 900°C after raising a temperature at a rate of 1°C/min to 5°C/min from room temperature, for 5 hours to 15 hours. Specifically, the secondary calcination may be performed by mixing the primary calcinated material with or without the doping element, and then raising a temperature at a rate of 2°C/min from room temperature, followed by maintaining at 650°C to 700°C or 750°C to 900°C for 10 hours.

The doping element added in the secondary calcination may be any one of aluminum (Al), titanium (Ti), magnesium (Mg), tantalum (Ta), niobium (Nb), tungsten (W), molybdenum (Mo), antimony (Sb), tellurium (Te), tin (Sn), ruthenium (Ru), boron (B), hafnium (Hf), gallium (Ga), germanium (Ge), chromium (Cr), vanadium (V), and zirconium (Zr).

The tertiary calcination may be maintained at 600°C to 900°C after raising a temperature at a rate of 1°C/min to 5°C/min from room temperature, for 5 hours to 15 hours. Specifically, the tertiary calcination may be performed by mixing the primary or secondary calcinated material with the doping element, and then raising a temperature at a rate of 2°C/min from room temperature, followed by maintaining at 650°C to 700°C or 750°C to 900°C for 10 hours.

The doping element added in the tertiary calcination may be any one of aluminum (Al), titanium (Ti), magnesium (Mg), tantalum (Ta), niobium (Nb), tungsten (W), molybdenum (Mo), antimony (Sb), tellurium (Te), tin (Sn), ruthenium (Ru), boron (B), hafnium (Hf), gallium (Ga), germanium (Ge), chromium (Cr), vanadium (V), and zirconium (Zr). After the above tertiary calcination is completed, the temperature may be lowered to room temperature at a rate of 1°C/min to 5°C/min, and more specifically at a rate of 2°C/min.

Alternatively, the positive electrode active material may include two types of first and second doping elements, and the first and second doping elements may be included in the positive electrode active material at different steps.

The first and second doping elements may be any one of aluminum (Al), titanium (Ti), magnesium (Mg), tantalum (Ta), niobium (Nb), tungsten (W), molybdenum (Mo), antimony (Sb), tellurium (Te), tin (Sn), ruthenium (Ru), boron (B), hafnium (Hf), gallium (Ga), germanium (Ge), chromium (Cr), vanadium (V), and zirconium (Zr).

The first doping element is added by a wet method and is included in the first complex metal hydroxide, and the second doping element is added by a dry method but may be added in any one of the primary calcination or the tertiary calcination.

According to the wet method, in the process of preparing the first complex metal hydroxide by the co-precipitation method, the first doping element may be included in a metal solution including any one of nickel (Ni), cobalt (Co), manganese (Mn), and aluminum (Al), or included in a base solution added to control pH in the co-precipitation to be included in the first complex metal hydroxide.

The dry method may include adding the second doping element to a first complex metal hydroxide in a powder state and a lithium compound and physically mixing them, followed by primary calcination, or physically mixing a calcinated material obtained by calcinating a first complex metal hydroxide and a lithium compound and the second doping element, followed by secondary calcination or tertiary calcination.

Still another aspect of the present invention includes a method of preparing a positive electrode active material for a lithium secondary battery, the method including: preparing a second complex metal hydroxide including at least one of nickel (Ni), cobalt (Co), manganese (Mn), and aluminum (Al), and a doping element by a co-precipitation method; and preparing a positive electrode active material by mixing the second complex metal hydroxide with a lithium compound, followed by calcination.

The doping element is added to a metal solution of at least one of nickel (Ni), cobalt (Co), manganese (Mn), and aluminum (Al), or to a base solution added during the co-precipitation method, and the calcination may be performed in several operations.

Specifically, the doping elements may be injected with any of a metal solution, a sodium hydroxide solution, and an ammonia solution to be utilized in the co-precipitation. For Preparation Example, $WO_3$ may be dissolved in a NaOH solution and added.

Alternatively, the positive electrode active material may include two different doping elements including a first doping element and a second doping element. The first and second doping elements may be any one of aluminum (Al), titanium (Ti), magnesium (Mg), tantalum (Ta), niobium (Nb), tungsten (W), molybdenum (Mo), antimony (Sb), tellurium (Te), tin (Sn), ruthenium (Ru), boron (B), hafnium (Hf), gallium (Ga), germanium (Ge), chromium (Cr), vanadium (V), and zirconium (Zr).

The first doping element may be added by a wet method and included in the second complex metal hydroxide, and the second doping element may be added by a dry method, but included during the calcination.

The positive electrode active material according to the present exemplary embodiment may include two different doping elements including a first doping element and a second doping element. The first doping element may be added by a dry method or a wet method, and the second doping element may be added by a dry method or a wet method.

Specifically, boron (B) may be included in the second complex metal hydroxide by a wet method, and niobium (Nb) may be mixed and calcined together with the second complex metal hydroxide and lithium compound by a dry method to be co-doped in the positive electrode active material.

Furthermore, in the process of carrying out the calcination method in steps of primary, secondary, tertiary calcinations, titanium (Ti) may be added in the primary calcination and tungsten (W) may be added in the secondary or tertiary calcination.

The co-doping according to the present exemplary embodiment is the addition of two different doping elements to the positive electrode active material, and the respective co-doping may improve the performance of the positive electrode active material in the same method or different methods. Furthermore, the doping elements may be added by a wet method, or by a dry method, or by a combination of wet and dry methods.

Preparation Examples and comparative Preparation Examples of the present invention are described below. However, the Preparation Examples below are merely preferable Preparation Examples of the present invention, and the scope of the present invention is not limited by the Preparation Examples.

Prepare positive electrode active material

1. Co-doping_wet and dry doping

Preparation Example 1 (NCM960202)

An aqueous solution of nickel sulfate ($NiSO_46H_2O$, Daejung Chemicals & Metals Co., Ltd.), an aqueous solution of cobalt sulfate ($CoSO_47H_2O$, Daejung Chemicals & Metals Co., Ltd.), and an aqueous solution of manganese sulfate ($MnSO_4H_2O$, Daejung Chemicals & Metals Co., Ltd.) were mixed so that the molar ratio of nickel (Ni), cobalt (Co), and manganese (Mn) was 96:2:2, to prepare a metal solution having a concentration of 2.5 M.

500 liters of distilled water was put into a co-precipitation reactor (capacity 2,000L, and an output of a rotary motor 30 kW or greater), and then $N_2$ gas was supplied to the reactor at a flow rate of 150L $min^{-1}$, and stirring was carried out at 250 rpm while a temperature of the reactor was maintained at 50°C. The prepared metal solution, 20 M concentration of ammonia solution ($NH_4OH$, Daejung Chemicals & Metals Co., Ltd.), and 6 M concentration of sodium hydroxide solution (NaOH, Daejung Chemicals & Metals Co., Ltd.) were continuously input to the co-precipitation reactor for 20 hours at 40L $hr^{-1}$, 4.5L $hr^{-1}$, and 25L $hr^{-1}$, respectively. The pH in the co-precipitation reactor was maintained at 10 to 12, and the co-precipitation reaction was carried out to prepare a metal complex hydroxide.

The metal complex hydroxide was filtered to select only a solid phase material, and the selected solid phase material was washed several times with distilled water and dried in a 110°C vacuum dryer for 8 hours to prepare the metal complex hydroxide in a powder form. After mixing the metal complex hydroxide in the powder form and a lithium hydroxide (LiOH) with each other at a molar ratio of (Ni+Co+Mn):Li = 1:1.01, the mixture was heated at a temperature increase rate of 2°C/$min^{-1}$ and was maintained at 450°C for 5 hours to perform preliminary calcination. Subsequently, main calcination was performed at the calcination temperatures listed in Table 1 for 10 hours to prepare positive electrode active material powder, which is represented in Table 1.

Preparation Example 2 (Ti0.5(wet)-NCM960202)

An aqueous solution of nickel sulfate ($NiSO_46H_2O$, Daejung Chemicals & Metals Co., Ltd.), an aqueous solution of cobalt sulfate ($CoSO_47H_2O$, Daejung Chemicals & Metals Co., Ltd.), an aqueous solution of manganese sulfate ($MnSO_4H_2O$, Daejung Chemicals & Metals Co., Ltd.), and an aqueous solution of titanium sulfate ($Ti(SO_4)_2$, Aldrich) were mixed so that a molar ratio of nickel (Ni), cobalt (Co), manganese (Mn), and titanium (Ti) was 95.5:2:2:0.5 to prepare a metal solution having a concentration of 2.5 M. 500 liters of distilled water was put into a co-precipitation reactor (capacity 2,000L, and an output of a rotary motor 30 kW or greater), and then $N_2$ gas was supplied to the reactor at a flow rate of 150L $min^{-1}$, and stirring was carried out at 250 rpm while a temperature of the reactor was maintained at 50°C. The prepared metal solution, 20 M concentration of ammonia solution ($NH_4OH$, Daejung Chemicals & Metals Co., Ltd.), and 6 M concentration of sodium hydroxide solution (NaOH, Daejung Chemicals & Metals Co., Ltd.) were continuously input to the co-precipitation reactor for 20 hours at 40L $hr^{-1}$, 4.5L $hr^{-1}$, and 25L $hr^{-1}$, respectively. The pH in the co-precipitation reactor was maintained at 10 to 12, and the co-precipitation reaction was carried out to prepare a metal complex hydroxide doped with titanium.

The metal complex hydroxide was filtered to select only a solid phase material, and the selected solid phase material was washed several times with distilled water and dried in a 110°C vacuum dryer for 8 hours to prepare the metal complex hydroxide in a powder form. After mixing the metal complex hydroxide in the powder form and a lithium hydroxide (LiOH) with each other at a molar ratio of (Ni+Co+Mn+Ti):Li = 1:1.01, the mixture was heated at a temperature increase rate of 2°C $min^{-1}$ and was maintained at 450°C for 5 hours to perform preliminary calcination. Subsequently, main calcination was performed at the calcination temperatures listed in Table 1 for 10 hours to prepare positive electrode active material powder, which is represented in Table 1.

Preparation Example 3 (Al2-NCM960202)

A metal complex hydroxide in the powder form prepared by the same method as Preparation Example 1 (NCM960202) was used. After mixing the metal complex hydroxide in the powder form, and a lithium hydroxide (LiOH) and a dopant $Al(OH)_3$ (Aldrich, 3N) with each other at a molar ratio of (Ni+Co+Mn):Al:Li = 0.98:0.02:1.01, the mixture was heated at a temperature increase rate of 2°C/$min^{-1}$ and was maintained at 450°C for 5 hours to perform preliminary calcination. Subsequently, main calcination was performed at the calcination temperatures listed in Table 1 for 10 hours to prepare positive electrode active material powder, which is represented in Table 1.

Preparation Example 4 (Al2-Ti0.5(wet)-NCM960202)

A metal complex hydroxide in the powder form prepared by the same method as Preparation Example 2 (Ti0.5(wet)-NCM960202) was used. After mixing the metal complex hydroxide, and a lithium hydroxide (LiOH) and a dopant $Al(OH)_3$ (Aldrich, 3N) with each other at a molar ratio of (Ni+Co+Mn+Ti):Al:Li = 0.98:0.02:1.01, the mixture was heated at a temperature increase rate of $2°C/min^{-1}$ and was maintained at 450°C for 5 hours to perform preliminary calcination. Subsequently, the calcination was performed at the calcination temperatures listed in Table 1 for 10 hours to prepare positive electrode active material powder, which is represented in Table 1.

[Table 1]

| Preparation Example | Positive electrode active material powder | Precursor (molar ratio) | Doping (mol%) | Doping method | Calcination temperature (°C) |
|---|---|---|---|---|---|
| Preparation Example 1 | NCM960202 | Ni:Co:Mn (96:2: 2) | - | - | 680 |
| Preparation Example 2 | Ti0.5(wet)-NCM960202 | Ni:Co:Mn (96:2: 2) | Ti (0.5) | Ti : wet method | 680 |
| Preparation Example 3 | A12-NCM960202 | Ni:Co:Mn (96:2: 2) | Al (2) | Al : dry method | 680 |
| Preparation Example 4 | Al2-Ti0.5(wet)-NCM960202 | Ni:Co:Mn (96:2: 2) | Ti (0.5), Al (2) | Ti : wet method, Al : dry method | 700 |

Preparation Example 5 (B1(wet)-NC8812)

An aqueous solution of nickel sulfate ($NiSO_46H_2O$, Daejung Chemicals & Metals Co., Ltd.) and an aqueous solution of cobalt sulfate ($CoSO_47H_2O$, Daejung Chemicals & Metals Co., Ltd.) were mixed so that the molar ratio of nickel (Ni) and cobalt (Co) was 88:12, to prepare a metal solution having a concentration of 2.5 M. Boron oxide ($B_2O_3$, Aldrich, 3N) and a sodium hydroxide solution were mixed to prepare a doping solution at a concentration of 0.01 M.
500 liters of distilled water was put into a co-precipitation reactor (capacity 2,000L, and an output of a rotary motor 30 kW or greater), and then $N_2$ gas was supplied to the reactor at a flow rate of $150L min^{-1}$, and stirring was carried out at 250 rpm while a temperature of the reactor was maintained at 50°C. The prepared metal solution, 20 M concentration of ammonia solution ($NH_4OH$, Daejung Chemicals & Metals Co., Ltd.), and 6 M concentration of sodium hydroxide solution containing boron (NaOH, Daejung Chemicals & Metals Co., Ltd.) were continuously input to the co-precipitation reactor for 20 hours at $40L hr^{-1}$, $4.5L hr^{-1}$, and $25L hr^{-1}$, respectively. The pH in the co-precipitation reactor was maintained at 10 to 12, and the co-precipitation reaction was carried out to prepare a metal complex hydroxide doped with boron.
The metal complex hydroxide was filtered to select only a solid phase material, and the selected solid phase material was washed several times with distilled water and dried in a 110°C vacuum dryer for 8 hours to prepare the metal complex hydroxide in a powder form. After mixing the metal complex hydroxide in the powder form and a lithium hydroxide (LiOH) with each other at a molar ratio of (Ni+Co+B):Li = 1: 1.01, the mixture was heated at a temperature increase rate of $2°C min^{-1}$ and was maintained at 450°C for 5 hours to perform preliminary calcination. Subsequently, main calcination was performed at the calcination temperatures listed in Table 2 for 10 hours to prepare positive electrode active material powder, which is represented in Table 2.

Preparation Example 6 (Nb0.25-B1(wet)-NC8812)

A metal complex hydroxide in the powder form prepared by the same method as Preparation Example 5 (B1(wet)-NC8812) was used. After mixing the metal complex hydroxide, and a lithium hydroxide (LiOH) and a dopant $Nb_2O_5$ (Aldrich, 3N) with each other at a molar ratio of (Ni+Co+B):Nb:Li = 0.9975:0.0025:1.01, the mixture was heated at a temperature increase rate of $2°C/min^{-1}$ and was maintained at 450°C for 5 hours to perform preliminary calcination. Subsequently, main calcination was performed at the calcination temperatures listed in Table 2 for 10 hours to prepare positive electrode active material powder, which is represented in Table 2.

Preparation Example 7 (Nb0.5-B1(wet)-NC8812)

Positive electrode active material powder was prepared in the same method as in Preparation Example 6 except that the metal complex hydroxide was mixed with lithium hydroxide (LiOH) and the dopant $Nb_2O_5$, (Aldrich, 3N) at a molar ratio of (Ni+Co+B):Nb:Li = 0.995:0.005:1.01, which is represented in Table 2.

Preparation Example 8 (Nb0.75-B1(wet)-NC8812)

Positive electrode active material powder was prepared in the same method as in Preparation Example 6 except that the metal complex hydroxide was mixed with lithium hydroxide (LiOH) and the dopant $Nb_2O_5$, (Aldrich, 3N) at a molar ratio of (Ni+Co+B):Nb:Li = 0.9925:0.0075:1.01, which is represented in Table 2.

Preparation Example 9 (Nb1-B1(wet)-NC8812)

Positive electrode active material powder was prepared in the same method as in Preparation Example 6 except that the metal complex hydroxide was mixed with lithium hydroxide (LiOH) and the dopant $Nb_2O_5$, (Aldrich, 3N) at a molar ratio of (Ni+Co+B):Nb:Li = 0.99:0.01:1.01, which is represented in Table 2.

[Table 2]

| Preparation Example | Positive electrode active material powder | Precursor (molar ratio) | Doping (mol%) | Doping method | Calcination temperature (°C) |
|---|---|---|---|---|---|
| Preparation Example 5 | B 1 (wet)-NC8812 | Ni:Co (88:12) | B (1) | B : wet method | 750 |
| Preparation Example 6 | Nb0.25-B1 (wet)-NC8812 | Ni:Co (88:12) | B (1), Nb (0.25) | B : wet method, Nb : dry method | 750 |
| Preparation Example 7 | Nb0.5-B1 (wet)-NC8812 | Ni:Co (88:12) | B (1), Nb (0.5) | B : wet method Nb : dry method | 750 |
| Preparation Example 8 | Nb0.75-B1 (wet)-NC8812 | Ni:Co (88:12) | B (1), Nb (0.75) | B: wet method, Nb : dry method | 750 |
| Preparation Example 9 | Nb1-B1 (wet)-NC8812 | Ni:Co (88:12) | B (1), Nb (1) | B : wet method, Nb : dry method | 750 |

Preparation Example 10 (CS NCM940303)

An aqueous solution of nickel sulfate ($NiSO_4 6H_2O$, Daejung Chemicals & Metals Co., Ltd.), an aqueous solution of cobalt sulfate ($CoSO_4 7H_2O$, Daejung Chemicals & Metals Co., Ltd.), and an aqueous solution of manganese sulfate ($MnSO_4 H_2O$, Daejung Chemicals & Metals Co., Ltd.) were mixed so that the molar ratio of nickel (Ni), cobalt (Co), and manganese (Mn) was 100:0:0, to prepare a first metal solution having a concentration of 2.5 M.

An aqueous solution of nickel sulfate ($NiSO_4 6H_2O$, Daejung Chemicals & Metals Co., Ltd.), an aqueous solution of cobalt sulfate ($CoSO_4 7H_2O$, Daejung Chemicals & Metals Co., Ltd.), and an aqueous solution of manganese sulfate ($MnSO_4 H_2O$, Daejung Chemicals & Metals Co., Ltd.) were mixed so that the molar ratio of nickel (Ni), cobalt (Co), and manganese (Mn) was 80:10:10, to prepare a second metal solution having a concentration of 2.5 M.

500 liters of distilled water was put into a co-precipitation reactor (capacity 2,000L, and an output of a rotary motor 30 kW or greater), and then $N_2$ gas was supplied to the reactor at a flow rate of 150L $min^{-1}$, and stirring was carried out at 250 rpm while a temperature of the reactor was maintained at 50°C. The prepared first metal solution, 20 M concentration of ammonia solution ($NH_4OH$, Daejung Chemicals & Metals Co., Ltd.), and 6 M concentration of sodium hydroxide solution (NaOH, Daejung Chemicals & Metals Co., Ltd.) were continuously input to the co-precipitation reactor for 20 hours at 40L $hr^{-1}$, 4.5L $hr^{-1}$, and 25L $hr^{-1}$, respectively. During the process of injecting the aqueous solution into the reactor, the second metal solution was continuously added to the first metal solution at 40 L $hr^{-1}$ to change the transition metal composition of the synthesized metal complex hydroxide. The pH in the co-precipitation reactor was maintained at 10 to 12, and the co-precipitation reaction was carried out to prepare a metal complex hydroxide.

The metal complex hydroxide was filtered to select only a solid phase material, and the selected solid phase material was washed several times with distilled water and dried in a 110°C vacuum dryer for 8 hours to prepare the metal complex hydroxide in a powder form. After mixing the metal complex hydroxide in the powder form and a lithium hydroxide (LiOH) with each other at a molar ratio of (Ni+Co+Mn):Li = 1:1.01, the mixture was heated at a temperature increase rate of 2°C/$min^{-1}$ and was maintained at 450°C for 5 hours to perform preliminary calcination. Subsequently, main calcination was performed at the calcination temperatures listed in Table 3 for 10 hours to prepare positive electrode active material powder, which is represented in Table 3.

Preparation Example 11 (Ti0.25(wet)-CS NCM940303)

An aqueous solution of nickel sulfate ($NiSO_4 6H_2O$, Daejung Chemicals & Metals Co., Ltd.), an aqueous solution of cobalt sulfate ($CoSO_4 7H_2O$, Daejung Chemicals & Metals Co., Ltd.), an aqueous solution of manganese sulfate ($MnSO_4 H_2O$, Daejung Chemicals & Metals Co., Ltd.), and an aqueous solution of titanium sulfate ($Ti(SO_4)_2$, Aldrich) were mixed so that a molar ratio of nickel (Ni), cobalt (Co), manganese (Mn), and titanium (Ti) was 99.75:0:0:0.25 to prepare a first metal solution having a concentration of 2.5 M.

An aqueous solution of nickel sulfate ($NiSO_4 6H_2O$, Daejung Chemicals & Metals Co., Ltd.), an aqueous solution of cobalt sulfate ($CoSO_4 7H_2O$, Daejung Chemicals & Metals Co., Ltd.), an aqueous solution of manganese sulfate ($MnSO_4 H_2O$, Daejung Chemicals & Metals Co., Ltd.), and an aqueous solution of titanium sulfate ($Ti(SO_4)_2$, Aldrich) were mixed so that a molar ratio of nickel (Ni), cobalt (Co), manganese (Mn), and titanium (Ti) was 79.75:10:10:0.25 to prepare a second metal solution having a concentration of 2.5 M.

500 liters of distilled water was put into a co-precipitation reactor (capacity 2,000L, and an output of a rotary motor 30 kW or greater), and then $N_2$ gas was supplied to the reactor at a flow rate of 150L min$^{-1}$, and stirring was carried out at 250 rpm while a temperature of the reactor was maintained at 50°C. The prepared first metal solution, 20 M concentration of ammonia solution ($NH_4OH$, Daejung Chemicals & Metals Co., Ltd.), and 6 M concentration of sodium hydroxide solution (NaOH, Daejung Chemicals & Metals Co., Ltd.) were continuously input to the co-precipitation reactor for 20 hours at 40L hr$^{-1}$, 4.5L hr$^{-1}$, and 25L hr$^{-1}$, respectively. During the process of injecting the aqueous solution into the reactor, the second metal solution was continuously added to the first metal solution at 40 L hr$^{-1}$ to change the transition metal composition of the synthesized metal complex hydroxide. The pH in the co-precipitation reactor was maintained at 10 to 12, and the co-precipitation reaction was carried out to prepare a metal complex hydroxide.

The metal complex hydroxide was filtered to select only a solid phase material, and the selected solid phase material was washed several times with distilled water and dried in a 110°C vacuum dryer for 8 hours to prepare the metal complex hydroxide in a powder form. After mixing the titanium-doped metal complex hydroxide in the powder form and a lithium hydroxide (LiOH) with each other at a molar ratio of (Ni+Co+Mn+Ti):Li = 1:1.01, the mixture was heated at a temperature increase rate of 2°C min$^{-1}$ and was maintained at 450°C for 5 hours to perform preliminary calcination. Subsequently, main calcination was performed at the calcination temperatures listed in Table 3 for 10 hours to prepare positive electrode active material powder, which is represented in Table 3.

Preparation Example 12 (Ta0.5-Ti0.25(wet)-CS NCM940303)

A metal complex hydroxide in the powder form prepared by the same method as Preparation Example 11 (Ti0.25(wet)-CS NCM940303) was used. After mixing the metal complex hydroxide, and a lithium hydroxide (LiOH) and a dopant $Ta_2O_5$ (Aldrich, 3N) with each other at a molar ratio of (Ni+Co+Mn+Ti):Ta:Li = 0.995:0.005:1.01, the mixture was heated at a temperature increase rate of 2°C/min$^{-1}$ and was maintained at 450°C for 5 hours to perform preliminary calcination. Subsequently, main calcination was performed at the calcination temperatures listed in Table 3 for 10 hours to prepare positive electrode active material powder, which is represented in Table 3.

[Table 3]

| Preparation Example | Positive electrode active material powder | Precursor (molar ratio) | Doping (mol%) | Doping method | Calcination temperature (°C) |
|---|---|---|---|---|---|
| Preparation Example 10 | CS NCM940303 | CS Ni:Co:Mn (94:3:3) | - | - | 680 |
| Preparation Example 11 | Ti0.25(wet)-CS NCM940303 | CS Ni:Co:Mn (94:3:3) | Ti (0.25) | Ti : Wet method | 680 |
| Preparation Example 12 | Ta0.5-Ti0.25(wet)-CS NCM940303 | CS Ni:Co:Mn (94:3:3) | Ti (0.25), Ta (0.5) | Ti : wet method Ta : dry method | 720 |

2. Co-doping_dry and dry doping

Preparation Example 13 (Al1-NCM940303)

An aqueous solution of nickel sulfate ($NiSO_4 6H_2O$, Daejung Chemicals & Metals Co., Ltd.), an aqueous solution of cobalt sulfate ($CoSO_4 7H_2O$, Daejung Chemicals & Metals Co., Ltd.), and an aqueous solution of manganese sulfate ($MnSO_4 H_2O$, Daejung Chemicals & Metals Co., Ltd.) were mixed so that the molar ratio of nickel (Ni), cobalt (Co), and manganese (Mn) was 94:3:3, to prepare a metal solution having a concentration of 2.5 M.

500 liters of distilled water was put into a co-precipitation reactor (capacity 2,000L, and an output of a rotary motor 30 kW or greater), and then $N_2$ gas was supplied to the reactor at a flow rate of 150L $min^{-1}$, and stirring was carried out at 250 rpm while a temperature of the reactor was maintained at 50°C. The prepared metal solution, 20 M concentration of ammonia solution ($NH_4OH$, Daejung Chemicals & Metals Co., Ltd.), and 6 M concentration of sodium hydroxide solution (NaOH, Daejung Chemicals & Metals Co., Ltd.) were continuously input to the co-precipitation reactor for 20 hours at 40L $hr^{-1}$, 4.5L $hr^{-1}$, and 25L $hr^{-1}$, respectively. The pH in the co-precipitation reactor was maintained at 10 to 12, and the co-precipitation reaction was carried out to prepare a metal complex hydroxide.

The metal complex hydroxide was filtered to select only a solid phase material, and the selected solid phase material was washed several times with distilled water and dried in a 110°C vacuum dryer for 8 hours to prepare the metal complex hydroxide in a powder form. After mixing the metal complex hydroxide in the powder form, and a lithium hydroxide (LiOH) and a dopant $Al(OH)_3$ (Aldrich, 3N) with each other at a molar ratio of (Ni+Co+Mn):Al:Li = 0.99:0.01:1.01, the mixture was heated at a temperature increase rate of 2°C/$min^{-1}$ and was maintained at 450°C for 5 hours to perform preliminary calcination. Subsequently, main calcination was performed at the calcination temperatures listed in Table 4 for 10 hours to prepare positive electrode active material powder, which is represented in Table 4.

Preparation Example 14 (Mo0.5-Al1-NCM940303)

Positive electrode active material powder was prepared in the same method as in Preparation Example 13 (Mo0.5-Al1-NCM940303), except that the metal complex hydroxide was mixed with lithium hydroxide (LiOH) and the dopant $Al(OH)_3$ (Aldrich, 3N) and MoOs (Aldrich, 3N) at a molar ratio of (Ni+Co+Mn):Al:Mo:Li = 0.985:0.01:0.005:1.01, which is represented in Table 4.

Preparation Example 15 (Mol-Al1-NCM940303)

Positive electrode active material powder was prepared in the same method as in Preparation Example 13 (Al1-NCM940303), except that the metal complex hydroxide was mixed with lithium hydroxide (LiOH) and the dopant $Al(OH)_3$ (Aldrich, 3N) and MoOs (Aldrich, 3N) at a molar ratio of (Ni+Co+Mn):Al:Mo:Li = 0.98:0.01:0.01:1.01, which is represented in Table 4.

Preparation Example 16 (Mo1.5-Al1-NCM940303)

Positive electrode active material powder was prepared in the same method as in Preparation Example 13 (Al1-NCM940303), except that the metal complex hydroxide was mixed with lithium hydroxide (LiOH) and the dopant $Al(OH)_3$ (Aldrich, 3N) and MoOs (Aldrich, 3N) at a molar ratio of (Ni+Co+Mn):Al:Mo:Li = 0.975:0.01:0.015:1.01, which is represented in Table 4.

[Table 4]

| Preparation Example | Positive electrode active material powder | Precursor (molar ratio) | Doping (mol%) | Doping method | Calcination temperature (°C) |
|---|---|---|---|---|---|
| Preparation Example 13 | Al1-NCM940303 | Ni:Co:Mn (94:3:3) | Al (1) | Al : dry method | 700 |
| Preparation Example 14 | Mo0.5-Al1-NCM940303 | Ni:Co:Mn (94:3:3) | Mo (0.5), Al (1) | Mo : dry method, Al : dry method | 750 |
| Preparation Example 15 | Mo1-Al1-NCM940303 | Ni:Co:Mn (94:3:3) | Mo (1), Al (1) | Mo : dry method, Al : dry method | 750 |

(continued)

| Preparation Example | Positive electrode active material powder | Precursor (molar ratio) | Doping (mol%) | Doping method | Calcination temperature (°C) |
|---|---|---|---|---|---|
| Preparation Example 16 | Mo1.5-Al1-NCM940303 | Ni:Co:Mn (94:3:3) | Mo(1.5), Al (1) | Mo : dry method, Al : dry method | 770 |

3. Wet doping

Preparation Example 17 (NCM880705)

An aqueous solution of nickel sulfate ($NiSO_4 6H_2O$, Daejung Chemicals & Metals Co., Ltd.), an aqueous solution of cobalt sulfate ($CoSO_4 7H_2O$, Daejung Chemicals & Metals Co., Ltd.), and an aqueous solution of manganese sulfate ($MnSO_4 H_2O$, Daejung Chemicals & Metals Co., Ltd.) were mixed so that the molar ratio of nickel (Ni), cobalt (Co), and manganese (Mn) was 88:7:5, to prepare a metal solution having a concentration of 2.5 M.
500 liters of distilled water was put into a co-precipitation reactor (capacity 2,000L, and an output of a rotary motor 30 kW or greater), and then $N_2$ gas was supplied to the reactor at a flow rate of 150L $min^{-1}$, and stirring was carried out at 250 rpm while a temperature of the reactor was maintained at 50°C. The prepared metal solution, 20 M concentration of ammonia solution ($NH_4OH$, Daejung Chemicals & Metals Co., Ltd.), and 6 M concentration of sodium hydroxide solution containing boron (NaOH, Daejung Chemicals & Metals Co., Ltd.) were continuously input to the co-precipitation reactor for 20 hours at 40L $hr^{-1}$, 4.5L $hr^{-1}$, and 25L $hr^{-1}$, respectively. The pH in the co-precipitation reactor was maintained at 10 to 12, and the co-precipitation reaction was carried out to prepare a metal complex hydroxide.
The metal complex hydroxide was filtered to select only a solid phase material, and the selected solid phase material was washed several times with distilled water and dried in a 110°C vacuum dryer for 8 hours to prepare the metal complex hydroxide in a powder form. After mixing the metal complex hydroxide in the powder form and a lithium hydroxide (LiOH) with each other at a molar ratio of (Ni+Co+Mn):Li = 1:1.01, the mixture was heated at a temperature increase rate of 2°C/$min^{-1}$ and was maintained at 450°C for 5 hours to perform preliminary calcination. Subsequently, main calcination was performed at the calcination temperatures listed in Table 5 for 10 hours to prepare positive electrode active material powder, which is represented in Table 5.

Preparation Example 18 (W0.2(wet)-NCM880705)

An aqueous solution of nickel sulfate ($NiSO_4 6H_2O$, Daejung Chemicals & Metals Co., Ltd.), an aqueous solution of cobalt sulfate ($CoSO_4 7H_2O$, Daejung Chemicals & Metals Co., Ltd.), and an aqueous solution of manganese sulfate ($MnSO_4 H_2O$, Daejung Chemicals & Metals Co., Ltd.) were mixed so that the molar ratio of nickel (Ni), cobalt (Co), and manganese (Mn) was 88:7:5, to prepare a metal solution having a concentration of 2.5 M. A doping solution at a concentration of 0.002 M was prepared by mixing tungsten trioxide ($WO_3$, Aldrich) with a sodium hydroxide solution.
500 liters of distilled water was put into a co-precipitation reactor (capacity 2,000L, and an output of a rotary motor 30 kW or greater), and then $N_2$ gas was supplied to the reactor at a flow rate of 150L $min^{-1}$, and stirring was carried out at 250 rpm while a temperature of the reactor was maintained at 50°C. The prepared metal solution, 20 M concentration of ammonia solution ($NH_4OH$, Daejung Chemicals & Metals Co., Ltd.), and 6 M concentration of sodium hydroxide solution containing boron (NaOH, Daejung Chemicals & Metals Co., Ltd.) were continuously input to the co-precipitation reactor for 20 hours at 40L $hr^{-1}$, 4.5L $hr^{-1}$, and 25L $hr^{-1}$, respectively. The pH in the co-precipitation reactor was maintained at 10 to 12, and the co-precipitation reaction was carried out to prepare a metal complex hydroxide.
The metal complex hydroxide was filtered to select only a solid phase material, and the selected solid phase material was washed several times with distilled water and dried in a 110°C vacuum dryer for 8 hours to prepare the metal complex hydroxide in a powder form. After mixing the metal complex hydroxide in the powder form and a lithium hydroxide (LiOH) with each other at a molar ratio of (Ni+Co+Mn+W):Li = 1:1.01, the mixture was heated at a temperature increase rate of 2°C/$min^{-1}$ and was maintained at 450°C for 5 hours to perform preliminary calcination. Subsequently, main calcination was performed at the calcination temperatures listed in Table 5 for 10 hours to prepare positive electrode active material powder, which is represented in Table 2.

[Table 5]

| Preparation Example | Positive electrode active material powder | Precursor (molar ratio) | Doping (mol%) | Doping method | Calcination temperature (°C) |
|---|---|---|---|---|---|
| Preparation Example 17 | NCM880705 | Ni:Co:Mn (88:7:5) | - | - | 750 |
| Preparation Example 18 | W0.2(wet)-NCM880705 | Ni:Co:Mn (88:7:5) | W (0.2) | W : wet | 750 |

4. Two step doping

Preparation Example 19 (NCM930403)

An aqueous solution of nickel sulfate ($NiSO_46H_2O$, Daejung Chemicals & Metals Co., Ltd.), an aqueous solution of cobalt sulfate ($CoSO_47H_2O$, Daejung Chemicals & Metals Co., Ltd.), and an aqueous solution of manganese sulfate ($MnSO_4H_2O$, Daejung Chemicals & Metals Co., Ltd.) were mixed so that the molar ratio of nickel (Ni), cobalt (Co), and manganese (Mn) was 93:4:3, to prepare a metal solution having a concentration of 2.5 M.

500 liters of distilled water was put into a co-precipitation reactor (capacity 2,000L, and an output of a rotary motor 30 kW or greater), and then $N_2$ gas was supplied to the reactor at a flow rate of 150L min$^{-1}$, and stirring was carried out at 250 rpm while a temperature of the reactor was maintained at 50°C. The prepared metal solution, 20 M concentration of ammonia solution ($NH_4OH$, Daejung Chemicals & Metals Co., Ltd.), and 6 M concentration of sodium hydroxide solution containing boron (NaOH, Daejung Chemicals & Metals Co., Ltd.) were continuously input to the co-precipitation reactor for 20 hours at 40L hr$^{-1}$, 4.5L hr$^{-1}$, and 25L hr$^{-1}$, respectively. The pH in the co-precipitation reactor was maintained at 10 to 12, and the co-precipitation reaction was carried out to prepare a metal complex hydroxide.

The metal complex hydroxide was filtered to select only a solid phase material, and the selected solid phase material was washed several times with distilled water and dried in a 110°C vacuum dryer for 8 hours to prepare the metal complex hydroxide in a powder form. After mixing the metal complex hydroxide in the powder form and a lithium hydroxide (LiOH) with each other at a molar ratio of (Ni+Co+Mn):Li = 1:1.01, the mixture was heated at a temperature increase rate of 2°C/min$^{-1}$ and was maintained at 450°C for 5 hours to perform preliminary calcination. Subsequently, main calcination was performed at the calcination temperatures listed in Table 5 for 10 hours to prepare positive electrode active material powder, which is represented in Table 6.

Preparation Example 20 (Ta0.5(o/s)-NCM930403)

A metal complex hydroxide in the powder form prepared by the same method as Preparation Example 19 (NCM930403) was used. After mixing the metal complex hydroxide, and a lithium hydroxide (LiOH) and a dopant $Ta_2O_5$ (Aldrich, 3N) with each other at a molar ratio of (Ni+Co+Mn):Ta:Li = 0.995:0.005: 1.01, the mixture was heated at a temperature increase rate of 2°C/min$^{-1}$ and was maintained at 450°C for 5 hours to perform preliminary calcination. Subsequently, main calcination was performed at the calcination temperatures listed in Table 6 for 10 hours to prepare positive electrode active material powder, which is represented in Table 6.

Preparation Example 21 (Ta0.5(t/s)-NCM930403)

A metal complex hydroxide in the powder form prepared by the same method as Preparation Example 19 (NCM930403) was used. After mixing the metal complex hydroxide and a lithium hydroxide (LiOH) with each other at a molar ratio of (Ni+Co+Mn):Li = 1:1.01, the mixture was heated at a temperature increase rate of 2°C/min$^{-1}$ and was maintained at a primary calcination temperature of 580°C listed in Table 6 for 3 hours to perform preliminary calcination. The prepared preliminary calcined material was obtained and mixed with a dopant $Ta_2O_5$ (Aldrich, 3N) at a molar ratio of (Ni+Co+Mn):Ta = 0.995:0.005, heated at a temperature increase rate of 2°C min$^{-1}$, and then subjected to 10-hour main calcination at a secondary calcination temperature of 750°C shown in Table 6, to prepare positive electrode active material powder, which is represented in Table 6.

[Table 6]

| Preparation Example | Positive electrode active material powder | Precursor (molar ratio) | Doping (mol%) | Doping method | Calcination temperature (°C) |
|---|---|---|---|---|---|
| Preparation Example 19 | NCM930403 | Ni:Co:Mn (93:4:3) | - | - | 730 |
| Preparation Example 20 | Ta0.5(o/s)-NCM930403 | Ni:Co:Mn (93:4:3) | Ta (0.5) | Ta : dry method, one step | 750 |
| Preparation Example 21 | Ta0.5(t/s)-NCM930403 | Ni:Co:Mn (93:4:3) | Ta (0.5) | Ta : dry method, two step | 580/750 |

Preparation Example 22 (NM8812)

An aqueous solution of nickel sulfate ($NiSO_4 6H_2O$, Daejung Chemicals & Metals Co., Ltd.) and an aqueous solution of cobalt sulfate ($CoSO_4 7H_2O$, Daejung Chemicals & Metals Co., Ltd.) were mixed so that the molar ratio of nickel (Ni) and cobalt (Co) was 88:12, to prepare a metal solution having a concentration of 2.5 M.

500 liters of distilled water was put into a co-precipitation reactor (capacity 2,000L, and an output of a rotary motor 30 kW or greater), and then $N_2$ gas was supplied to the reactor at a flow rate of 150L $min^{-1}$, and stirring was carried out at 250 rpm while a temperature of the reactor was maintained at 50°C. The prepared metal solution, 20 M concentration of ammonia solution ($NH_4OH$, Daejung Chemicals & Metals Co., Ltd.), and 6 M concentration of sodium hydroxide solution containing boron (NaOH, Daejung Chemicals & Metals Co., Ltd.) were continuously input to the co-precipitation reactor for 20 hours at 40L $hr^{-1}$, 4.5L $hr^{-1}$, and 25L $hr^{-1}$, respectively. The pH in the co-precipitation reactor was maintained at 10 to 12, and the co-precipitation reaction was carried out to prepare a metal complex hydroxide.

The metal complex hydroxide was filtered to select only a solid phase material, and the selected solid phase material was washed several times with distilled water and dried in a 110°C vacuum dryer for 8 hours to prepare the metal complex hydroxide in a powder form. After mixing the metal complex hydroxide in the powder form and a lithium hydroxide (LiOH) with each other at a molar ratio of (Ni+Mn):Li = 1: 1.01, the mixture was heated at a temperature increase rate of 2°C/$min^{-1}$ and was maintained at 450°C for 5 hours to perform preliminary calcination. Subsequently, main calcination was performed at the calcination temperatures listed in Table 5 for 10 hours to prepare positive electrode active material powder, which is represented in Table 7.

Preparation Example 23 (Mo1(o/s)-NM8812)

A metal complex hydroxide in the powder form prepared by the same method as Preparation Example 22 (NM8812) was used. After mixing the metal complex hydroxide, and a lithium hydroxide (LiOH) and a dopant MoOs (Aldrich, 3N) with each other at a molar ratio of (Ni+Mn):Mo:Li = 0.99:0.01: 1.01, the mixture was heated at a temperature increase rate of 2°C/$min^{-1}$ and was maintained at 450°C for 5 hours to perform preliminary calcination. Subsequently, main calcination was performed at the calcination temperatures listed in Table 7 for 10 hours to prepare positive electrode active material powder, which is represented in Table 7.

Preparation Example 24 (Mo1(t/s)-NM8812)

A metal complex hydroxide in the powder form prepared by the same method as Preparation Example 22 (NM8812) was used. After mixing the metal complex hydroxide and a lithium hydroxide (LiOH) with each other at a molar ratio of (Ni+Mn):Li = 1: 1.01, the mixture was heated at a temperature increase rate of 2°C/$min^{-1}$ and was maintained at a primary calcination temperature of 680°C listed in Table 7 for 3 hours to perform preliminary calcination. The prepared preliminary calcined material was obtained and mixed with a dopant MoOs (Aldrich, 3N) at a molar ratio of (Ni+Mn):Mo = 0.99:0.01, heated at a temperature increase rate of 2°C $min^{-1}$, and then subjected to 10-hour main calcination at a secondary calcination temperature of 790°C shown in Table 7, to prepare positive electrode active material powder, which is represented in Table 7.

[Table 7]

| Preparation Example | Positive electrode active material powder | Precursor (molar ratio) | Doping (mol%) | Doping method | Calcination temperature (°C) |
|---|---|---|---|---|---|
| Preparation Example 22 | NM8812 | Ni:Mn (88:12) | - | - | 770 |
| Preparation Example 23 | Mo1(o/s)-NM8812 | Ni:Mn (88:12) | Mo (1) | Mo : dry method, one step | 770 |
| Preparation Example 24 | Mo1(t/s)-NM8812 | Ni:Mn (88:12) | Mo (1) | Mo : dry method, two step | 680/790 |

Preparation Example 25 (NCM880705)

An aqueous solution of nickel sulfate ($NiSO_4 6H_2O$, Daejung Chemicals & Metals Co., Ltd.), an aqueous solution of cobalt sulfate ($CoSO_4 7H_2O$, Daejung Chemicals & Metals Co., Ltd.), and an aqueous solution of manganese sulfate ($MnSO_4 H_2O$, Daejung Chemicals & Metals Co., Ltd.) were mixed so that the molar ratio of nickel (Ni), cobalt (Co), and manganese (Mn) was 88:7:5, to prepare a metal solution having a concentration of 2.5 M.

500 liters of distilled water was put into a co-precipitation reactor (capacity 2,000L, and an output of a rotary motor 30 kW or greater), and then $N_2$ gas was supplied to the reactor at a flow rate of 150L min$^{-1}$, and stirring was carried out at 250 rpm while a temperature of the reactor was maintained at 50°C. The prepared metal solution, 20 M concentration of ammonia solution ($NH_4OH$, Daejung Chemicals & Metals Co., Ltd.), and 6 M concentration of sodium hydroxide solution containing boron (NaOH, Daejung Chemicals & Metals Co., Ltd.) were continuously input to the co-precipitation reactor for 20 hours at 40L hr$^{-1}$, 4.5L hr$^{-1}$, and 25L hr$^{-1}$, respectively. The pH in the co-precipitation reactor was maintained at 10 to 12, and the co-precipitation reaction was carried out to prepare a metal complex hydroxide.

The metal complex hydroxide was filtered to select only a solid phase material, and the selected solid phase material was washed several times with distilled water and dried in a 110°C vacuum dryer for 8 hours to prepare the metal complex hydroxide in a powder form. After mixing the metal complex hydroxide in the powder form and a lithium hydroxide (LiOH) with each other at a molar ratio of (Ni+Co+Mn):Li = 1:1.01, the mixture was heated at a temperature increase rate of 2°C/min$^{-1}$ and was maintained at 450°C for 5 hours to perform preliminary calcination. Subsequently, main calcination was performed at the calcination temperatures listed in Table 9 for 10 hours to prepare positive electrode active material powder, which is represented in Table 9.

Preparation Example 26 (Al2(t/s)-NCM900505)

An aqueous solution of nickel sulfate ($NiSO_4 6H_2O$, Daejung Chemicals & Metals Co., Ltd.), an aqueous solution of cobalt sulfate ($CoSO_4 7H_2O$, Daejung Chemicals & Metals Co., Ltd.), and an aqueous solution of manganese sulfate ($MnSO_4 H_2O$, Daejung Chemicals & Metals Co., Ltd.) were mixed so that the molar ratio of nickel (Ni), cobalt (Co), and manganese (Mn) was 90:5:5, to prepare a metal solution having a concentration of 2.5 M.

500 liters of distilled water was put into a co-precipitation reactor (capacity 2,000L, and an output of a rotary motor 30 kW or greater), and then $N_2$ gas was supplied to the reactor at a flow rate of 150L min$^{-1}$, and stirring was carried out at 250 rpm while a temperature of the reactor was maintained at 50°C. The prepared metal solution, 20 M concentration of ammonia solution ($NH_4OH$, Daejung Chemicals & Metals Co., Ltd.), and 6 M concentration of sodium hydroxide solution containing boron (NaOH, Daejung Chemicals & Metals Co., Ltd.) were continuously input to the co-precipitation reactor for 20 hours at 40L hr$^{-1}$, 4.5L hr$^{-1}$, and 25L hr$^{-1}$, respectively. The pH in the co-precipitation reactor was maintained at 10 to 12, and the co-precipitation reaction was carried out to prepare a metal complex hydroxide.

The metal complex hydroxide was filtered to select only a solid phase material, and the selected solid phase material was washed several times with distilled water and dried in a 110°C vacuum dryer for 8 hours to prepare the metal complex hydroxide in a powder form. After mixing the metal complex hydroxide in the powder form and a lithium hydroxide (LiOH) with each other at a molar ratio of (Ni+Co+Mn):Li = 1:1.01, the mixture was heated at a temperature increase rate of 2°C/min$^{-1}$ and was maintained at a primary calcination temperature of 500°C listed in Table 8 for 3 hours to perform preliminary calcination. The prepared preliminary calcined material was obtained and mixed with a dopant $Al(OH)_3$ (Aldrich, 3N) at a molar ratio of (Ni+Co+Mn):Al = 0.98:0.02, heated at a temperature increase rate of 2°C min$^{-1}$, and then subjected to a 10-hour main calcination at a secondary calcination temperature of 750°C shown in Table 8, to prepare positive electrode active material powder, which is represented in Table 8.

Preparation Example 27 (Al2(t/s)-NCM900505)

The metal complex hydroxide in the powder form used in the preparation of Preparation Example 26 (Al2(t/s)-NCM900505) was used. After mixing the metal complex hydroxide and a lithium hydroxide (LiOH) with each other at a molar ratio of (Ni+Co+Mn):Li = 1:1.01, the mixture was heated at a temperature increase rate of 2°C/min$^{-1}$ and was maintained at a primary calcination temperature of 500°C listed in Table 8 for 3 hours to perform preliminary calcination. The prepared preliminary calcined material was obtained and mixed with a dopant Al(OH)$_3$ (Aldrich, 3N) at a molar ratio of (Ni+Co+Mn):Al = 0.97:0.03, heated at a temperature increase rate of 2°C min$^{-1}$, and then subjected to a 10-hour main calcination at a secondary calcination temperature of 750°C shown in Table 8, to prepare positive electrode active material powder, which is represented in Table 8.

[Table 8]

| Preparation Example | Positive electrode active material powder | Precursor (molar ratio) | Doping (mol%) | Doping method | Calcination temperature (°C) |
|---|---|---|---|---|---|
| Preparation Example 25 | NCM880705 | Ni:Co:Mn (88:7:5) | - | - | 750 |
| Preparation Example 26 | A12(t/s)-NCM900505 | Ni:Co:Mn (90:5:5) | Al (2) | Al : dry method, two step | 500/750 |
| Preparation Example 27 | A13(t/s)-NCM900505 | Ni:Co:Mn (90:5:5) | Al (3) | Al : dry method, two step | 500/750 |

Preparation Example 28 (Ti1(t/s)-NCM900505)

The metal complex hydroxide in the powder form used in the preparation of Preparation Example 26 (Al2(t/s)-NCM900505) was used. After mixing the metal complex hydroxide and a lithium hydroxide (LiOH) with each other at a molar ratio of (Ni+Co+Mn):Li = 1:1.01, the mixture was heated at a temperature increase rate of 2°C/min$^{-1}$ and was maintained at a primary calcination temperature of 520°C listed in Table 9 for 3 hours to perform preliminary calcination. The prepared preliminary calcined material was obtained and mixed with a dopant TiO$_2$ (Aldrich, 3N) at a molar ratio of (Ni+Co+Mn):Ti = 0.99:0.01, heated at a temperature increase rate of 2°C min$^{-1}$, and then subjected to 10-hour main calcination at a secondary calcination temperature of 750°C shown in Table 9, to prepare positive electrode active material powder, which is represented in Table 9.

Preparation Example 29 (Ti2(t/s)-NCM900505)

The metal complex hydroxide in the powder form used in the preparation of Preparation Example 26 (Al2(t/s)-NCM900505) was used. After mixing the metal complex hydroxide and a lithium hydroxide (LiOH) with each other at a molar ratio of (Ni+Co+Mn):Li = 1:1.01, the mixture was heated at a temperature increase rate of 2°C/min$^{-1}$ and was maintained at a primary calcination temperature of 520°C listed in Table 9 for 3 hours to perform preliminary calcination. The prepared preliminary calcined material was obtained and mixed with a dopant TiO$_2$ (Aldrich, 3N) at a molar ratio of (Ni+Co+Mn):Ti = 0.98:0.02, heated at a temperature increase rate of 2°C min$^{-1}$, and then subjected to 10-hour main calcination at a secondary calcination temperature of 750°C shown in Table 9, to prepare positive electrode active material powder, which is represented in Table 9.

[Table 9]

| Preparation Example | Positive electrode active material powder | Precursor (molar ratio) | Doping (mol%) | Doping method | Calcination temperature (°C) |
|---|---|---|---|---|---|
| Preparation Example 25 | NCM880705 | Ni:Co:Mn (88:7:5) | - | - | 750 |

(continued)

| Preparation Example | Positive electrode active material powder | Precursor (molar ratio) | Doping (mol%) | Doping method | Calcination temperature (°C) |
|---|---|---|---|---|---|
| Preparation Example 28 | Ti1(t/s)-NCM900505 | Ni:Co:Mn (90:5:5) | Ti (1) | Ti : dry method, two step | 520/750 |
| Preparation Example 29 | Ti2(t/s)-NCM900505 | Ni:Co:Mn (90:5:5) | Ti (2) | Ti : dry method, two step | 520/750 |

5. Poly material_doping

Preparation Example 30 (NCM622)

An aqueous solution of nickel sulfate ($NiSO_4 6H_2O$, Daejung Chemicals & Metals Co., Ltd.), an aqueous solution of cobalt sulfate ($CoSO_4 7H_2O$, Daejung Chemicals & Metals Co., Ltd.), and an aqueous solution of manganese sulfate ($MnSO_4 H_2O$, Daejung Chemicals & Metals Co., Ltd.) were mixed so that the molar ratio of nickel (Ni), cobalt (Co), and manganese (Mn) was 60:20:20, to prepare a metal solution having a concentration of 2.5 M.

500 liters of distilled water was put into a co-precipitation reactor (capacity 2,000L, and an output of a rotary motor 30 kW or greater), and then $N_2$ gas was supplied to the reactor at a flow rate of 150L $min^{-1}$, and stirring was carried out at 250 rpm while a temperature of the reactor was maintained at 50°C. The prepared metal solution, 20 M concentration of ammonia solution ($NH_4OH$, Daejung Chemicals & Metals Co., Ltd.), and 6 M concentration of sodium hydroxide solution containing boron (NaOH, Daejung Chemicals & Metals Co., Ltd.) were continuously input to the co-precipitation reactor for 20 hours at 40L $hr^{-1}$, 4.5L $hr^{-1}$, and 25L $hr^{-1}$, respectively. The pH in the co-precipitation reactor was maintained at 10 to 12, and the co-precipitation reaction was carried out to prepare a metal complex hydroxide.

The metal complex hydroxide was filtered to select only a solid phase material, and the selected solid phase material was washed several times with distilled water and dried in a 110°C vacuum dryer for 12 hours to prepare the metal complex hydroxide in a powder form. After mixing the metal complex hydroxide in the powder form and a lithium hydroxide (LiOH) with each other at a molar ratio of (Ni+Co+Mn):Li = 1:1.01, the mixture was heated at a temperature increase rate of 2°C/$min^{-1}$ and was maintained at 450°C for 5 hours to perform preliminary calcination. Subsequently, main calcination was performed at the calcination temperatures listed in Table 10 for 10 hours to prepare positive electrode active material powder, which is represented in Table 10.

Preparation Example 31 (W1-NCM622)

A metal complex hydroxide in the powder form prepared by the same method as Preparation Example 30 (NCM622) was used. After mixing the metal complex hydroxide, and a lithium hydroxide (LiOH) and a dopant $WO_3$ (Aldrich, 3N) with each other at a molar ratio of (Ni+Co+Mn):W:Al = 0.99:0.01:1.01, the mixture was heated at a temperature increase rate of 2°C/$min^{-1}$ and was maintained at 450°C for 5 hours to perform preliminary calcination. Subsequently, main calcination was performed at the calcination temperatures listed in Table 10 for 10 hours to prepare positive electrode active material powder, which is represented in Table 10.

[Table 10]

| Preparation Example | Positive electrode active material powder | Precursor (molar ratio) | Doping (mol%) | Doping method | Calcination temperature (°C) |
|---|---|---|---|---|---|
| Preparation Example 29 | NCM622 | Ni:Co:Mn (6:2:2) | - | - | 850 |
| Preparation Example 30 | W1-NCM622 | Ni:Co:Mn (6:2:2) | W (1) | W: dry method | 850 |

Fabricate lithium secondary battery

1. Fabricate half-cell and lithium secondary battery (full cell) by using non-aqueous electrolyte

Half-cells and full-cells were fabricated by using the positive electrode active materials and non-aqueous electrolytes according to Preparation Example 1 to Preparation Example 30.

The positive electrode active material in the powder form according to the aforementioned Preparation Example, poly(vinylidene fluoride), and carbon black were uniformly mixed in a weight ratio of 90:4.5:5.5, respectively, and added to 0.5 g of N-methyl pyrrolidone to prepare a positive electrode slurry. The prepared positive electrode slurry was coated on an aluminum foil, roll-pressed, and vacuum dried to produce a positive electrode.

When the produced positive electrode used as a positive electrode of a half cell, a loading level of the positive electrode active material was 5 mg/cm$^2$ (which means that weight of the positive electrode active material is 5 mg when the aluminum foil coated with the positive electrode active material is sampled in 1 cm$^2$ squares), and when the produced positive electrode used as a positive electrode of a full cell, a loading level of the positive electrode active material was 10 mg/cm$^2$. Ethylene carbonate and ethyl methyl carbonate (EC:EMC = 3:7 v/v) were used as an electrolyte, 2 wt% vinylene carbonate (VC) and 1.2 mol/L LiPF$_6$ were used as lithium salt.

The half-cell was fabricated as a 2032-coin type half-cell (or coin cell) using Li as a negative electrode. The full cell was fabricated by using graphite as a negative electrode, with an N/P ratio of 1.15 to 1.20.

2. Fabricate all-solid-state battery (half-cells) by using all-solid-state electrolyte

Full cells were fabricated by using the positive electrode active materials and the all-solid-state electrolytes according to Preparation Example 10 or Preparation Example 12.

Positive electrode active material mixtures were prepared by dry mixing the positive electrode active material in the power form according to the foregoing Preparation Examples, solid electrolyte (Li$_6$PS$_5$Cl) powder, and conductive carbon (super C) powder in a weight ratio of 70:30:3 by using a mortar and pestle. A counter electrode (negative electrode) was made of partially lithiated indium (nominal composition Li0.5In) or lithium metal foil (20 μm). Li$_{0.5}$In was prepared by mixing Li (FMC Lithium corp.) and In (Sigma-Aldrich, 99.99%) powder. A 13 mm diameter all-solid-state battery consisting of a Ti rod current collector and a polyaryletheretherketone (PEEK) mold was fabricated as described below. First, 150 mg of solid electrolyte powder was pelletized in a PEEK mold to form a solid electrolyte layer. Subsequently, the positive electrode active material mixture was coated onto one surface of the solid electrolyte Li$_6$PS$_5$Cl) layer, and the counter electrode (Li$_{0.5}$In) was coated onto the other surface of the solid electrolyte layer to fabricate an assembly. The fabricated assembly was compressed to 370 MPa. The loading level of the positive electrode active material was 11.3 mg/mL. The electrochemical characteristics of the all-solid-state battery was evaluated in one cycle at 0.1 C and 100 cycles at 0.5 C in a voltage range of 2.38 to 3.68 V at 30°C.

Physical characteristic and electrochemical characteristic evaluation method

1. Identify capacity and cycle characteristic using half-cell and full-cell

The fabricated half-cell was charged to 4.3V and discharged to 2.7V with a constant current of 0.1C and 0.5C (1C is 180 mA/g) at 30°C and was subjected to 100 cycles under the same conditions as the charge and discharge test to check the capacity retention (hereafter, 2.7V to 4.3V).

2. Observe the microstructure of the positive electrode active material

The microstructure of the positive electrode active material according to the Preparation Example was analyzed by scanning electron microscope (SEM), X-ray diffraction (XRD), and transmission electron microscopy (TEM).

3. Observe rocksalt structure (Fm3m) and layered structure (R-3m) within primary particle

The rocksalt structure (Fm3m) and layered structure (R-3m) of the positive electrode active material according to the Preparation Example was observed by using Transmission Electron Microscopy (TEM). As measurement samples for the positive electrode active material according to each Preparation Example, the primary particle protruding from the outermost surface of the secondary particle of the positive electrode active material, and the primary particle located in the interior of the secondary particle were selected, and for the surface portion and the interior of each selected primary particle, the rocksalt structure and the layered structure were observed by Selected Area Electron Diffraction (SAED) patterns and High-Resolution Transmission Electron Microscopy (HR-TEM). The SAED pattern is used to compare intensities for each crystal structure, while HR-TEM provides images that allow for atomic-unit identification of the mix of the rocksalt structure and the layered structure.

After the SAED pattern, which is the result of analyzing the crystal structure of the secondary particle and the primary particle of the positive electrode active material, with the GATAN program, the intensity of the (0-11), (0-14), (006), and (003) reflections of the SAED pattern was identified in a graph by using the profile (draw a line profile) function. The intensity of each of the (0-11), (0-14), (006), and (003) reflections was compared numerically by comparing the maximum height of the peak for each refelction in each graph.

4. Evaluation of number density of primary particle

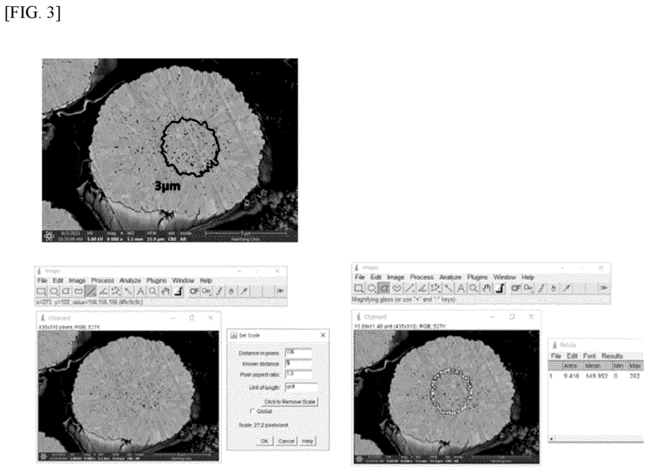

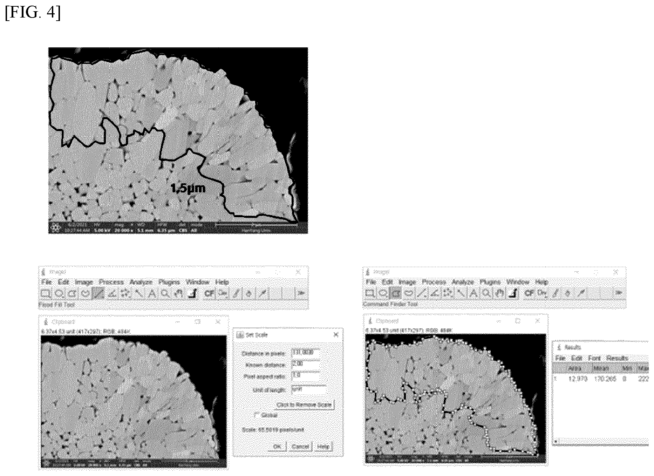

FIG. 3 is a diagram illustrating a method of measuring the number density of primary particles in a core portion of the positive electrode active material according to the exemplary embodiment of the present invention. FIG. 4 is a diagram illustrating a method of measuring the number density of primary particles in a surface portion of the positive electrode active material according to the exemplary embodiment of the present invention.

The number density of primary particles was identified for the positive electrode active material according to the Preparation Example. For each sample, a scanning electron microscope (SEM) was used to photograph the shape of the positive electrode active material particles to obtain a sample image. The sample image was compartmentalized along the grain boundary of the region to be measured for number density by using Polygonal selection of ImageJ program. In this case, the region was compartmentalized in to a core portion and a surface portion, and the core portion is the region corresponding to the diameter of 30% of the average diameter of the particle based on the center of the particle, and the surface portion is the region corresponding to the thickness of (30% * 0.5) of the average diameter of the particle based on the outermost surface of the particle. For Preparation Example, when a particle has an average diameter of 10 $\mu$m, the core portion is a region an average diameter of 3 $\mu$m centered on the center of the particle, and the surface portion is a region with a thickness of 1.5 $\mu$m from the outermost surface of the particle to an interior in a direction toward the center of the particle. In another Preparation Example, when a particle has an average diameter of 14 $\mu$m, the core portion is a region with an average diameter of 4.2 $\mu$m centered on the center of the particle, and the surface portion is a region with a thickness of 2.1 $\mu$m from the outermost surface of the particle to an interior in a direction toward the center of the particle. After compartmentalizing the areas of the core portion and the surface portion, the number of primary particles included within the area was measured and divided by the area of the area to measure the number density, as shown in the following equation.

(Equation)

$$\text{Number density } [ea/\mu m^2] = \text{Number of primary particles / area of region}$$

where the number of primary particles is measured

5. Evaluate hydraulic radius of positive electrode active material

For the positive electrode active material according to the Preparation Example, the hydraulic radius of the primary particle in the surface portion of the positive electrode active material was identified. For each sample, a scanning electron microscope (SEM) was used to photograph the shape of the positive electrode active material particles to obtain a sample image. The sample image was compartmentalized along the grain boundary of the primary particle to be measured for hydraulic radius of the primary particle by using Polygonal selection of ImageJ program. In this case, the surface portion is the region corresponding to a thickness of (30% * 0.5) for the average diameter of the secondary particle based on the outermost surface of the secondary particle. For Preparation Example, when the particle has an average diameter of 10 $\mu$m, the surface portion is a region corresponding to a thickness of 1.5 $\mu$m from the outermost surface of the secondary particle to an interior in a direction toward the center of the secondary particle. For another Preparation Example, when the particle has an average diameter of 14 $\mu$m, the surface portion is a region corresponding to a thickness of 2.1 $\mu$m from the outermost surface of the secondary particle to an interior in a direction toward the center of the secondary particle. After the region of the primary particle was compartmentalized in each of the core portion and the surface portion of the secondary particle, the area and the circumference of the primary particle were measured, and the area was divided by the circumference perimeter to measure the hydraulic radius of the primary particle, as shown in the following equation.

(Equation)

$$\text{Hydraulic radius of primary particle } (\mu m) = \text{Area of cross-section of primary particle } (\mu m^2) \,/\, \text{Length of circumference of cross-section of primary particle } (\mu m)$$

6. Evaluate particle strength of positive electrode active material

Particle strength was evaluated for the positive electrode active material according to the Preparation Example. The secondary particle of the positive electrode active material to be analyzed was observed under a microscope by using the Micro Compression Testing Machine (MCT, MCT-510), and the particle was compression tested by using a 50 $\mu$m diameter cylindrical indenter. At this time, the compression test was performed under the conditions of Test force: 100 mN, Displacement scale: 100 $\mu$m, to evaluate particle strength. During the test, the experiment proceeds through a plastic deformation in which the secondary particle of the positive electrode active material was compressed and deformed, and then the particle was fractured. The deformation length of the secondary particle of the positive electrode active material in the plastic deformation was measured. A compression strain of the particle was measured by dividing the particle deformation length by the diameter of the secondary particle, as shown in the equation below.

(Equation 1)

$$\text{Particle compression strain } (\%) = (\text{Secondary particle deformation length} \,/\, \text{secondary particle diameter}) * 100$$

In Equation 1, the secondary particle deformation length is the amount the secondary particle is compressed before the secondary particle is fractured, and the secondary particle diameter is the average diameter of the cross-section through the core portion of the secondary particle.

7. Evaluate dissolution of transition metal of the positive electrode active material

For the positive electrode active material according to the Preparation Example, the cell charged to 4.3 V was dismantled to recover only the positive electrode active material, and the positive electrode active material was added to 5 mL of electrolyte (1.2M $LiPF_6$ in EC:EMC=3:7 v/v + 2wt% VC) in a PTFE bottle and kept at room temperature for 10 days. Subsequently, the solid phase material removed and the electrolyte was analyzed by ICP-OES, to identify the dissolution amount of transition metal contained in the electrolyte.

Evaluation result of positive electrode active material using non-aqueous electrolyte

1. Co-doping_wet and dry doping

In Preparation Example 1 to Preparation Example 4, the results of wet doping, dry doping, and co-doping including both wet doping and dry doping was identified by using titanium (Ti) and aluminum (Al) as doping elements, for the positive electrode active materials containing nickel of a content of 96 mol%.

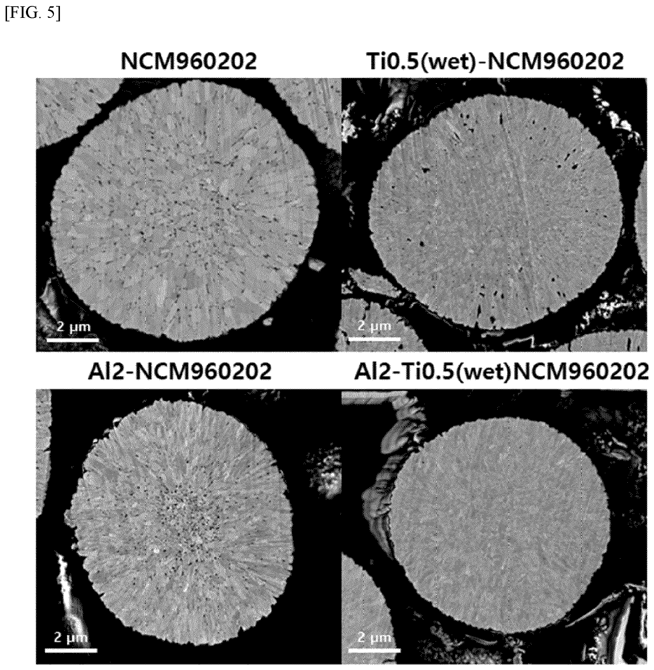

FIG. 5 is an SEM image of the positive electrode active materials of Preparation Example 1 to Preparation Example 4. Table 11 shows the results of measuring the number density of the secondary particle and the hydraulic radius of the primary particle in the positive electrode active materials of Preparation Example 1 to Preparation Example 4. The number density in Table 9 is the value obtained by dividing number of primary particles located on the surface portion of the positive electrode material by the area. Table 12 shows the result of checking the electrochemical characteristics identified by using half-cells fabricated by using Preparation Example 1 to Preparation Example 4, and Table 13 shows the result of checking the rate-specific characteristic of Preparation Example 1 to Preparation Example 4.

[Table 11]

| Preparation Example | Positive electrode active material powder | Number density (ea/ $\mu$m$^2$) | Hydraulic radius ($\mu$m) |
|---|---|---|---|
| Preparation Example 1 | NCM960202 | 7.4 | 0.0859 |
| Preparation Example 2 | Ti0.5(wet)-NCM960202 | 15.9 | 0.0438 |
| Preparation Example 3 | A12-NCM960202 | 13.7 | 0.0368 |
| Preparation Example 4 | A12-Ti0.5(wet)-NCM960202 | 19.7 | 0.0287 |

[Table 12]

| Preparation Example | Positive electrode active material powder | 0.1 C Disch. Capa (mAh/g) | 1st Efficiency | 0.2 C Disch. Capa (mAh/g) | 0.2C/ 0.1C | 0.5 C Disch. Capa (mAh/g) | 0.5C/ 0.1C | Cycle | 0.5C Cycle Retention |
|---|---|---|---|---|---|---|---|---|---|
| Preparation Example 1 | NCM9602 02 | 248.7 | 97.3% | 240.9 | 96.9% | 231.5 | 93.1 % | 100 | 74.7% |
| Preparation Example 2 | Ti0.5(wet) - NCM9602 02 | 246.3 | 97.4% | 238.3 | 96.7% | 227.2 | 92.2 % | 100 | 85.9% |
| Preparation Example 3 | A12-NCM9602 02 | 241.2 | 98.3% | 231.8 | 96.1% | 221 | 91.6 % | 100 | 87.2% |
| Preparation Example 4 | A12-Ti0.5(wet)NCM9602 02 | 234.5 | 96.8% | 229.3 | 97.8% | 216.8 | 92.5 % | 100 | 92.4% |

[Table 13]

| Preparation Example | Positive electrode active material powder | 0.2C Capacity (mAh/g) | 0.5C Capacity (mAh/g) (0.5C/0.2C) | 1C Capacity (mAh/g) (1C/0.2C) | 2C Capacity (mAh/g) (2C/0.2C) | 5C Capacity (mAh/g) (5C/0.2C) | 10C Capacity (mAh/g) (10C/0.2C) |
|---|---|---|---|---|---|---|---|
| Preparation Example 1 | NCM960202 | 240.8 | 233.9 (97.6%) | 226.0 (94.3%) | 212.5 (88.6%) | 190.2 (79.3%) | 176.9 (73.8%) |
| Preparation Example 2 | Ti0.5 (wet)-NCM960202 | 239.4 | 234.9 (98.1%) | 229.4 (95.8%) | 220.4 (92.1%) | 202.9 (84.8%) | 187.2 (782%) |
| Preparation Example 3 | A12-NCM960202 | 227.7 | 225.3 (98.9%) | 218.7 (96.0%) | 210.8 (92.6%) | 194.8 (85.5%) | 176.9 (777%) |
| Preparation Example 4 | A12-Ti0.5 (wet)-NCM960202 | 229.3 | 225.8 (98.5%) | 222.2 (96.9%) | 216.9 (94.6%) | 206.2 (90.0%) | 192.1 (83.8%) |

Referring to FIG. 5 and Table 11, it could be demonstrated that Preparation Example 1, without titanium or aluminum doping, has the lowest number density and the largest hydraulic radius. Furthermore, when comparing Preparation Example 2 and Preparation Example 3, it could be demonstrated that the number density and hydraulic radius are similar for Preparation Example 2 with wet doping of titanium and Preparation Example 3 with dry doping of aluminum. Furthermore, when comparing Preparation Example 4 together, it could be demonstrated that Preparation Example 4, with co-doping including dry coping of aluminum and wet doping of titanium, has the highest number density and smallest hydrodynamic radius.

The positive electrode active material according to the present exemplary embodiment includes a plurality of secondary particles formed by aggregation of a plurality of primary particles, and the smaller the hydraulic radius of the primary particle, the smaller the total area. Furthermore, in the positive electrode active material, as the number density of the secondary particle is higher, the primary particles are denser. The positive electrode active material according to the present exemplary embodiment has a low hydraulic radius and a high number density, so that the volume of the positive electrode active material is repeatedly expanded and contracted during the charge and discharge cycle, and the irreversible volume change caused thereby is reduced, thereby improving the cycle characteristics. In addition, the higher the number density, the more the positive electrode active material may prevent side reactions with the electrolyte in the surface of the secondary particle, which may further improve the electrochemical characteristics.

Referring to Table 12, the 0.5C retention results after 100 cycles show that Preparation Example 4 has the best result, followed by Preparation Example 2 and Preparation Example 3 with similar results, and Preparation Example 1 with the worst result.

Referring to Table 13, it could be demonstrated that the rate-specific characteristics were superior in the cases where the doping, such as the wet doping or the dry doping, was performed at 5 C and 10 C, and were best in Preparation Example 4 in which both the wet doping and the dry doping were performed.

In the positive electrode active material according to the present exemplary embodiment, the inclusion of the doping element by the novel preparation method may reduce the hydraulic radius and simultaneously increase the number density, thereby improving the structural morphology stability of the positive electrode active material. Accordingly, the positive electrode active material according to the present exemplary embodiment exhibits improved cycling characteristics, especially high capacity characteristics at high rates, and it could be demonstrated that the initial capacity remained almost unchanged with little capacity degradation even after 100 cycles.

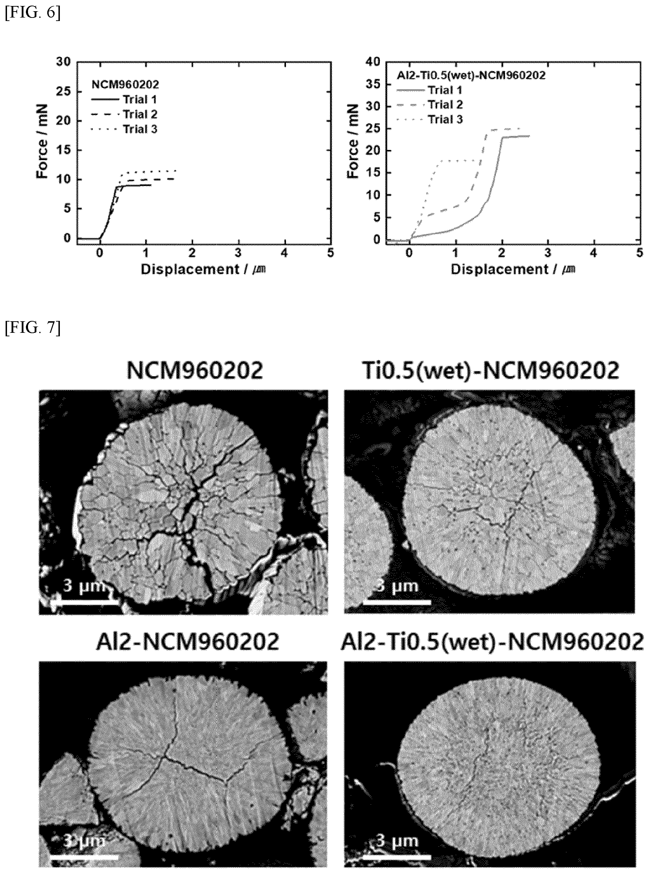

FIG. 6 is a graph confirming the particle strength of the positive electrode active materials of Preparation Example 1 to Preparation Example 4. FIG. 7 is an SEM image of the positive electrode active materials of Preparation Example 1 to Preparation Example 4 after 100 cycles. Table 14 shows the results of measuring the particle strength for Preparation Example 1 to Preparation Example 4, and Table 15 shows the particle compression strain during the particle plastic deformation for Preparation Example 1 and 4. Table 16 shows the number density results after 100 cycles for Preparation Example 1 and 4.

[Table 14]

| Preparation Example | Positive electrode active material powder | Particle strength (St) (MPa) | | | | | |
|---|---|---|---|---|---|---|---|
| | | Minimum value | First quartile | Second quartile | Third quartile | Maximum value | Average value |
| Preparation Example 1 | NCM96020 2 | 88.2 | 109.2 | 129.2 | 134.8 | 150.8 | 124 |
| Preparation Example 2 | Ti0.5 (wet)-NCM96020 2 | 101.5 | 130.5 | 147.9 | 156.7 | 186.4 | 143.3 |
| Preparation Example 3 | A12-NCM960202 | 110.2 | 154.7 | 165.3 | 180.1 | 182.2 | 161.1 |
| Preparation Example 4 | A12-Ti0.5 (wet)-NCM96020 2 | 157.2 | 183 | 208.5 | 217.2 | 243.2 | 202.4 |

Referring to Table 14, it could be demonstrated that Preparation Example 1 had a larger difference between the minimum value and the maximum value of particle strength than Preparation Example 2 or Preparation Example 3, and also had the smallest average value of the particle strength. In Table 14, the first quartile represents 25% of the total data, the second quartile represents 50% of the total data, and the third quartile represents 75% of the total data.

[Table 15]

| Preparation Example | Positive electrode active material powder | Trial 1 | | Trial 2 | | Trial 3 | |
|---|---|---|---|---|---|---|---|
| | | Plastic deformation length ($\mu$m) | Particle compression strain (%) | Plastic deformation length ($\mu$m) | Particle compression strain (%) | Plastic deformation length ($\mu$m) | Particle compression strain (%) |
| Preparation Example 1 | NCM960202 | 0.354 $\mu$m | 3.54% | 0.537 $\mu$m | 5.37% | 0.488 $\mu$m | 4.88% |
| Preparation Example 4 | A12-Ti0.5 (wet)-NCM960202 | 2008 $\mu$m | 20.08% | 1.688 $\mu$m | 16.88% | 0.623 $\mu$m | 6.23% |

Referring to FIG. 6 and Table 15, the extent to which the secondary particle is deformed during pressing the secondary particle of the positive electrode positive electrode active materials in Preparation Example 1 and Preparation Example 4 was identified. Reproducibility was identified by conducting first (Trial 1), second (Trial 2), and third (Trial 3) trials using different samples for Preparation Example 1 and Preparation Example 4, respectively. In FIG. 6, the part that slopes to the horizontal axis is the portion where the secondary particle is deformed, and the part that flattens out is the portion where the secondary particle is fractured.

Comparing Preparation Example 1 and Preparation Example 4, it could be demonstrated that in Preparation Example 1, the secondary particle was deformed and then fractured at a pressure of approximately 10 mN, while in Preparation Example 4, the secondary particle was deformed and then fractured at 15 mN and more and approximately 25 mN. Furthermore, it was seen that in Preparation Example 1, the secondary particle was fractured at compression strains of 6% or less for all the first, second, and third times, and in Preparation Example 4, the secondary particle was fractured at the compression strain of 6% or more.

Compared to Preparation Example 1, it could be seen that in Preparation Example 4, the secondary particle was deformed without being fractured under high force compression, which is attributed to the improved ductility of the secondary particle, resulting in improved fracture toughness. In other words, it could be seen that the secondary particle of Preparation Example 4 had high fracture strength in the positive electrode active material according to the present exemplary embodiment, and therefore, when the positive electrode for the secondary battery is fabricated by using the positive electrode active material, the positive electrode active material is maintained without being fractured even by pressing at high pressure. Therefore, the compounding density of the positive electrode active material may be improved and thus, specific capacity may be improved.

In addition, in the case of Preparation Example 4, the mechanical strength of the particle itself was increased, so it could be seen that little side reactions occurred and the shape of the secondary particle was maintained without deformation even after the performance of the long-term cycle.

[Table 16]

| Preparation Example | Positive electrode active material powder | Number density (ea/$\mu m2$) | Number density change rate (%) | Microcrack (%) |
|---|---|---|---|---|
| Preparation Example 1 | NCM960202 | 5.2 | 16.2% | 16.7% |
| Preparation Example 2 | Ti0.5(wet)-NCM960202 | 15.7 | 1.3% | 7.2% |
| Preparation Example 3 | A12-NCM960202 | 13.4 | 2.2% | 9.4% |
| Preparation Example 4 | A12-Ti0.5(wet)-NCM960202 | 19.6 | 0.5% | 5.5% |

Referring to FIG. 7 and Table 16, it could be demonstrated that in Preparation Example 1, a large area of microcracks extending up to the surface portion in the secondary particle after 100 cycles was formed. The microcracks are the paths formed by the separation of the aggregated primary particles from each other within the secondary particle, and in particularly severe cases, the microcracks form open pores extending from the outermost surface of the secondary particle to the interior. The microcracks not only lead to structural collapse of the secondary particle, but also, even when the structure of the secondary particle is maintained, provide a path for the electrolyte to penetrate into the secondary particle, thereby inducing side reactions with the electrolyte and promoting degradation of the positive electrode active material. The microcracks are shown in the SEM image, with the area of the isolated space calculated as a ratio with respect to the total area.

As a result of performing 100 charge and discharge cycles at the same current conditions using the same electrolyte in Preparation Example 1 to Preparation Example 4, it could be demonstrated that wide microcracks were formed in Preparation Example 1. In contrast, in Preparation Example 2 and Preparation Example 3, fine microcracks were formed in the core portion of the secondary particle, but the microcracks extending inward from the surface of the secondary particle were not formed. In Preparation Example 4, it could be demonstrated that cracks were not formed at all.

In Table 14, it could be demonstrated that Preparation Example 1 has a significant decrease in the number density of the primary particles after 100 cycles, while Preparation Example 4 has almost no change. In other words, it could be demonstrated that in the case of Preparation Example 1, the number density was significantly reduced due to volume expansion and microcracks of the primary particle.

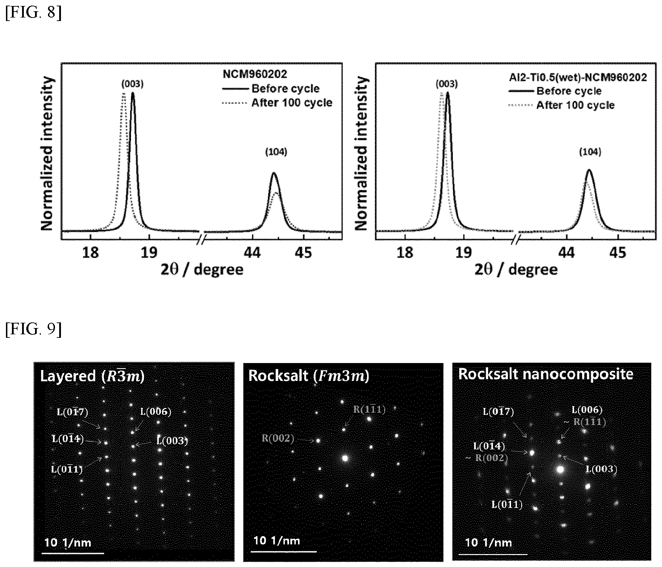

FIG. 8 is a graph showing the XRD difference after 100 cycles of the positive electrode active materials of Preparation Example 1 to Preparation Example 4. Table 15 shows the result of the change in (003) and (104) reflections in the XRD results before the cycle and after 100 cycles for the positive electrode active materials of Preparation Example 1 and Preparation Example 4.

[Table 17]

| Prepara tion Exampl e | Positive electrode active material powder | Before cycle _0 cycle | | After cycle _100 cycles | | Change comparison before and after charge/discharge | | | |
|---|---|---|---|---|---|---|---|---|---|
| | | (003) peak position (degree) | (003) peak height /(104) peak height | (003) peak position (degree) | (003) peak height /(104) peak height | (003) peak position change (degree) | (003) peak position change rate (%) | (003) peak height /(104) peak height change (degree) | (003) peak height /(104) peak height change rate (%) |
| Prepara tion Exampl e 1 | NCM960202 | 1871194 | 2.36 | 18.55438 | 3.52 | 0.157563 | 0.84% | 1.16 | 49.1% |
| Prepara tion Exampl e 4 | A12-Ti0.5 (wet)-NCM960202 | 18.72957 | 2.24 | 18.62003 | 2.74 | 0.109534 | 0.58% | 0.49 | 220% |

Referring to FIG. 8 and Table 17, after performing 100 cycles relative to before performing the cycles, Preparation Example 1 has a greater rate of change in the position of the peak on the (003) reflection than Preparation Example 4. It was also observed that the value ((003) reflection/(104)reflection) of the peak height of the (003) reflection to the peak height of the (104) reflection was smaller in Preparation Example 4 compared to Preparation Example 1. In other words, Preparation Example 4 showed a smaller change in crystal structure between before and after performing 100 cycles compared to Preparation Example 1. The rate of change in the position of the peak refers to the change in the position where the maximum height of the peak on the (003) reflection appears in the XRD analysis.

[Table 18]

| Preparation Example | Positive electrode active material | Ni ($\mu$g/L) | Co ($\mu$g/L) | Mn ($\mu$g/L) | Total ($\mu$g/L) |
|---|---|---|---|---|---|
| Preparation Example 1 | NCM960202 | 417.2 | 12.7 | 19.1 | 449 |
| Preparation Example 2 | Ti0.5(wet)-NCM960202 | 298.2 | 7.3 | 9.1 | 314.6 |
| Preparation Example 3 | A12-NCM960202 | 312.7 | 9.4 | 8.6 | 330.7 |
| Preparation Example 4 | A12-Ti0.5(wet)-NCM960202 | 227.2 | 8.9 | 4.9 | 241 |

Table 18 shows the result of checking the extent to which transition metals are dissolved in the electrolyte in the positive electrode active materials of Preparation Example 1 to Preparation Example 4. The dissolution degree of transition metals was checked by charging the positive electrode active material to 4.3 V at 0.5 C, selecting only the positive electrode active material, impregnating the selected positive electrode active material in the electrolyte, and maintaining the positive electrode active material at room temperature for 10 days. After 10 days, the amount of transition metals dissolved in the electrolyte was analyzed by ICP-OES, and the results of the analysis are represented in Table 18. As the dissolution of transition metals in the electrolyte is greater, the crystal structure of the positive electrode active material is more unstable, and the degradation of the positive electrode active material is accelerated during the cycling process.

Referring to Table 18, a comparison of Preparation Example 1 and Preparation Example 4 shows that in Preparation Example 1, two times of the amount of transition metals of Preparation Example 4 were educed. In other words, it could be demonstrated that Preparation Example 4 has a higher structural stability to the electrolyte compared to Preparation Example 1.

[Table 19]

| Preparation Example | Positive electrode active material powder | 1st eye | 20th eye | 40th eye | 60th eye | 80th eye | 100th eye |
|---|---|---|---|---|---|---|---|
| Preparation Example 1 | NCM960202 | 100 | 94.2 | 89.7 | 84.8 | 79.1 | 73.9 |
| Preparation Example 2 | Ti0.5(wet)-NCM960202 | 100 | 95.8 | 93.3 | 91.1 | 86.1 | 85 |
| Preparation Example 3 | A12-NCM960202 | 100 | 97.6 | 95.3 | 92.5 | 89.4 | 86.3 |
| Preparation Example 4 | A12-Ti0.5(wet)-NCM960202 | 100 | 98.7 | 97.2 | 95.4 | 93.5 | 91.5 |

Table 19 shows the results of H2-H3 phase transition area retention rate (%) for each cycle for Preparation Example 1 to Preparation Example 4. In each case, 1st cy is the result of one-time charge/discharge, 40th cy is the result of 40 times change/discharge, and 100th cy is the result of 100 times charge/discharge.

The H2-H3 phase transition may be seen in the charge-discharge graph as a dQ/dV graph, and during the charging process, the positive electrode active material undergoes a continuous phase transition, such as H1 (hexagonal 1) → M (monoclinic) → H2 (hexagonal 2) → H3 (hexagonal 3), where H2 → H3 has a great influence on the volume change of sudden anisotropy. In other words, the case where the H2-H3 phase transition area retention rate (%) is reduced means that a large volume change occurs, so that high strain is applied to the positive electrode active material and local stress is concentrated. That is, the case where the H2-H3 phase transition area retention rate (%) is reduced means that the positive electrode active material becomes structurally unstable, resulting in lower cycle stability and faster degradation.

It could be demonstrated that in the case of Preparation Example 1, the H2-H3 phase transition area retention rate was reduced the cycle progressed, indicating that the crystal structure was becoming unstable, and in Preparation Example 4, the H2-H3 phase transition area retention rate was maintained almost unchanged even after 100 cycles.

FIG. 9 illustrates nanocomposite structures in a layered structure, in a rocksalt structure, and in a mixture of a rocksalt structure and a layered structure using an SAED pattern, respectively.

FIG. 9 is for the purpose of illustrating a nanocomposite structure including a mixture of a rocksalt structure and a layered structure according to an exemplary embodiment of the present invention, and sequentially illustrates an image of the nanocomposite structure including the layered structure alone, an image of the nanocomposite structure including the rocksalt structure alone, and an image of the nanocomposite structure including a mixture of the rocksalt structure and the layered structure. Referring to FIG. 9, crystal planes (0-11), (0-14), (003), and (006) are characteristics seen in SAED during TEM analysis of the positive electrode active material with a layered (R-3m) crystal structure, and crystal planes (002) and (1-11) are characteristics seen in SAED during TEM analysis of the positive electrode active material with a rocksalt (Fm3m) crystal structure.

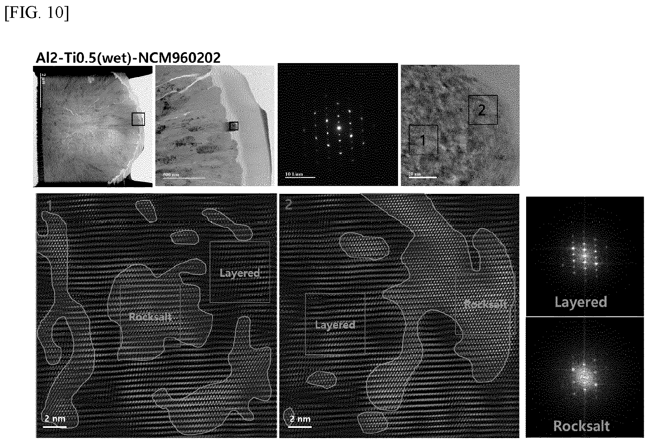

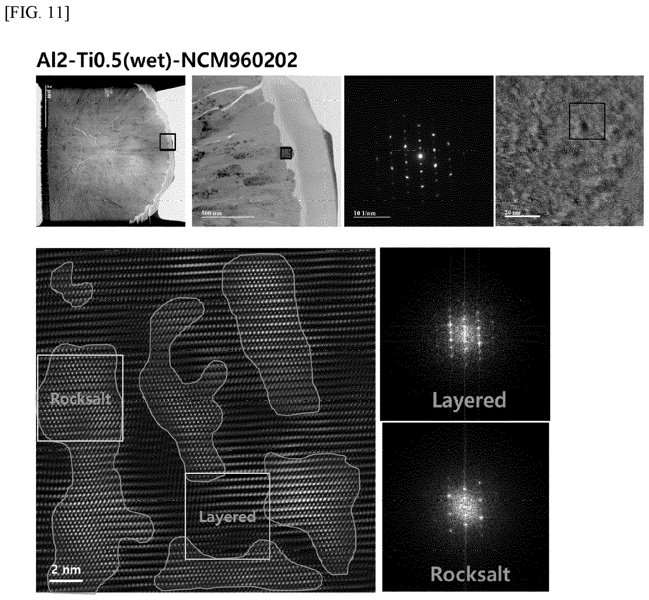

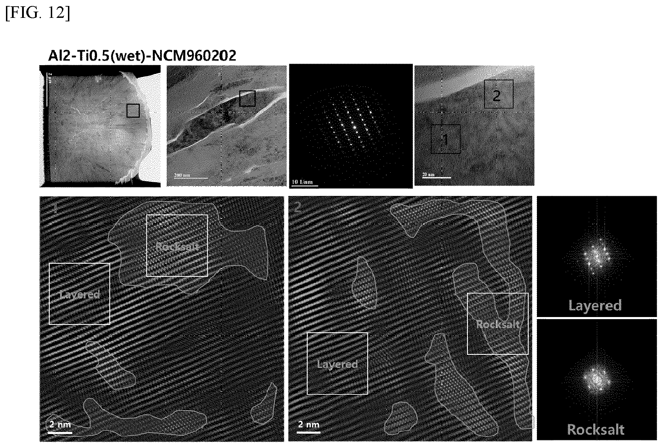

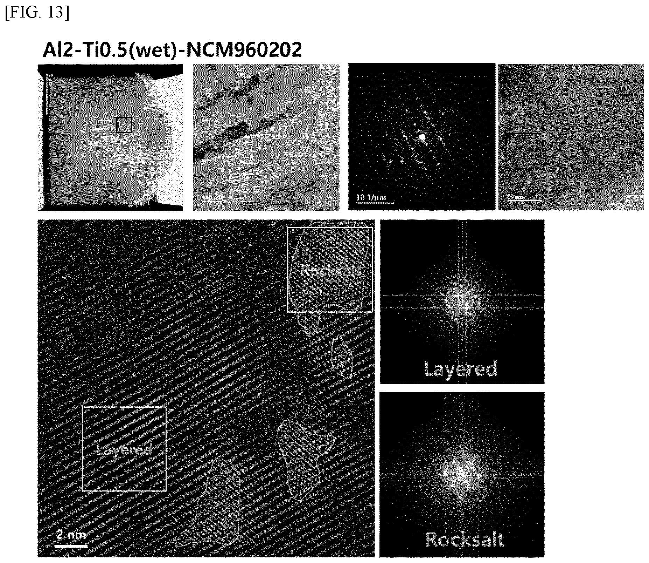

Specifically, the R(002) electron diffraction point observed in the SAED analysis appears at the same location as the L(0-14) electron diffraction point, and the R(1-11) electron diffraction point appears at the same location as the L(006) electron diffraction point. Therefore, the characteristic appearing in the SAED in TEM analysis of the nanocomposite structure with the mixture of the rocksalt structure and the layered structure is that $I_{(0-14)}$ is larger than $I_{(0-11)}$ and $I_{(006)}$ is larger than $I_{(003)}$, unlike the typical layered crystal structure or the rocksalt crystal structure. FIG. 10 is a TEM image of Preparation Example 4, and illustrates the result of observing the surface of the primary particle present in the surface of the secondary particle. FIG. 11 is a TEM image of Preparation Example 4, and illustrates the result of observing the interior of the primary particle present in the surface of the secondary particle. FIG. 12 is a TEM image of Preparation Example 4, and illustrates the result of observing the surface of the primary particle present in the interior of the secondary particle. FIG. 13 is a TEM image of Preparation Example 4, and illustrates the result of observing the interior of the primary particle present in the interior of the secondary particle.

Referring to FIG. 10, as a result of measuring the surface portion of the primary particle (the area corresponding to the outermost surface of the secondary particle) in the primary particle provided in the surface of the secondary particle in the positive electrode active material of Preparation Example 4, it was identified that the rocksalt structures and the layered structures coexisted at a nanoscale.

FIG. 11 shows the result of observing the interior of the primary particle provided in the surface of the secondary particle in the positive electrode active material of Preparation Example 4. It could be demonstrated that even in the interior of the primary particle, the rocksalt structure and the layered structure irregularly coexisted to form nanocomposite structures.

FIG. 12 shows the result of measuring the surface portion of the primary particle for the primary particle located in the interior of the secondary particle of Preparation Example 4, and it could be demonstrated that the nanocomposite structure in which rocksalt *(Fm3m)* structures and layered *(R-3m)* structures coexist as a physical mixture was formed.

FIG. 13 shows the result of measuring the interior of the primary particle for the primary particle located in the interior of the secondary particle of Preparation Example 4, and it could be demonstrated that the nanocomposite structure in which rocksalt *(Fm3m)* structures and layered *(R-3m)* structures coexist as a physical mixture was formed.

In other words, it could be demonstrated that in the primary particles, which had high structural stability described above and were provided in each of the core portion and the surface portion of the secondary particle of Preparation Example 4 according to the present exemplary embodiment, the rock salt structure and the layered structure irregularly coexisted at a nanoscale. This confirms that the primary particle includes the nanocomposite structure in which rocksalt *(Fm3m)* structures and layered *(R-3m)* structures coexist as a physical mixture both in the portion core and the surface portion of the primary particle.

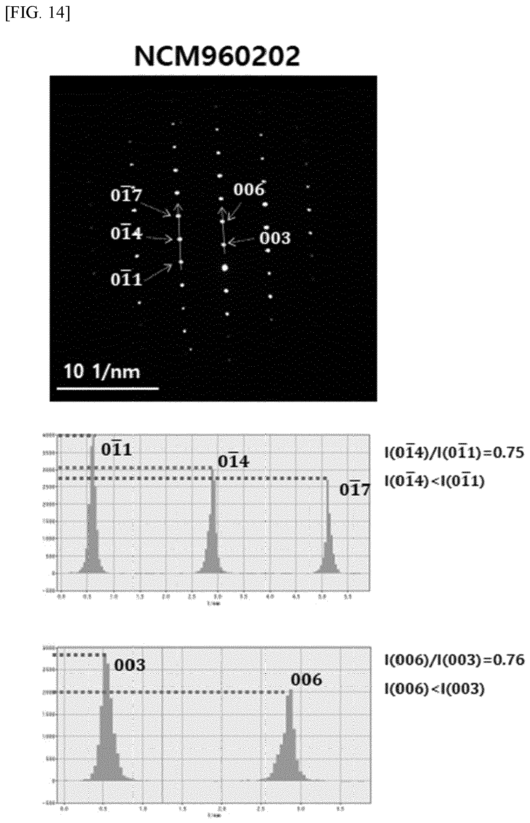

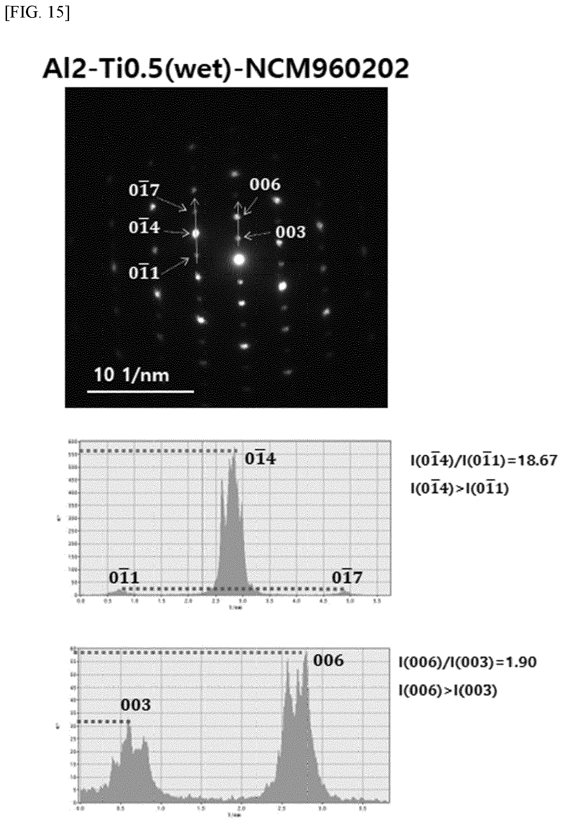

FIG. 14 is a TEM image of Preparation Example 1, and shows a result of the strength ratio of the crystal planes using SAED. FIG. 15 is a TEM image of Preparation Example 4, and illustrates a result of the strength ratio of the crystal planes using SAED.

Referring to FIGS. 14 and 15, in the case of Preparation Example 1, for the heights of the peaks of the (0-14) reflection and the (0-11) reflection, a ratio of the $I_{(0-14)}$ reflection to the $I_{(0-11)}$ reflection was approximately 0.75, and the $I_{(0-11)}$ had the value greater than the $I_{(0-14)}$. Comparing the (006) reflection to the (003) reflection, the ratio of the $I_{(006)}$ reflection to the $I_{(003)}$ reflection was 0.76, and the $I_{(003)}$ reflection was larger than the $I_{(006)}$ reflection. In Preparation Example 4, for the heights of the peaks in the (0-14) reflection and the (0-11) reflection, the ratio of the $I_{(0-14)}$ reflection to the $I_{(0-11)}$ reflection was approximately 18.67, and the $I_{(0-11)}$ was significantly smaller than $I_{(0-14)}$. Comparing the (006) reflection to the (003) reflection, the ratio of the $I_{(006)}$ reflection to the $I_{(003)}$ reflection was 1.90, and the $I_{(003)}$ reflection was smaller than the $I_{(006)}$ reflection.

In other words, it could be demonstrated that Preparation Example 1 and Preparation Example 4 represent different crystals, and in particular, in Preparation Example 4, $I_{(0-14)}$ has a very large value, and $I_{(006)}$ is larger than $I_{(003)}$. The fact that $I_{(0-14)}$ is larger than $I_{(0-11)}$ and $I_{(006)}$ is larger than $I_{(003)}$ means that the primary particle is not composed of a layered crystal structure alone, but is composed of the nanocomposite structure in which rocksalt *(Fm3m)* structures and layered *(R-3m)* structures coexist as a physical mixture.

In Preparation Example 5 to Preparation Example 9, the results of wet doping, dry doping, and codoping including both wet doping and dry doping performed on the positive electrode active material containing nickel at a content of 96 mol% by using boron (B) and niobium (Nb) as doping elements were identified. Specifically, the boron (B) was wet doped and the niobium (Nb) was dry doped.

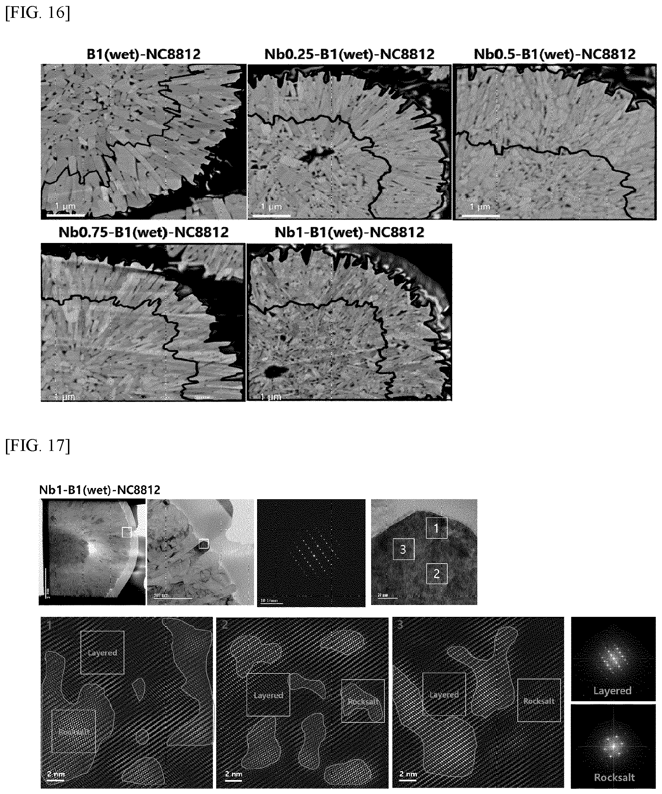

FIG. 16 is an SEM image of the positive electrode active materials of Preparation Example 5 to Preparation Example 9. Table 20 shows the results of number density and hydraulic radius for Preparation Example 5 to Preparation Example 9, and Table 21 shows the electrochemical characteristics for Preparation Example 5 to Preparation Example 9.

[Table 20]

| Preparation Example | Positive electrode active material powder | Number density (ea/$\mu$m2) | Hydraluic radius ($\mu$m) |
|---|---|---|---|
| Preparation Example 5 | B 1 (wet)-NC8812 | 9.2 | 0.067 |
| Preparation Example 6 | Nb0.25-B1(wet)-NC8812 | 13.4 | 0.0369 |
| Preparation Example 7 | Nb0.5-B1(wet)-NC8812 | 14.5 | 0.0327 |
| Preparation Example 8 | Nb0.75-B1(wet)-NC8812 | 20.2 | 0.0284 |
| Preparation Example 9 | Nb1-B1(wet)-NC8812 | 22.1 | 0.0271 |

[Table 21]

| Preparation Example | Positive electrode active material powder | 0.1 C Disch. Capa (mAh/g) | 1st Efficiency | 0.2 C Disch. Capa (mAh/g) | 0.2C/ 0.1C | 0.5 C Disch. Capa (mAh/g) | 0.5C/ 0.1C | Cycle | 0.5C Cycle Retention |
|---|---|---|---|---|---|---|---|---|---|
| Preparation Example 5 | B1(wet)-NC8812 | 235.3 | 95.9% | 230.9 | 97.9% | 221.9 | 94.1% | 100 | 89.1% |
| Preparation Example 6 | Nb0.25-B1(wet)-NC8812 | 234.5 | 96.6% | 229.2 | 97.8% | 219.6 | 93.6% | 100 | 91.5% |
| Preparation Example 7 | Nb0.5-B1(wet)-NC8812 | 232.2 | 96.4% | 227.4 | 97.9% | 217.1 | 93.5% | 100 | 94.2% |
| Preparation Example 8 | Nb0.75-B1(wet)-NC8812 | 230.8 | 95.2% | 224.9 | 97.5% | 212.4 | 92.0% | 100 | 96.6% |
| Preparation Example 9 | Nb1-B1(wet)-NC8812 | 227.3 | 94.4% | 221.5 | 97.4% | 208.3 | 91.7% | 100 | 97.3% |

Referring to FIG. 16, and Tables 20 and 21, it could be demonstrated that the number density of the positive electrode active material in which niobium (Nb) was dry doped in addition to the wet doping of boron (B) is larger than the number density of the positive electrode active material in which boron (B) was wet doped only, and the hydraulic radius of the positive electrode active material in which niobium (Nb) was dry doped in addition to the wet doping of boron (B) is smaller than the hydraulic radius of the positive electrode active material in which boron (B) was wet doped only. Further, it could be demonstrated that as the doping amount of niobium (Nb) increases while keeping the doping amount of boron (B) the same, the number density is further increased.

In other words, it could be demonstrated that when the drying doping and the wet doping were performed at the same time, even the positive electrode active material having the nickel content of 88% or more and containing no manganese exhibited the high number density and the small hydraulic radius, so that the structural stability of the positive electrode active material was improved. It was also identified that the width of the shape of the cross-section of the primary particle decreased as the content of niobium (Nb) increased.

In view of the electrochemical characteristic, it could be observed that Preparation Example 6 to Preparation Example 9, in which boron (B) and niobium (Nb) were simultaneously doped, exhibited superior characteristics compared to Preparation Example 5, in which only boron (B) was doped.

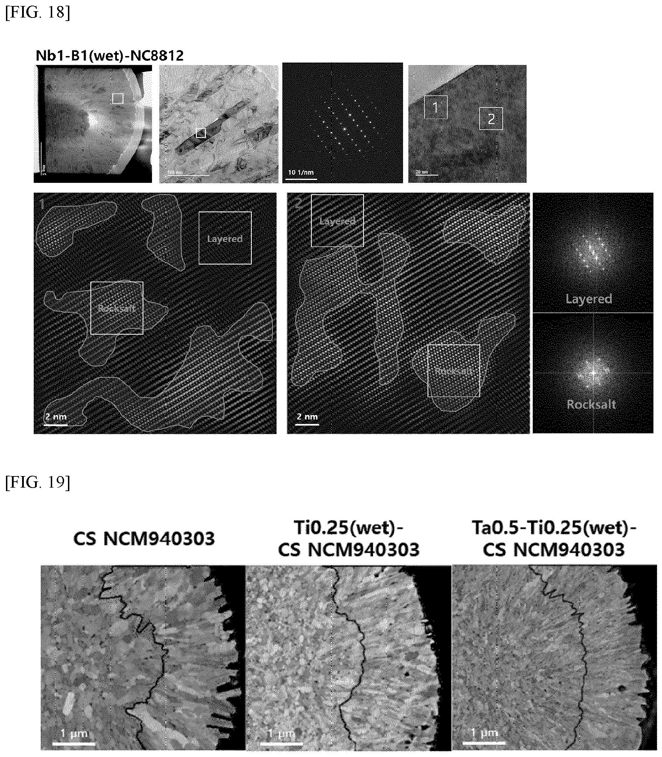

FIG. 17 is a TEM image of Preparation Example 9, and illustrates the result of observing the surface of the primary particle present in the surface of the secondary particle. FIG. 18 is a TEM image of Preparation Example 9, and illustrates the result of observing the surface of the primary particle present in the interior of the secondary particle.

Referring to FIGS. 17 and 18, in Preparation Example 9, in which boron (B) and niobium (Nb) were simultaneously doped, the nanoscale mixture of the rock salt structure and the layered structure was seen on both the surface of the primary particle located in the surface of the secondary particle and the surface of the primary particle located on the interior of the secondary particle. In other words, it could be demonstrated that in the primary particles configuring the secondary particle, the rocksalt structure and the layered structure coexisted on the whole regardless of the location of the primary particle.

Preparation Example 10 to Preparation Example 12 are related to the positive electrode active materials in a core-shell structure in which the content of nickel is 94%, the concentration of the core portion of the secondary particle is different from the concentration of the surface portion of the secondary particle, the composition of Ni decreases and the composition of Co and Mn increases from the core portion to the surface portion of the secondary particle. The positive electrode active materials with the concentration gradient may improve cycle characteristics by mitigating side reactions with the electrolyte in the surface portion. For the core-shell structured positive electrode active material according to Preparation Example 10 to Preparation Example 12, the results of the performance of wet doping, dry doping, and codoping including both the wet doping and the dry doping by using titanium (Ti) and tantalum (Ta) as doping elements were identified.

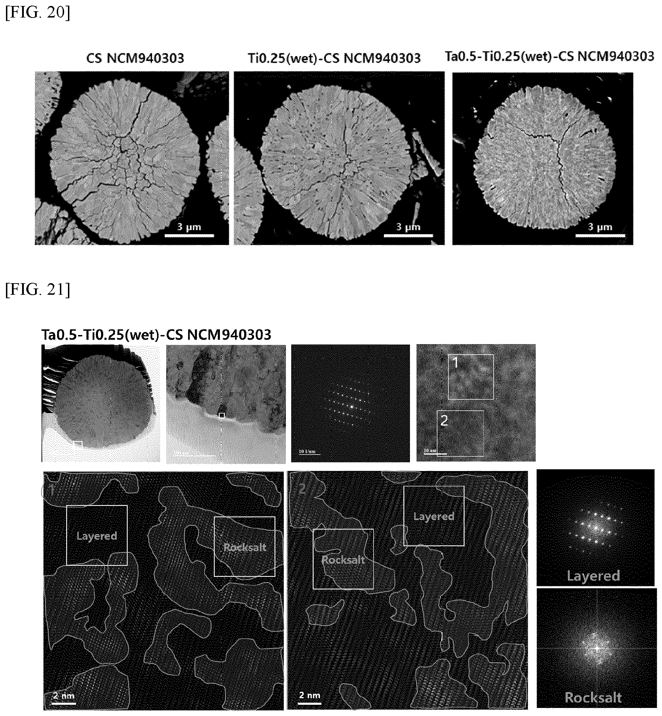

FIG. 19 is an SEM image of the positive electrode active materials of Preparation Example 10 to Preparation Example 12. FIG. 20 is an SEM image of the positive electrode active materials of Preparation Example 10 to Preparation Example 12 after 100 cycles. Table 22 shows the results of number density and hydraulic radius for Preparation Example 10 to Preparation Example 9, and Table 23 shows the electrochemical characteristics for Preparation Example 10 to Preparation Example 12. Table 24 shows the results of checking the change in number density and the areal fraction of microcrack for Preparation Example 10 to Preparation Example 12 after 100 cycles.

[Table 22]

| Preparation Example | Positive electrode active material powder | Number density (ea/$\mu m^2$) | Hydraluic radius ($\mu m$) |
|---|---|---|---|
| Preparation Example 10 | CS NCM940303 | 16.2 | 0.0349 |
| Preparation Example 11 | Ti0.25(wet)-CS NCM940303 | 19.8 | 0.0299 |
| Preparation Example 12 | Ta0.5-Ti0.25(wet)-CS NCM940303 | 22.5 | 0.0229 |

[Table 23]

| Preparation Example | Positive electrode active material powder | 0.1 C Disch. Capa (mAh/g) | 1st Efficiency | 0.2 C Disch. Capa (mAh/g) | 0.2C/0.1C | 0.5 C Disch. Capa (mAh/g) | 0.5C/0.1C | Cycle | 0.5C Cycle Retention |
|---|---|---|---|---|---|---|---|---|---|
| Preparation Example 10 | CS NCM940303 | 237.5 | 96.1% | 236.4 | 99.5% | 229.3 | 96.5% | 100 | 85.5% |
| Preparation Example 11 | Ti0.25(wet)-CS NCM940303 | 240.2 | 96.4% | 236.5 | 98.4% | 229.2 | 95.4% | 100 | 87.3% |
| Preparation Example 12 | Ta0.5-Ti0.25(wet)-CS NCM940303 | 240.7 | 97.7% | 236.5 | 98.3% | 228.6 | 95.0% | 100 | 92.3% |

Referring to FIG. 19, and Tables 22 and 23, even in the coreshell-shaped positive electrode active material, comparing Preparation Example 10, which did not contain any doping elements, with Preparation Example 11, where only titanium (Ti) was added by the wet manner, and Preparation Example 12, where titanium (Ti) was added by the wet manner and tantalum (Ta) was added by the dry manner, it could be demonstrated that the number density increases and the hydraulic radius decreases in the order of Preparation Example 10, Preparation Example 11, and Preparation Example 12. Compared to Preparation Example 10, it could be demonstrated that in Preparation Example 11 and Preparation Example 12, the primary particles configuring the secondary particle were densely packed into smaller sizes.

The results of the evaluation of the electrochemical characteristic also showed that Preparation Example 10, Preparation Example 11, and Preparation Example 12 had similar initial capacities, but the initial capacity after 100 cycles was most excellent in Preparation Example 12.

[Table 24]

| Preparation Example | Positive electrode active material powder | Number density (ea/$\mu$m$^2$) | Number density change rate (%) | Microcrack (%) |
|---|---|---|---|---|
| Preparation Example 10 | CS NCM940303 | 14.5 | 10.5% | 13.2% |
| Preparation Example 11 | Ti0.25(wet)-CS NCM940303 | 18.5 | 6.6% | 9.7% |
| Preparation Example 12 | Ta0.5-Ti0.25(wet)-CS NCM940303 | 22.3 | 0.9% | 4.9% |

Referring to FIG. 20 and Table 24, when comparing the number density after 100 cycles, it could be demonstrated that Preparation Example 10 had the highest number density change rate of 10.5%, Preparation Example 11 had the number density change rate of 6.6%, and Preparation Example 12 had almost no change of 0.9%.

In terms of microcracks, Preparation Example 12 showed fewer microcracks, while Preparation Example 10 clearly showed microcracks extending from the outermost surface of the secondary particle to the interior.

In other words, it could be demonstrated that even for the positive electrode active material having the coreshell form, the performance of doping improved the structural stability of the positive electrode active material, and further, the combination of dry doping and wet doping improved the structural characteristics and cycling characteristic.

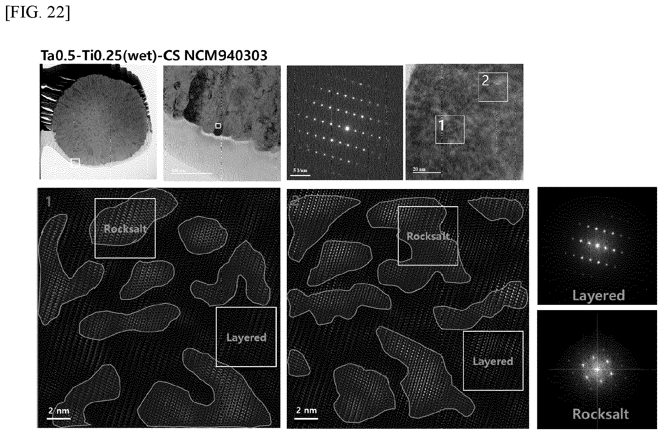

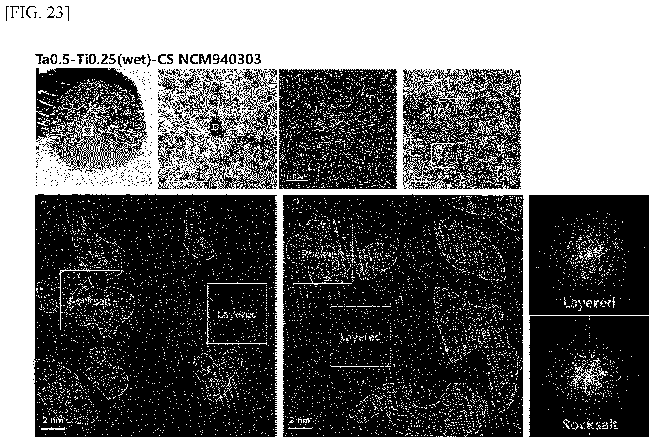

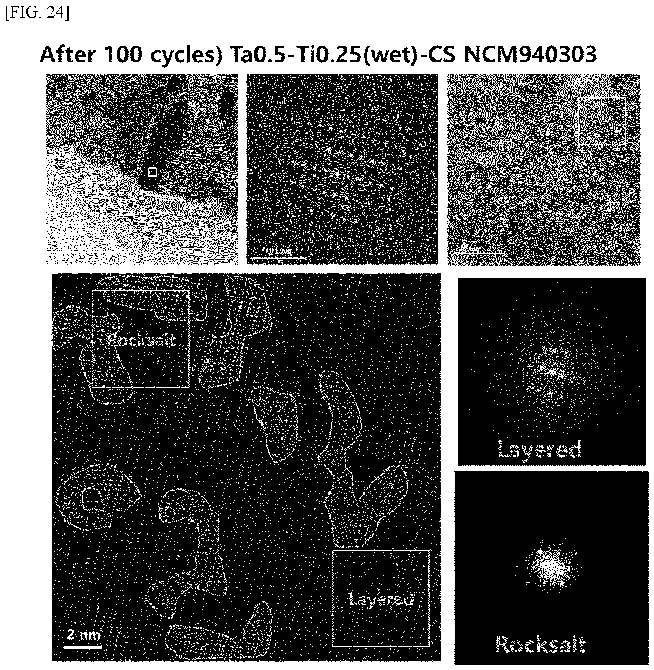

FIG. 21 is a TEM image of Preparation Example 12, and illustrates the result of observing the interior of the primary particle present in the surface of the secondary particle. FIG. 22 is a TEM image of Preparation Example 12, and illustrates the result of observing the surface of the primary particle present in the surface of the secondary particle. FIG. 23 is a TEM image of Preparation Example 12, and illustrates the result of observing the interior of the primary particle present in the interior of the secondary particle. FIG. 24 is a TEM image of Preparation Example 12 after 100 charge-discharge cycles, and illustrates the result of checking the gap between the surface and the center of the primary particle present in the surface of the secondary particle.

From FIGS. 21 to 23, it could be demonstrated that the positive electrode active material with a core-shell structure, dry doped with tantalum (Ta) and wet doped with titanium (Ti) also includes nanocomposite structures in which the rocksalt structures and the layered structures coexist in the nanosize throughout the interior and the surface of the primary particle. Also, in Preparation Example 12, the mixture of the rock-salt structure and the layered structure were present at the position of the primary particle in the surface or the interior of the secondary particle, or in both the surface and the interior of the secondary particle regardless of the position of the primary particle..

FIG. 24 is a TEM image of Preparation Example 12 after 100 charge-discharge cycles, and illustrates the result of checking the gap between the surface and the center of the primary particle present in the surface of the secondary particle. It is identified that the rock salt nanocomposite crystal structure is well maintained even after charge and discharge, the excellent stability of the rock salt nanocomposite crystal structure under electrochemical charge and discharge conditions is proved.

2. Co-doping_dry and dry doping

In Preparation Example 13 to Preparation Example 16, the results of codoping performed once or twice with dry doping, using aluminum (Al) and molybdenum (Mo) as doping elements, for the positive electrode active material containing the nickel content of 94 mol% were identified.

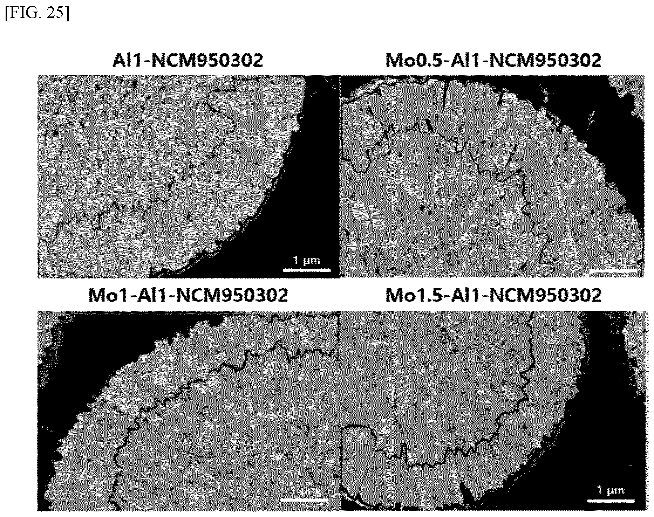

FIG. 25 is an SEM image of the positive electrode active materials of Preparation Example 13 to Preparation Example 16. Table 25 shows the results of number density and hydraulic radius for Preparation Example 13 to Preparation Example 16, and Table 23 shows the electrochemical characteristics for Preparation Example 13 to Preparation Example 16.

[Table 25]

| Preparation Example | Positive electrode active material powder | Number density (ea/ $\mu m^2$) | Hydraluic radius ($\mu$m) |
|---|---|---|---|
| Preparation Example 13 | A11-NCM940303 | 8.6 | 0.0883 |
| Preparation Example 14 | Mo0.5-Al1-NCM940303 | 12.6 | 0.0553 |
| Preparation Example 15 | Mo1-Al1-NCM940303 | 19.5 | 0.0414 |
| Preparation Example 16 | Mo1.5-Al1-NCM940303 | 22.1 | 0.0321 |

[Table 26]

| Preparation Example | Positive electrode active material powder | 0.1 C Disch. Capa (mAh/g) | 1st Efficiency | 0.2 C Disch. Capa (mAh/g) | 0.2C/ 0.1C | 0.5 C Disch. Capa (mAh/g) | 0.5C/ 0.1C | Cycle | 0.5C Cycle Retention |
|---|---|---|---|---|---|---|---|---|---|
| Preparation Example 13 | Al1-NCM940303 | 238.3 | 96.7% | 233.8 | 98.1% | 224.7 | 94.3% | 100 | 87.0% |
| Preparation Example 14 | Mo0.5-Al1-NCM940303 | 240.9 | 96.3% | 234.1 | 97.2% | 221.3 | 91.9% | 100 | 89.5% |
| Preparation Example 15 | Mo1-Al1-NCM940303 | 236.8 | 95.7% | 232.8 | 98.3% | 223.6 | 94.4% | 100 | 93.1% |
| Preparation Example 16 | Mo1.5-Al1-NCM940303 | 232.2 | 94.6% | 226.8 | 97.6% | 215.7 | 92.9% | 100 | 93.0% |

Referring to FIG. 25, Table 25, and Table 26, it could be seen that Preparation Example 13, in which aluminum (Al) alone was dry doped, exhibited a smaller number density and a larger hydraulic radius compared to Preparation Example 14 to Preparation Example 16, in which aluminum (Al) and molybdenum (Mo) were dry doped together. In addition, when the content of aluminum (Al) was kept the same and the content of molybdenum (Mo) was increased, the number density increased and the hydraulic radius decreased as the content of molybdenum (Mo) increased.

In terms of electrical characteristics, Preparation Example 14 to Preparation Example 16, in which aluminum (Al) and molybdenum (Mo) were dry doped together, exhibited better cycle characteristics compared to Preparation Example 13, in which only aluminum (Al) was dry doped. In other words, it could be demonstrated that the crystal structural stability and the cycle characteristic were improved in the case where different types of doping elements were dry doped together compared to the positive electrode active material in which only one doping element was doped.

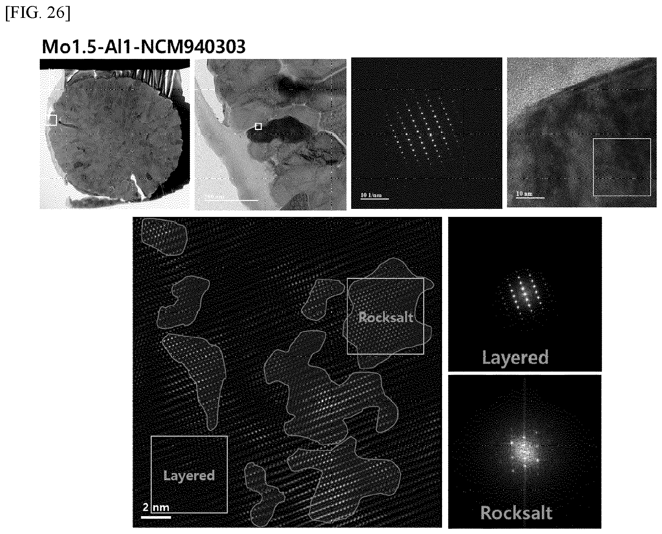

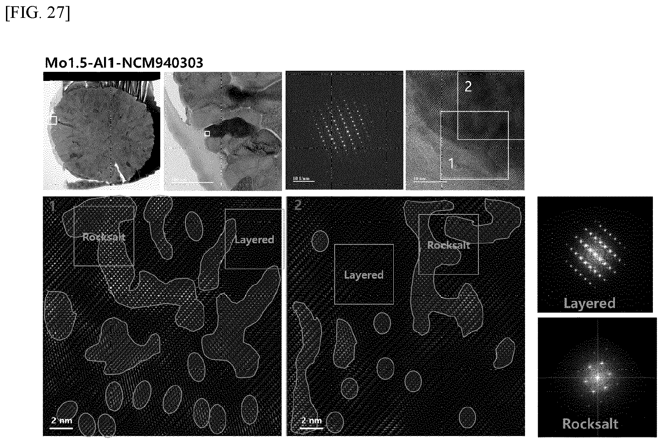

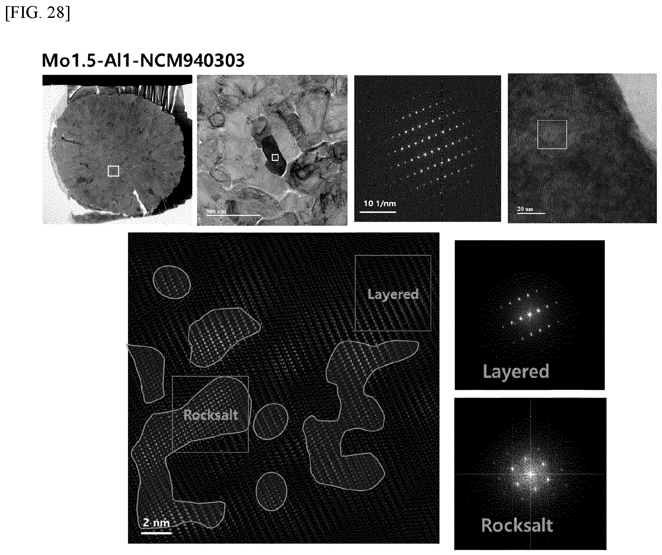

FIG. 26 is a TEM image of Preparation Example 16, and illustrates the result of observing the interior of the primary particle present in the surface of the secondary particle. FIG. 27 is a TEM image of Preparation Example 16, and illustrates the result of observing the surface of the primary particle present in the surface of the secondary particle. FIG. 28 is a TEM image of Preparation Example 16, and illustrates the result of observing the interior of the primary particle present in the interior of the secondary particle.

Referring to FIGS. 26 to 28, it could be demonstrated that in Preparation Example 16, where aluminum (Al) and molybdenum (Mo) were dry doped together, the primary particles configuring the secondary particle includes the nanocomposite structures in which the rocksalt structures and the layered structures coexist in the nanoscale throughout the surfaces and the interiors thereof. Further, it could be demonstrated that the primary particle including the nanocomposite structure in which rocksalt *(Fm3m)* structures and layered *(R-3m)* structures coexist as a physical mixture was also provided in the surface of the secondary particle and was also provided in the interior of the secondary particle.

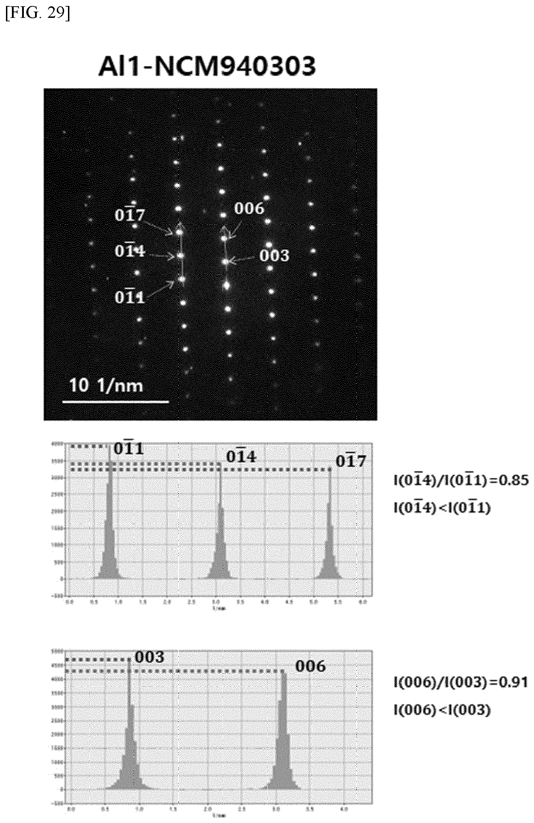

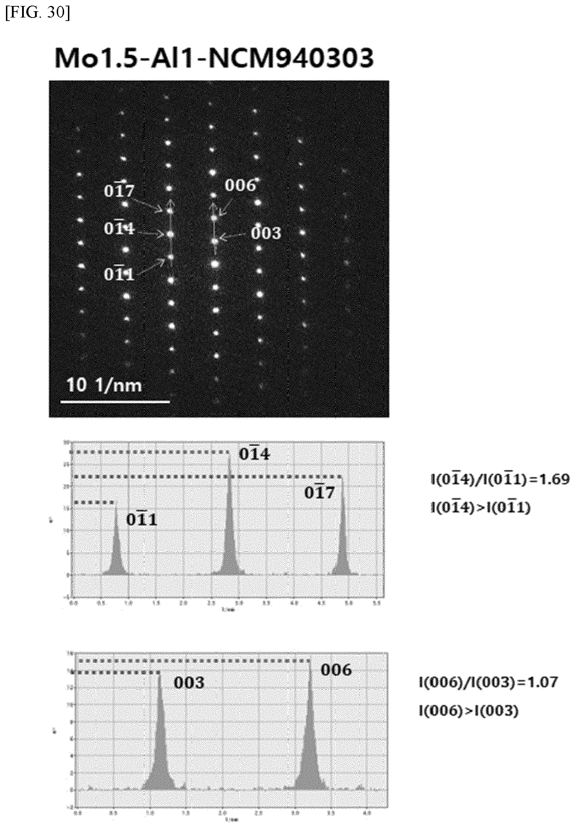

FIG. 29 is a TEM image of Preparation Example 13, and illustrates the strength ratio of the crystal planes using SAED. FIG. 30 is a TEM image of Preparation Example 16, and illustrates a result of the strength ratio of the crystal planes using SAED.

Referring to FIGS. 29 and 30, Preparation Example 13 exhibited a greater intensity, $I_{(0-11)}$, of the peak in the (0-11) reflection compared to the intensity, $I_{(0-14)}$, of the peak in the (0-14) reflection, and exhibited a greater intensity, $I_{(003)}$, of the peak in the (003) reflection compared to the intensity, $I_{(006)}$, of the peak in the (006) reflection. Preparation Example 16 exhibited that $I_{(0-14)}$ was larger than $I_{(0-11)}$, and $I_{(006)}$ was larger than $I_{(003)}$.

In other words, by comparing the crystal structures of Preparation Example 13 and Preparation Example 16, it could be demonstrated that the crystal structures were different forms, and Preparation Example 16, in which both aluminum (Al) and molybdenum (Mo) were dry doped, had a more stable crystal structure than Preparation Example 13, in which only aluminum (Al) was dry-doped. Specifically, the reason why the crystal structure of Preparation Example 16 is more stable compared to Preparation Example 13 is that the thermodynamically stable rocksalt crystal structure and the layered crystal structure coexist to form a nanocomposite structure, which may better mitigate the stresses inside the particle generated upon insertion/deletion of lithium ions and prevent the crystalline collapse that occurs upon charge/discharge of the positive electrode.

3. Bulk_wet doping

For the positive electrode active material containing the nickel content of 88 mol% of Preparation Example 17 and Preparation Example 18, the result of the performance of wet doping by using tungsten (W) as the doping element was identified.

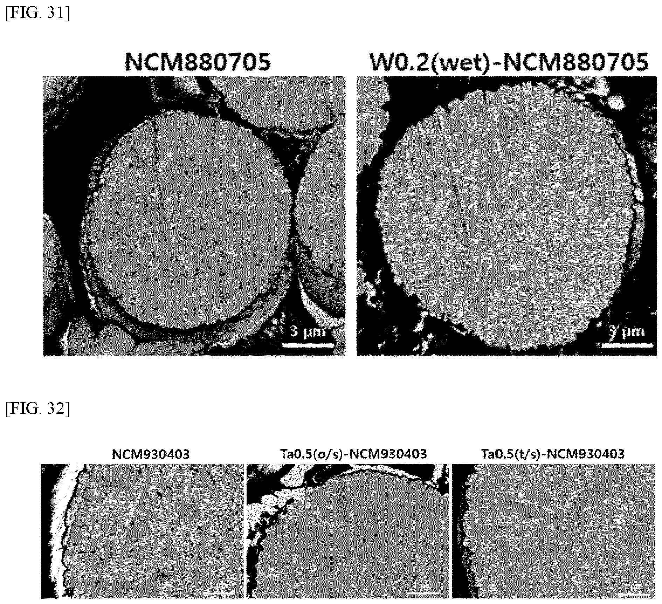

FIG. 31 is an SEM image of the positive electrode active materials of Preparation Example 17 and Preparation Example 18. Table 27 shows the results of number density and hydraulic radius for Preparation Example 17 and Preparation Example 18, and Table 28 shows the electrochemical characteristics for Preparation Example 17 and Preparation Example 18.

[Table 27]

| Preparation Example | Positive electrode active material powder | Number density (ea/ $\mu m^2$) | Hydraluic radius ($\mu m$) |
|---|---|---|---|
| Preparation Example 17 | NCM880705 | 5.4 | 0.1075 |
| Preparation Example 18 | W0.2(wet)-NCM880705 | 9.8 | 0.0712 |

[Table 28]

| Preparation Example | Positive electrode active material powder | 0.1 C Disch. Capa (mAh/g) | 1st Efficiency | 0.2 C Disch. Capa (mAh/g) | 0.2C/ 0.1C | 0.5 C Disch. Capa (mAh/g) | 0.5C/ 0.1C | Cycle | 0.5C Cycle Retention |
|---|---|---|---|---|---|---|---|---|---|
| Preparation Example 17 | NCM880705 | 233.2 | 96.4% | 228.6 | 98.1% | 220.2 | 94.4% | 100 | 88.2% |
| Preparation Example 18 | W0.2(wet)-NCM880705 | 230.5 | 96.3% | 226.6 | 98.3% | 218.2 | 94.6% | 100 | 92.3% |

Referring to FIG. 31, Table 27, and Table 28, Preparation Example 18, in which tungsten (W) was wet doped, had a larger number density and a smaller hydraulic radius compared to Preparation Example 17, in which tungsten (W) was not doped. In addition, in terms of the electrochemical characteristics, that the initial capacities of Preparation Example 17 and Preparation Example 18 were similar, but Preparation Example 18 was superior in retention capacity after 100 cycles compared to Preparation Example 17.

In other words, the NCM880705 positive electrode active material exhibited the high number density and the small hydraulic radius because tungsten (W) was wet doped similarly, and it could be demonstrated that when the positive electrode active material exhibited the high number density and the small hydraulic radius, the cycle characteristic was improved.

4. Two step doping

For the positive electrode active materials containing the nickel content of 93 mol% of Preparation Example 19 to Preparation Example 21, the results of performing a one-step or two-step dry doping by using tantalum (Ta) as a doping element were identified.

FIG. 32 is an SEM image of the positive electrode active materials of Preparation Example 19 to Preparation Example 21. Table 29 shows the results of number density and hydraulic radius for Preparation Example 19 to Preparation Example 21, and Table 30 shows the electrochemical characteristics for Preparation Example 19 to Preparation Example 21.

[Table 29]

| Preparation Example | Positive electrode active material powder | Number density (ea/ $\mu$m$^2$) | Hydraluic radius ($\mu$m) |
|---|---|---|---|
| Preparation Example 19 | NCM930403 | 7.3 | 0.0872 |
| Preparation Example 20 | Ta0.5(o/s)-NCM930403 | 17.4 | 0.0375 |
| Preparation Example 21 | Ta0.5(t/s)-NCM930403 | 24.3 | 0.0274 |

[Table 30]

| Preparation Example | Positive electrode active material powder | 0.1 C Disch. Capa (mAh/g) | 1st Efficiency | 0.2 C Disch. Capa (mAh/g) | 0.2C/ 0.1C | 0.5 C Disch. Capa (mAh/g) | 0.5C/ 0.1C | Cycle | 0.5C Cycle Retention |
|---|---|---|---|---|---|---|---|---|---|
| Preparation Example 19 | NCM930403 | 236.4 | 94.9% | 231.6 | 98.0% | 223.3 | 94.5% | 100 | 81.9% |
| Preparation Example 20 | Ta0.5(o/s)-NCM930403 | 235 | 96.3% | 232 | 98.7% | 222 | 94.5% | 100 | 91.4% |
| Preparation Example 21 | T a0. 5 (t/s)-NCM930403 | 239.7 | 97.4% | 236.3 | 98.6% | 227.5 | 94.9% | 100 | 92.2% |

Referring to FIG. 32, Table 29, and Table 30, Preparation Example 19 without tantalum (Ta) doping exhibited a small number density and a large hydraulic radius, while Preparation Example 20 and Preparation Example 21, in which tantalum (Ta) was doped, exhibited a high number density and a low hydraulic radius compared to Preparation Example 19.

Preparation Example 20 and Preparation Example 21 progressed with dry doping using with the same content of 1 mol% tantalum (Ta), but Preparation Example 20 had one-step doping, and tantalum (Ta) was added in one calcination step, and in Preparation Example 21, tantalum (Ta) was added in two calcination steps, it was identified that even though the same content of tantalum (Ta) was added by the dry method in Preparation Example 20 and Preparation Example 21, Preparation Example 21, in which tantalum (Ta) was added in the two steps, exhibited a higher number density and a smaller hydraulic radius.

According to the result of identifying the electrochemical characteristic for Preparation Example 19, Preparation Example 20, and Preparation Example 21, the initial capacities were all similar, but the retention capacities of Preparation Example 20 and Preparation Example 21 after 100 cycles were superior to Preparation Example 19.

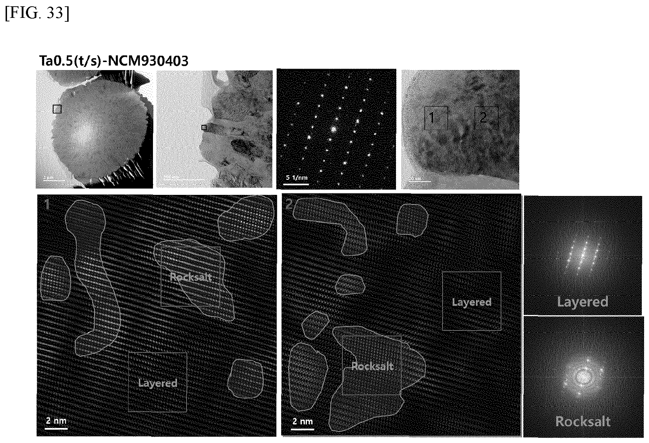

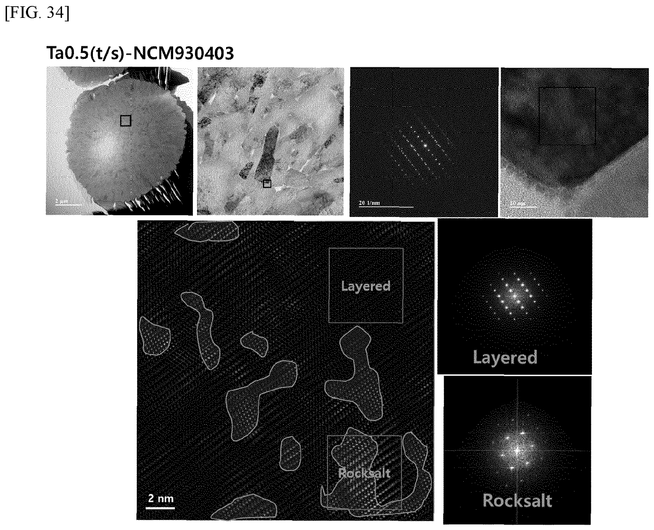

FIG. 33 is a TEM image of Preparation Example 21, and illustrates the result of observing the surface of the primary particle present in the surface of the secondary particle. FIG. 34 is a TEM image of Preparation Example 21, and illustrates the result of observing the surface of the primary particle present on the interior of the secondary particle.

Referring to FIGS. 33 and 34, even with tantalum (Ta) doping in the two steps, the mixture of the rocksalt structure and the layered structure coexist in the nano-scale in the interior of the primary particle. Furthermore, it was identified that the primary particles including the nanocomposite structures in which the rock-salt structure and the layered structure coexisted were present both in the interior and in the surface of the secondary particle.

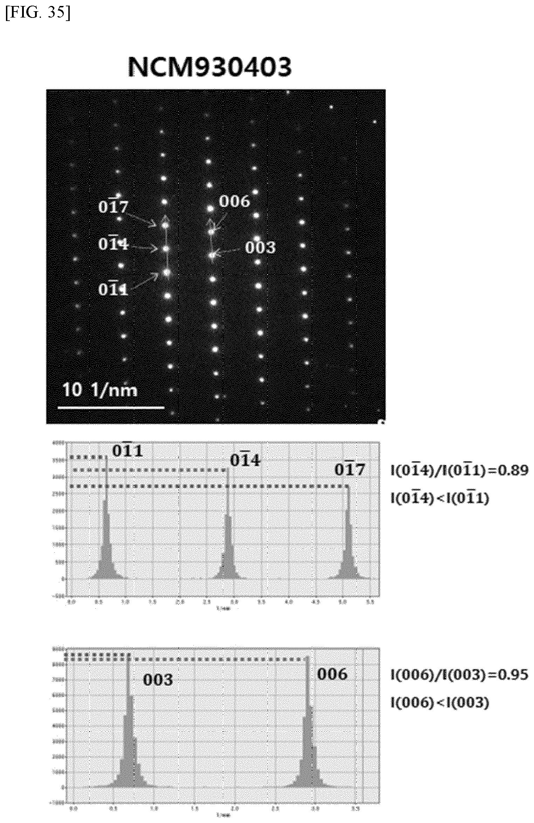

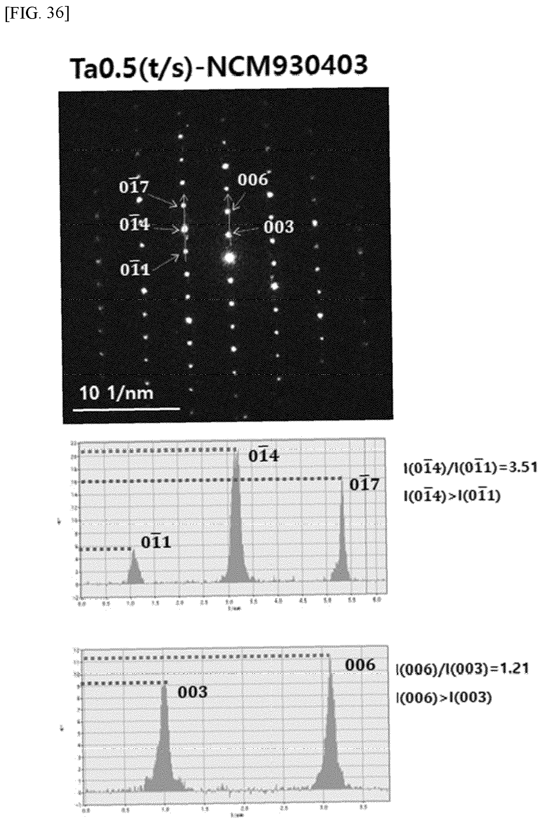

FIG. 35 is a TEM image of Preparation Example 19, and illustrates a result of the strength ratio of the crystal planes using SAED. FIG. 36 is a TEM image of Preparation Example 21, and illustrates a result of the strength ratio of the crystal planes using SAED.

Referring to FIGS. 29 and 30, in Preparation Example 19, $I_{(0-11)}$ was larger than $I_{(0-14)}$ and $I_{(003)}$ is larger than $I_{(006)}$, while in Preparation Example 21, $I_{(0-11)}$ was smaller than $I_{(0-14)}$ and $I_{(003)}$ was smaller than $I_{(006)}$. In other words, it was identified that Preparation Example 19 and Preparation Example 21 represented different crystal structures.

For the NM positive electrode active materials containing the nickel content of 88 mol% and composed of nickel and manganese of Preparation Example 22 to Preparation Example 24, the results of performing a one-step or two-step dry doping by using molybdenum (Mo) as a doping element were identified.

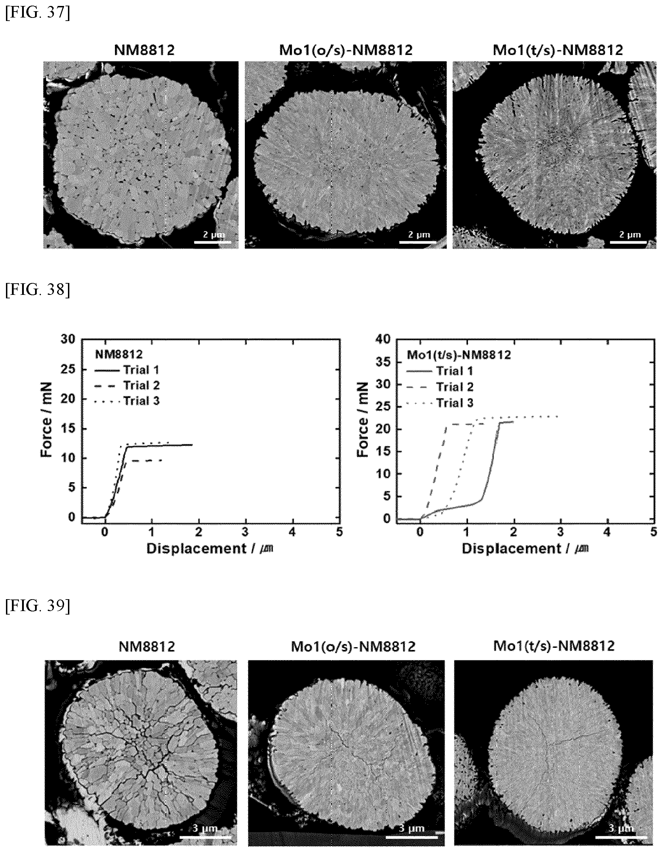

FIG. 37 is an SEM image of the positive electrode active materials of Preparation Example 22 to Preparation Example 24. FIG. 38 is an SEM image of the positive electrode active materials after 100 cycles of Preparation Example 22 to Preparation Example 24. Table 31 shows the results of number density and hydraulic radius for Preparation Example 22 to Preparation Example 24, and Table 32 shows the electrochemical characteristics for Preparation Example 22 to Preparation Example 24. Table 33 is a table showing the rate-specific characteristics of Preparation Example 22 to Preparation Example 24.

[Table 31]

| Preparation Example | Positive electrode active material powder | Number density (ea/ $\mu m^2$) | Hydraluic radius ($\mu m$) |
|---|---|---|---|
| Preparation Example 22 | NM8812 | 7.5 | 0.0688 |
| Preparation Example 23 | Mo 1 (o/s)-NM8812 | 21.7 | 0.0321 |
| Preparation Example 24 | Mo1(t/s)-NM8812 | 35.2 | 0.0218 |

[Table 32]

| Preparation Example | Positive electrode active material powder | 0.1 C Disch. Capa (mAh/g) | 1st Efficiency | 0.2 C Disch. Capa (mAh/g) | 0.2C/ 0.1C | 0.5 C Disch. Capa (mAh/g) | 0.5C/ 0.1C | Cycle | 0.5C Cycle Retention |
|---|---|---|---|---|---|---|---|---|---|
| Preparation Example 22 | NM8812 | 231.1 | 99.8% | 226.9 | 98.2% | 218.3 | 94.5% | 100 | 86.00% |
| Preparation Example 23 | Mo1(o/s)-NM8812 | 232.2 | 99.8% | 227 | 97.8% | 221 | 95.2% | 100 | 89.7% |
| Preparation Example 24 | Mo1(t/s)-NM8812 | 239 | 99.6% | 233.8 | 97.8% | 226.9 | 94.9% | 100 | 90.9% |

[Table 33]

| Preparation Example | Positive electrode active material powder | 0.2C Capacity (mAh/g) | 0.5C Capacity (mAh/g) (0.5C/0.2C) | 1C Capacity (mAh/g) (1C/0.2C) | 2C Capacity (mAh/g) (2C/0.2C) | 5C Capacity (mAh/g) (5C/0.2C) | 10C Capacity (mAh/g) (10C/0.2C) |
|---|---|---|---|---|---|---|---|
| Preparation Example 22 | NM8812 | 231.1 | 221.4 (95.8%) | 217.1 (93.9%) | 212.4 (91.9%) | 206.3 (89.2%) | 192.9 (83.5%) |
| Preparation Example 23 | Mo1 (o/s)-NM8812 | 232.1 | 225.9 (97.3%) | 221.8 (95.6%) | 217.3 (93.6%) | 211 (90.9%) | 197.3 (85%) |
| Preparation Example 24 | Mo1 (t/s)-NM8812 | 238 | 232.2 (97.6%) | 229.2 (96.3%) | 225.5 (94.8%) | 219.8 (92.4%) | 205.3 (86.3%] |

Referring to FIG. 37, Table 31, Table 32, and Table 33, it could be demonstrated that Preparation Example 23 and Preparation Example 24, in which molybdenum (Mo) was dry doped, exhibited higher number density and lower hydrodynamic radius compared to Preparation Example 22, in which molybdenum (Mo) was not doped. Further, in terms of electrical characteristics, Preparation Example 22 to Preparation Example 24 exhibited similar initial capacities, but Preparation Example 23 exhibited superior retention capacity after 100 cycles to Preparation Example 22.

In other words, it was identified that even in the positive electrode active materials composed of nickel and manganese without cobalt, the crystal structure of the primary particle was controlled and the stability of the morphology of the secondary particle was improved, so that the number density and the hydraulic radius were affected.

Comparing Preparation Example 23 to Preparation Example 24, the same amount of molybdenum (Mo) was added either all in one step or in two separate steps. Specifically, in Preparation Example 23, all of the 1 mol% molybdenum (Mo) was added in the first calcination, and in Preparation Example 24, no molybdenum (Mo) was added in the first calcination and 1 mol% molybdenum (Mo) was added in the second calcination.

It could be demonstrated that compared to Preparation Example 23, Preparation Example 24 in which molybdenum (Mo) was added in two steps had the higher number density and the smaller hydrodynamic radius. Further, Preparation Example 24 also exhibited superior retention capacity after 100 cycles.

The rate-specific characteristics identified by gradually increasing the charge capacity were similar for Preparation Example 22 to Preparation Example 24.

FIG. 38 is a graph of the identification of particle strength of the positive electrode active materials of Preparation Example 22 to Preparation Example24. Table 34 shows the result of checking the particle strength of Preparation Example 22 to Preparation Example 24, and Table 35 shows the degree of deformation of the particles of Preparation Example 22 to Preparation Example 24.

[Table 34]

| Preparation Example | Positive electrode active material powder | Minimum value | First quartile (25%) | Second quartile (50%) | Third quartile (75%) | Maximum value | Average value |
|---|---|---|---|---|---|---|---|
| Preparation Example 22 | NM8812 | 107.2 | 139.2 | 152.6 | 160.7 | 175.2 | 147.8 |
| Preparation Example 23 | Mo1(o/s)-NM8812 | 158.2 | 183.7 | 201.2 | 207.7 | 227.2 | 195.1 |
| Preparation Example 24 | Mo1(t/s)-NM8812 | 175.2 | 201.2 | 209.2 | 222.3 | 252.1 | 211 |

[Table 35]

| Preparation Example | Positive electrode active material powder | Trial 1 | | Trial 2 | | Trial 3 | |
|---|---|---|---|---|---|---|---|
| | | Plastic deformation length ($\mu$m) | Particle compression strain (%) | Plastic deformation length ($\mu$m) | Particle compression strain (%) | Plastic deformation length ($\mu$m) | Particle compression strain (%) |
| Preparation Example 22 | NM8812 | 0.488 $\mu$m | 4.88% | 0.446 $\mu$m | 4.46% | 0.330 $\mu$m | 3.30% |
| Preparation Example 24 | Mo1(t/s)-NM8812 | 1.685 $\mu$m | 16.85% | 0.568 $\mu$m | 5.68% | 1.223 $\mu$m | 12.23% |

Referring to Table 34, Preparation Examples 23 and 24 exhibited higher particle strength of the secondary particle than Preparation Example 22, and Preparation Example 24 exhibited the highest particle strength. In other words, it could be demonstrated that as the number density is higher and the hydraulic radius is smaller, the particle strength is higher.

Referring to FIG. 38 and Table 35, it could be demonstrated that the positive electrode active material of Preparation Example 24 was less fractured at higher pressures compared to Preparation Example 22. Specifically, the degree of particle deformation and the pressures at which the positive electrode active materials were fractured were identified in the process of pressing and deforming the positive electrode active materials of Preparation Example 22 and Preparation Example 24, and reproducibility was identified by conducting first (Trial 1), second (Trial 2), and third (Trial 3) trials.

In the case of Preparation Example 22, the particles were fractured at approximately 12.5 mN or less, and the degree of particle deformation was also low, 0.5 $\mu$m or less. On the other hand, in the case of Preparation Example 24, it could be demonstrated that the particles were deformed while withstanding a pressure of more than 20 mN, after which the particles were fractured. The compression strain of Preparation Example 24 was also higher than that of Preparation Example 22.

In other words, it could be demonstrated that in the case of Preparation Example 24, the ductility of the secondary particle was increased, resulting in improved fracture toughness, and thus, the secondary particle was maintained while being deformed at high compression force, and then fractured.

FIG. 39 is an SEM image of the positive electrode active materials of Preparation Example 22 to Preparation Example 24 after 100 cycles. Table 36 shows the results of the number density and microcracks after the cycles of Preparation Example 22 to Preparation Example 24.

[Table 36]

| Preparation Example | Positive electrode active material powder | Number density (ea/ $\mu$m$^2$) | Number density change rate (%) | Microcrack (%) |
|---|---|---|---|---|
| Preparation Example 22 | NM8812 | 7.5 | 8.5% | 9.8% |
| Preparation Example 23 | Mo1(o/s)-NM8812 | 21.7 | 0.6% | 4.2% |
| Preparation Example 24 | Mo1(t/s)-NM8812 | 35.2 | 0.4% | 3.8% |

Referring to FIG. 39 and Table 36, it could be demonstrated that Preparation Example 22 exhibited a significant decrease in number density after 100 cycles and a significant increase in microcracks. On the other hand, Preparation Example 23 and Preparation Example 24 exhibited good retention capacity even after 100 cycles.

In other words, it could be demonstrated that even the positive electrode active material containing no cobalt had good structural stability and improved cycling properties when the number density was increased and the hydraulic radius was reduced.

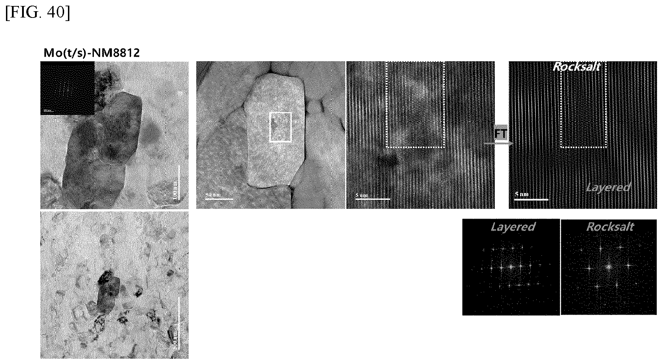

FIG. 40 is a TEM image of Preparation Example 24, and illustrates the result of observing the interior of the primary particle present in the inside of the secondary particle.

Referring to FIG. 40, it could be demonstrated that the nanocomposite structure in which both the rocksalt structure and the layered structure were present at the nanoscale was present in the interior of the first particle in Preparation Example 24.

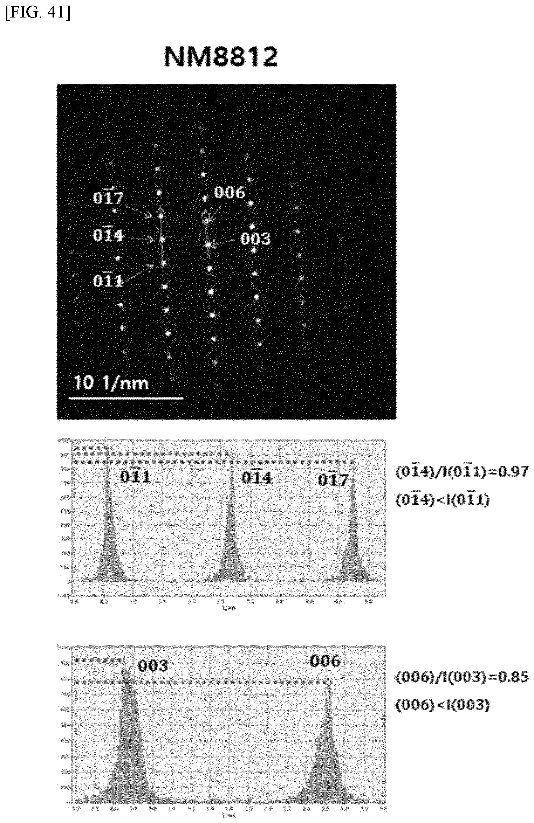

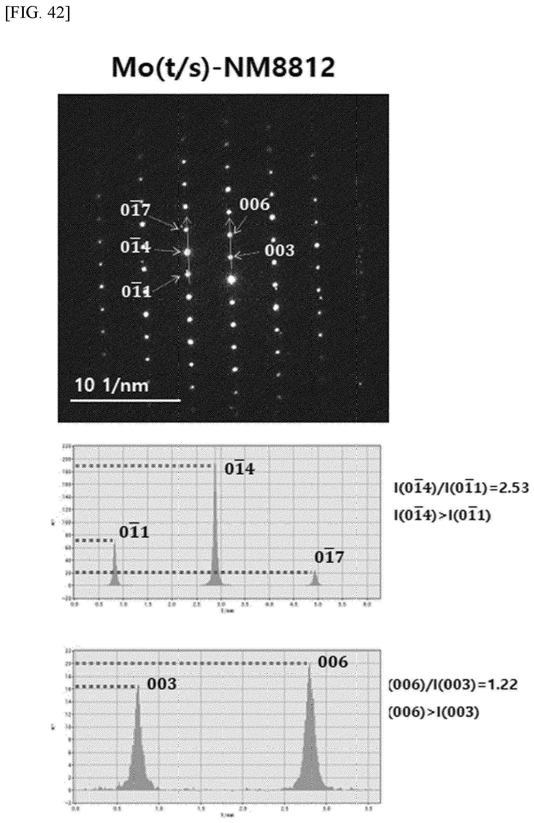

FIG. 41 is a TEM image of Preparation Example 22, and illustrates a result of the intensity ratio of the crystal faces using SAED. FIG. 42 is a TEM image of Preparation Example 24, and illustrates a result of the intensity ratio of the crystal faces using SAED.

Referring to FIGS. 41 and 42, in Preparation Example 22, $I_{(0-11)}$ was larger than $I_{(0-14)}$ and $I_{(003)}$ was larger than $I_{(006)}$, and in Preparation Example 24, $I_{(0-11)}$ was smaller than $I_{(0-14)}$ and $I_{(003)}$ was smaller than $I_{(006)}$. It is determined that Preparation Example 22 and Preparation Example 24 exhibit different crystal structures, whereby Preparation Example 24 exhibits better cycling characteristics compared to Preparation Example 22.

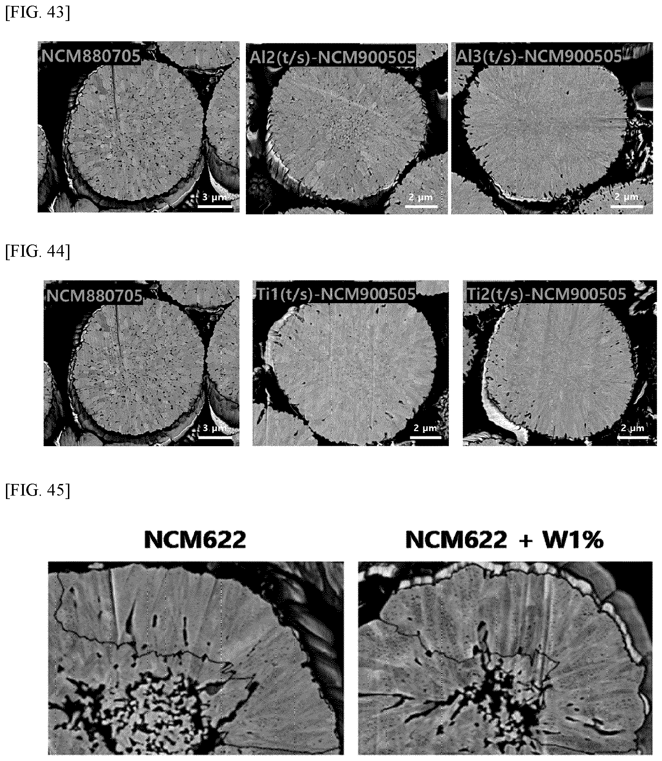

FIG. 43 is an SEM image of the positive electrode active materials of Preparation Example 25 to Preparation Example 27. Table 37 shows the results of number density and hydraulic radius for Preparation Example 22 to Preparation Example 24, and Table 38 shows the electrochemical characteristics for Preparation Example 22 to Preparation Example 24.

[Table 37]

| Preparation Example | Positive electrode active material powder | Number density (ea/ $\mu$m$^2$) | Hydraluic radius ($\mu$m) |
|---|---|---|---|
| Preparation Example 25 | NCM880705 | 5.4 | 0.1075 |
| Preparation Example 26 | Al2(t/s)-NCM900505 | 14.3 | 0.0756 |
| Preparation Example 27 | Al3(t/s)-NCM900505 | 28.7 | 0.0209 |

[Table 38]

| Preparation Example | Positive electrode active material powder | 0.1 C Disch. Capa (mAh/g) | 1st Efficiency | 0.2 C Disch. Capa (mAh/g) | 0.2C/0.1C | 0.5 C Disch. Capa (mAh/g) | 0.5C/0.1C | Cycle | 0.5C Cycle Retention |
|---|---|---|---|---|---|---|---|---|---|
| Preparation Example 25 | NCM880705 | 233.2 | 96.40% | 228.6 | 98.10% | 220.2 | 94.40% | 100 | 88.20% |
| Preparation Example 26 | Al2(t/s)-NCM900505 | 232.1 | 95.80% | 226.8 | 97.70% | 217.1 | 93.50% | 100 | 94.20% |
| Preparation Example 27 | Al3(t/s)-NCM900505 | 229.2 | 96.10% | 223.9 | 97.70% | 215 | 93.80% | 100 | 97.20% |

Referring to FIG. 43, Table 37, and Table 38, Preparation Example 25 without Al doping exhibited a small number density and a large hydraulic radius, while Preparation Example 26 and Preparation Example 27 with Al doping exhibited a higher number density and a smaller hydraulic radius compared to Preparation Example 25. When Preparation Example 26 and Preparation Example 27 were dry-added with doping elements in two steps and calcinated at the same temperature by using the same method, it could be demonstrated that Preparation Example 27 with 3 mol% aluminum (Al) had a higher number density and a smaller hydraulic radius than Preparation Example 26 with 2 mol% Al.

Comparing the electrochemical characteristics of Preparation Example 25 to Preparation Example 27, the capacities were similar to each other in the initial cycles, but after 100 cycles, the retention capacity was superior in the order of Preparation Example 27, Preparation Example 26, and Preparation Example 25. In other words, it could be demonstrated that as the amount of aluminum doping increased, the positive electrode active material had the higher number density and the smaller hydraulic radius, and as the positive electrode active material had the higher number density and the smaller hydraulic radius, the structural stability was improved to exhibit the excellent cycling characteristics.

FIG. 44 is an SEM image of the positive electrode active material of Preparation Example 25, Preparation Example 28, and Preparation Example 29. Table 39 shows the results of number density and hydraulic radiuses for Preparation Example 25, Preparation Example 28, and Preparation Example 29, and Table 40 shows the electrochemical characteristics for Preparation Example 25, Preparation Example 28, and Preparation Example 29.

[Table 39]

| Preparation Example | Positive electrode active material powder | Number density (ea/$\mu$m$^2$) | Hydraluic radius ($\mu$m) |
|---|---|---|---|
| Preparation Example 25 | NCM880705 | 5.4 | 0.1075 |
| Preparation Example 28 | Ti1(t/s)-NCM900505 | 17.8 | 0.0614 |
| Preparation Example 29 | Ti2(t/s)-NCM900505 | 32.7 | 0.0197 |

[Table 40]

| Preparation Example | Positive electrode active material | 0.1 C Disch. Capa (mAh/g) | 1st Efficiency | 0.2 C Disch. Capa (mAh/g) | 0.2C/ 0.1C | 0.5 C Disch. Capa (mAh/g) | 0.5C/ 0.1C | Cycle | 0.5C Cycle Retention |
|---|---|---|---|---|---|---|---|---|---|
| | powder | | | | | | | | |
| Preparation Example 25 | NCM880705 | 233.2 | 96.40% | 228.6 | 98.10 % | 220.2 | 94.40 % | 100 | 88.20% |
| Preparation Example 28 | Ti 1 (t/s)-NCM900505 | 232.7 | 97.10% | 228.1 | 98.00 % | 219.9 | 94.50 % | 100 | 97.40% |
| Preparation Example 29 | Ti2(t/s)-NCM900505 | 229 | 96.20% | 223.2 | 97.50 % | 215.7 | 94.20 % | 100 | 99.00% |

Referring to FIG. 44, Table 39, and Table 40, Preparation Example 25 without Ti doping exhibited a small number density and a large hydraulic radius, while Preparation Example 28 and Preparation Example 29 with Ti doping exhibited a high number density and a small hydraulic radius compared to Preparation Example 25. When Preparation Example 28 and Preparation Example 29 were dry-added with doping elements in two steps and calcinated at the same temperature by using the same method, it could be demonstrated that Preparation Example 29 with 2 mol% titanium (Ti) had a higher number density and a smaller hydraulic radius than Preparation Example 28 with 1 mol% Ti.

Comparing the electrochemical characteristics of Preparation Example 25 to Preparation Example 28 and Preparation Example 29, the capacities were similar to each other in the initial cycles, but after 100 cycles, the retention capacity was superior in the order of Preparation Example 29, Preparation Example 28, and Preparation Example 25. In other words, it could be demonstrated that as the amount of titanium (Ti) doping increased, the positive electrode active material had the higher number density and the smaller hydraulic radius, and as the positive electrode active material had the higher number density and the smaller hydraulic radius, the structural stability was improved to exhibit the excellent cycling characteristics.

5. Poly material_doping (poly material +doping)

The results of dry doping using tungsten (W) as a doping element were confirmed for the positive electrode active materials containing 60 mol% nickel of Preparation Example 25 and Preparation Example 26.

FIG. 45 is an SEM image of the positive electrode active materials of Preparation Example 25 and Preparation Example 26. Table 41 shows the results of number density and hydraulic radius for Preparation Example 25 and Preparation Example 26, and Table 42 shows the electrochemical characteristics for Preparation Example 22 to Preparation Example 24.

[Table 41]

| Preparation Example | Positive electrode active material powder | Number density (ea/ $\mu m^2$) | Hydraluic radius ($\mu m$) |
|---|---|---|---|
| Preparation Example 25 | NCM622 | 15.2 | 0.036 |
| Preparation Example 26 | W1-NCM622 | 16.7 | 0.0354 |

[Table 42]

| Preparation Example | Positive electrode active material powder | 0.1 C Disch. Capa (mAh/g) | 1st Efficiency | 0.2 C Disch. Capa (mAh/g) | 0.2C/ 0.1C | 0.5 C Disch. Capa (mAh/g) | 0.5C/ 0.1C | Cycle | 0.5C Cycle Retention |
|---|---|---|---|---|---|---|---|---|---|
| Preparation Example 25 | NCM622 | 195.2 | 94.2% | 190.1 | 97.4% | 183.3 | 93.9% | 100 | 96.1% |
| Preparation Example 26 | W1-NCM622 | 193.9 | 94.2% | 188.5 | 97.2% | 181.5 | 93.6% | 100 | 97.9% |

58

Comparing Preparation Example 25 and Preparation Example 26, it could be demonstrated that Preparation Example 26 with the addition of tungsten (W) by the dry method exhibited the higher number density and the smaller hydraulic radius than Preparation Example 25 without the addition of tungsten (W).

It could be also identified that the retention capacity after 100 cycles in Preparation Example 26 was superior to Preparation Example 25.

Evaluation results of positive electrode active materials by using all-solid-state electrolytes

Table 43 shows the results of checking electrochemical characteristics of all-solid-state cells fabricated by using solid electrolytes and the positive electrode active materials according to Preparation Example 10 or Preparation Example 11.

[Table 43]

| Preparation Example | Positive electrode active material powder | 0.1 C Disch. Capa (mAh/g) | 1st Efficiency | 0.5 C Disch. Capa (mAh/g) | 0.5C/ 0.1C | Cycle | 0.5C Cycle Retention |
|---|---|---|---|---|---|---|---|
| Preparation Example 10 | CS NCM940303 | 220.2 | 85.00% | 170.7 | 77.50% | 100 | 46.10% |
| Preparation Example 11 | Ti0.25(wet)-CS NCM940303 | 223.6 | 87.00% | 179.1 | 80.10% | 100 | 72.40% |
| Preparation Example 12 | Ta0.5-Ti0.25(wet)-CS NCM940303 | 228.1 | 90.20% | 184.5 | 80.90% | 100 | 80.20% |

Preparation Example 10 to Preparation Example 12 are related to the positive electrode active materials having the core-shell structures with different concentrations of nickel, manganese, and cobalt in the core portions and the surface portions of the secondary particles of the positive electrode active materials. Specifically, in Preparation Example 10 to Preparation Example 12, the Ni concentration decreases from the core portion to the surface portion of the secondary particle, and the Co and Mn concentrations increase from the core portion to the surface portion of the secondary particle. By reducing the concentration of Ni and increasing the concentration of Co and Mn in the surface portion of the secondary particle, the positive electrode active material having the core-cell structure may reduce side reactions in the surface portion of the secondary particle and improve structural stability.

When an all-solid-state battery is fabricated by using the positive electrode active material according to Preparation Example 10 to Preparation Example 12, it could be demonstrated that Preparation Example 10 to Preparation Example 12 exhibited similar initial electrochemical characteristics, but that Preparation Example 11 and Preparation Example 12 exhibited superior retention capacity after cycling to Preparation Example 10. Furthermore, comparing Preparation Example 11, in which titanium (Ti) was wet-doped, and Preparation Example 12, in which tantalum (Ta) was dry doped, it could be demonstrated that Preparation Example 12 exhibited superior retention capacity after the cycles.

In other words, Preparation Example 11 and Preparation Example 12 include the primary particle including the nanocomposite structure in which rocksalt (*Fm3m*) structures and layered (*R-3m*) structures coexist as a physical mixture, and the nanocomposite structure improves the structural stability of the positive electrode active material, resulting in excellent retention capacity even when performing multiple cycles. Furthermore, it could be demonstrated that the positive electrode active material of the present invention could be applied not only to secondary batteries using non-aqueous electrolytes in liquid phase as described above, but also to all-solid-state batteries using solid electrolytes as in the present experiment.

Those skilled in the technical field to which the present invention belongs will understand that the invention may be practiced in other specific forms without altering its technical idea or essential features. Therefore, it should be understood that the aforementioned exemplary embodiments are all illustrative and are not limited. The scope of the present invention is indicated by the scope of the patent claims hereinafter set forth, rather than by the detailed description above, and shall be construed to include the meaning and scope of the claims and all modifications or variations derived from the equivalents thereof.

**Claims**

1. A positive electrode active material for a lithium secondary battery, the positive electrode active material including a secondary particle composed of an aggregate of a plurality of primary particles,
   wherein the primary particle includes a nanocomposite structure in which rocksalt (*Fm3m*) structures and layered (*R-3m*) structures coexist as a physical mixture.

2. The positive electrode active material of claim 1, wherein for diffraction peak intensities of (0-14), (0-11), (006), and (003) reflections obtained from SAED electron diffraction images during TEM analysis, $I_{(0-14)} > I_{(0-11)}$, and $I_{(006)} > I_{(003)}$.

3. The positive electrode active material of claim 1 or 2, wherein the primary particle includes a rocksalt region including a rocksalt structure, a maximum length among perpendicular lines that pass through a center of a cross-section of the rocksalt region is from 1 nm to 100 nm, and a cross-sectional area of the rocksalt region is from 1 $nm^2$ to 10,000 $nm^2$.

4. The positive electrode active material of one of claims 1 to 3, wherein the nanocomposite structure is provided in an interior or a surface portion of the primary particle, and in an interior or a surface portion of the secondary particle.

5. The positive electrode active material of one of claims 1 to 4, wherein the primary particle includes nickel (Ni), and M1 and M2,

   M1 includes at least one of manganese (Mn), cobalt (Co), and aluminum (Al),
   a content of the nickel (Ni) is 50 mol% or greater, and
   M2 is a doping element, and is in a range of 0.05 mol% to 3 mol%.

6. The positive electrode active material of claim 5, wherein the M2 includes two or more of titanium (Ti), magnesium (Mg), tantalum (Ta), niobium (Nb), tungsten (W), molybdenum (Mo), antimony (Sb), tellurium (Te), tin (Sn), ruthenium (Ru), boron (B), hafnium (Hf), gallium (Ga), germanium (Ge), chromium (Cr), vanadium (V), and zirconium (Zr).

7. The positive electrode active material of one of claims 1 to 6, wherein particle strength (MPa) of the secondary particle is 60 to 500 MPa,

   the secondary particle is subject to a plastic deformation before the secondary particle is fractured upon compression, and
   in the plastic deformation of the secondary particle, a length of the secondary particle is reduced according to a particle compression strain represented by following Equation 1 with respect to an average diameter of the secondary particle in a direction of pressing the secondary particle, and
   the particle compression strain is reduced by 2% to 30% with respect to the average diameter of the secondary particle,

   (Equation 1)

   $$\text{Particle compression strain (\%)} = (\text{Secondary particle deformation length / secondary particle diameter}) * 100$$

   in Equation 1, the secondary particle deformation length is the degree the secondary particle is compressed before the secondary particle is fractured, and the secondary particle diameter is the average diameter of the cross-section through a core portion of the secondary particle.

8. The positive electrode active material of one of claims 1 to 7, wherein a Full Width at Half-Maximum (FWHM) of a peak for (003) reflection obtained by X-ray diffraction analysis using Cu-kα rays is equal to or less than 0.15° in 1 cycle and is equal to or less than 0.2° in 500 cycles, after 500 cycles of charging to 4.3 V at a constant current of 0.5C and discharging to 2.7 V at a constant current of 0.5 C.

9. The positive electrode active material of one of claims 1 to 8, wherein in the lithium secondary battery adopting the positive electrode active material,

after 500 cycles of charging to 4.3 V at a constant current of 0.5 C and discharging to 2.7 V at a constant current of 0.5 C, an areal fraction of microcrack in the state of being charged to 4.3 V is 20% or less with respect to the total area, and

the areal fraction of microcrack is a ratio of a cross-section of a gap between the primary particles, the gap being connected from an outermost surface of the secondary particle and to the interior, to the total area of the cross-section through the center of the secondary particle.

10. A positive electrode active material for a lithium secondary battery, the positive electrode active material including a secondary particle composed of an aggregate of a plurality of primary particles,

wherein a number density of the primary particles, which is the number of primary particles per unit area, in a surface portion of the secondary particle is 3 ea/$\mu$m$^2$ to 50 ea/$\mu$m$^2$, and

the surface portion of the secondary particle is within 15% of an average diameter of the secondary particle in a direction toward a core of the secondary particle from an outermost surface of the secondary particle.

11. The positive electrode active material of claim 10, wherein in the positive electrode active material, the number density of the primary particles, which is the number of primary particles per unit area, in the surface portion of the secondary particle is 3 ea/,um$^2$ to 50 ea/$\mu$m$^2$ after 100 cycles of charging to 4.3 V at a constant current of 0.5 C and discharging to 2.7 V at a constant current of 0.5 C.

12. The positive electrode active material of claim 10 or 11, wherein in the positive electrode active material, a ratio of a number density after 500 cycles to a number density after 1 cycle of charging to 4.3 V at a constant current of 0.5 C and discharging to 2.7 V at a constant current of 0.5 C is 85% to 100%.

13. The positive electrode active material of one of claims 10 to 12, wherein in the primary particle, a hydraulic radius of the primary particle expressed by following Equation 2 is 0.01 $\mu$m to 0.1 $\mu$m.

$$\text{(Equation 2) Hydraulic radius of primary particle } (\mu m) = \text{Area of cross-section}$$

$$\text{of primary particle } (\mu m^2) / \text{Length of circumference of cross-section of primary particle}$$

$$(\mu m)$$

14. A lithium secondary battery, comprising:

a positive electrode including the positive electrode active material of any one of claims 1 to 13,
lithium salt;
a non-aqueous organic solvent; and
a negative electrode.

15. An all-solid-state battery, comprising:

a positive electrode including the positive electrode active material of any one of claims 1 to 13,
a solid electrolyte; and
a negative electrode.

16. A lithium metal battery, comprising:

a positive electrode including the positive electrode active material of any one of claims 1 to 13,
a lithium metal negative electrode; and
an electrolyte provided between the positive electrode and the lithium metal negative electrode.

[FIG. 1]

[FIG. 2]

[FIG. 3]

[FIG. 4]

[FIG. 5]

[FIG. 6]

[FIG. 7]

[FIG. 8]

[FIG. 9]

[FIG. 10]

Al2-Ti0.5(wet)-NCM960202

[FIG. 11]

**Al2-Ti0.5(wet)-NCM960202**

[FIG. 12]

**Al2-Ti0.5(wet)-NCM960202**

[FIG. 13]

Al2-Ti0.5(wet)-NCM960202

[FIG. 14]

NCM960202

[FIG. 15]

[FIG. 16]

**B1(wet)-NC8812**  **Nb0.25-B1(wet)-NC8812**  **Nb0.5-B1(wet)-NC8812**

**Nb0.75-B1(wet)-NC8812**  **Nb1-B1(wet)-NC8812**

[FIG. 17]

Nb1-B1(wet)-NC8812

[FIG. 18]

Nb1-B1(wet)-NC8812

[FIG. 19]

CS NCM940303        Ti0.25(wet)-        Ta0.5-Ti0.25(wet)-
                    CS NCM940303        CS NCM940303

[FIG. 20]

CS NCM940303     Ti0.25(wet)-CS NCM940303     Ta0.5-Ti0.25(wet)-CS NCM940303

[FIG. 21]

Ta0.5-Ti0.25(wet)-CS NCM940303

[FIG. 22]

Ta0.5-Ti0.25(wet)-CS NCM940303

[FIG. 23]

**Ta0.5-Ti0.25(wet)-CS NCM940303**

[FIG. 24]

## After 100 cycles) Ta0.5-Ti0.25(wet)-CS NCM940303

[FIG. 25]

**Al1-NCM950302**     **Mo0.5-Al1-NCM950302**

**Mo1-Al1-NCM950302**     **Mo1.5-Al1-NCM950302**

[FIG. 26]

## Mo1.5-Al1-NCM940303

[FIG. 27]

**Mo1.5-Al1-NCM940303**

[FIG. 28]

**Mo1.5-Al1-NCM940303**

[FIG. 29]

**Al1-NCM940303**

$I(0\bar{1}4)/I(0\bar{1}1)=0.85$

$I(0\bar{1}4)<I(0\bar{1}1)$

$I(006)/I(003)=0.91$

$I(006)<I(003)$

[FIG. 30]

Mo1.5-Al1-NCM940303

I(0$\bar{1}$4)/I(0$\bar{1}$1)=1.69

I(0$\bar{1}$4)>I(0$\bar{1}$1)

I(006)/I(003)=1.07

I(006)>I(003)

[FIG. 31]

[FIG. 32]

[FIG. 33]

**Ta0.5(t/s)-NCM930403**

[FIG. 34]

## Ta0.5(t/s)-NCM930403

[FIG. 35]

**NCM930403**

I(01̄4)/I(01̄1)=0.89
I(01̄4)<I(01̄1)

I(006)/I(003)=0.95
I(006)<I(003)

[FIG. 36]

[FIG. 37]

NM8812     Mo1(o/s)-NM8812     Mo1(t/s)-NM8812

[FIG. 38]

[FIG. 39]

NM8812     Mo1(o/s)-NM8812     Mo1(t/s)-NM8812

[FIG. 40]

**Mo(t/s)-NM8812**

[FIG. 41]

NM8812

$(0\bar{1}4)/I(0\bar{1}1)=0.97$

$(0\bar{1}4)<I(0\bar{1}1)$

$(006)/I(003)=0.85$

$(006)<I(003)$

[FIG. 42]

Mo(t/s)-NM8812

[FIG. 43]

[FIG. 44]

[FIG. 45]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220114973

- KR 1020230027170